(19) **Europäisches Patentamt**
**European Patent Office**
**Office européen des brevets**

(11) **EP 3 745 772 A1**

(12) **EUROPEAN PATENT APPLICATION**
published in accordance with Art. 153(4) EPC

(43) Date of publication:
**02.12.2020 Bulletin 2020/49**

(21) Application number: **19754414.1**

(22) Date of filing: **12.02.2019**

(51) Int Cl.:
***H04W 28/24*** (2009.01)

(86) International application number:
**PCT/CN2019/074809**

(87) International publication number:
**WO 2019/158034 (22.08.2019 Gazette 2019/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.02.2018 CN 201810154028**
**22.05.2018 CN 201810497454**

(71) Applicant: **Huawei Technologies Co., Ltd.**
**Longgang District**
**Shenzhen, Guangdong 518129 (CN)**

(72) Inventors:
• **CHONG, Weiwei**
**Shenzhen, Guangdong 518129 (CN)**
• **XIN, Yang**
**Shenzhen, Guangdong 518129 (CN)**
• **WU, Xiaobo**
**Shenzhen, Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **RESOURCE ALLOCATION METHOD AND APPARATUS**

(57) Embodiments of this application provide a resource allocation method and apparatus, and relate to the communications field, to ensure quality of service of a service. The method includes: receiving, by a session management function network element, at least one piece of first quality of service QoS description information of a service from a policy control function network element; determining, by the session management function network element, at least one piece of QoS information of an access network element based on the at least one piece of first QoS description information; and sending, by the session management function network element, the at least one piece of QoS information of the access network element to the access network element.

FIG. 16A

CONT. FROM FIG. 16A (×8)

1606. Determine, based on the at least one piece of first QoS description information, at least one piece of second QoS description information that can be met by the user plane function network element

1607. Determine at least one piece of QoS information of the access network element based on the at least one piece of second QoS description information

1608. At least one piece of QoS information of the access network element

1609. Determine target QoS information of the access network element from the at least one piece of QoS information of the access network element

1610. Target QoS information of the access network element

TO FIG. 16C (×8)

FIG. 16B

CONT. FROM FIG. 16B (×8)

1611. Determine target QoS description information based on the target QoS information of the access network element

1612. Target QoS information of the user plane function network element in the target QoS description information

1613. Target QoS information of the policy control function network element and/or target QoS information of the service server in the target QoS description information

1614. Target QoS information of the terminal device in the target QoS description information

1615. Target QoS information of the service server in the target QoS description information

FIG. 16C

**Description**

This application claims priority to Chinese Patent Application No. 201810154028.9, filed with the China National Intellectual Property Administration on February 14, 2018 and entitled "RESOURCE ALLOCATION METHOD AND APPARATUS", and to Chinese Patent Application No. 201810497454.2, filed with the China National Intellectual Property Administration on May 22, 2018 and entitled "RESOURCE ALLOCATION METHOD AND APPARATUS", which are incorporated herein by reference in their entireties.

**TECHNICAL FIELD**

This application relates to the communications field, and in particular, to a resource allocation method and apparatus.

**BACKGROUND**

Currently, a communications network uses a quality of service (Quality of Service, QoS) mechanism to ensure quality of service of a service for a user. However, a QoS parameter in the current QoS mechanism is usually not properly set or is set in a relatively fixed manner. Consequently, QoS information may be inaccurate or inapplicable to a network element. For example, in a current protocol, a packet loss rate, a delay, and an error rate are defined as three important QoS parameters corresponding to a standardized quality of service indicator (5QI). However, currently, a base station cannot determine, based on the packet loss rate, the delay, and the error rate, whether quality of service of a service is met, and consequently, quality of service of the service cannot be ensured. For another example, in the current protocol, it is recommended that an average window size (average window size) that is used to calculate the foregoing three parameters be defined as 2s, but there is no evidence to prove that the setting of the value is proper. Actually, the value should be dynamically set based on different network deployment scenarios or service types.

**SUMMARY**

Embodiments of this application provide a resource allocation method and apparatus, to ensure quality of service of a service.

According to a first aspect, an embodiment of this application provides a resource allocation method, including: receiving, by an access network element, at least one piece of quality of service QoS description information of a service that is sent by a core network element; determining, by the access network element, one piece of target QoS description information of the service from the at least one piece of QoS description information; and allocating, by the access network element, a radio resource and/or executing a quality of service policy to/for the service based on the target QoS description information. Therefore, compared with a current QoS mechanism in which a QoS parameter is usually not properly set or is set in a relatively fixed manner, in this embodiment of this application, the access network element determines one piece of target QoS description information of the service from the at least one piece of received QoS description information, and allocates a radio resource and/or executes a quality of service policy to/for the service based on the target QoS description information, thereby ensuring quality of service of the service.

In a possible implementation, each of the at least one piece of QoS description information includes a QoS parameter type and/or a QoS parameter requirement.

In a possible implementation, each of the at least one piece of QoS description information further includes network element information, and the network element information is used to indicate a network element corresponding to the QoS parameter requirement.

In a possible implementation, the determining, by the access network element, one piece of target QoS description information of the service from the at least one piece of QoS description information includes: determining, by the access network element, one piece of target QoS description information from a plurality of pieces of QoS description information, where a parameter corresponding to the access network element meets a QoS parameter requirement in the target QoS description information.

In a possible implementation, the determining, by the access network element, one piece of target QoS description information of the service from the at least one piece of QoS description information includes: determining, by the access network element, a QoS parameter requirement for the access network element based on the network element information; and determining, by the access network element, the target QoS description information based on the QoS parameter requirement for the access network element, where the parameter corresponding to the access network element meets the QoS parameter requirement for the access network element in the target QoS description information.

In a possible implementation, the determining, by the access network element, one piece of target QoS description information of the service from the at least one piece of QoS description information includes: determining, by the access network element, a first set of QoS description information, where the first set includes some or all of the at least one piece of QoS description information; sending, by the access network element, the first set to a terminal device corresponding to the service; receiving, by the access network element, a second set of QoS description information sent by the terminal device, where the second set includes a part or all of the QoS description information in the first set; and determining, by the access network element, one piece of target QoS description information of the service from the second set.

In a possible implementation, the method further includes: sending, by the access network element, the target QoS description information to the core network element and/or the terminal device. In this way, the core network element may allocate a core network resource or execute a corresponding quality of service policy based on the target QoS description information. The terminal device may allocate a terminal device resource or execute a corresponding quality of service policy based on the target QoS description information.

In a possible implementation, the method further includes: if the parameter corresponding to the access network element no longer meets the QoS parameter requirement in the target QoS description information, re-determining, by the access network element, one piece of target QoS description information of the service from the at least one piece of QoS description information, where the parameter corresponding to the access network element meets a QoS parameter requirement for the access network element in the re-determined target QoS description information.

In a possible implementation, the method further includes: sending, by the access network element, the re-determined target QoS description information to the core network element and/or the terminal device. In this way, the core network element may allocate a core network resource or execute a corresponding quality of service policy based on the re-determined target QoS description information. The terminal device may allocate a terminal device resource or execute a corresponding quality of service policy based on the re-determined target QoS description information.

In a possible implementation, the method further includes: after the re-determining, by the access network element, one piece of target QoS description information of the service from the at least one piece of QoS description information, sending, by the access network element, first indication information to the core network element, where the first indication information is used to indicate that the access network element does not meet the target QoS description information of the service and/or the access network element does not meet the QoS parameter requirement in the target QoS description information. Therefore, the core network element may correspondingly adjust a policy, for example, initiate a new round of QoS description information selection procedure.

In a possible implementation, the method further includes: receiving, by the access network element, second indication information sent by the core network element, where the second indication information is used to instruct the access network element to send a first indication message to the core network element when the access network element no longer meets the target QoS description information of the service. The access network element determines, depending on whether the second indication information is received, whether to send the first indication information. To be specific, when the terminal device receives the second indication information and determines that the target QoS description information is not met, the terminal device sends the first indication information; otherwise, does not send the first indication information.

In a possible implementation, the method further includes: if the access network element no longer meets a quality of service requirement of the service, sending, by the access network element, a handover request message to the core network element or sending redirection information to the terminal device, where the handover request message is used to hand over the terminal device to another access network element, and the redirection information is used to redirect the terminal device to another access network element. In this way, the terminal device may be handed over to the another access network element based on the handover request message sent by the access network element, or redirected to the another access network element based on the redirection information.

In a possible implementation, the method further includes: receiving, by the access network element, third indication information sent by the core network element, where the third indication information is used to instruct the access network element to hand over or redirect the terminal device to the another access network element when the access network element does not meet the quality of service requirement of the service.

In a possible implementation, the method further includes: if the access network element does not meet the quality of service requirement of the service, sending, by the access network element, fourth indication information to the core network element, where the fourth indication information is used to indicate that the access network element does not meet the quality of service requirement of the service and/or indicate a specific QoS parameter requirement that is not met by the access network element. For example, the fourth indication information sent by the access network element may be transferred by a session management function (Session Management Function, SMF) network element and an access management function (Access Management Function, AMF) network element to a policy control function (Policy control function, PCF) network element, or further sent by the PCF to a service server or a data analysis network element, so that the SMF, the PCF, the service server, or the data analysis network element correspondingly adjusts a policy subsequently.

In a possible implementation, the method further includes: receiving, by the access network element, fifth indication information sent by the core network element, where the fifth indication information is used to instruct the access network element to send a fourth indication message to the core network element when the access network element does not meet the quality of service requirement of the service.

In a possible implementation, the QoS parameter requirement includes at least one of the following: a time information requirement, a location information requirement, a guaranteed flow bit rate (guaranteed flow bit rate, GFBR) requirement, a maximum flow bit rate (maximum flow bit rate, MFBR) requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

According to a second aspect, a resource allocation method is provided. The method includes: receiving, by an access network element, at least one piece of QoS description information of a service that is sent by a core network element; and when determining that a parameter corresponding to the access network element cannot meet a QoS parameter requirement in any one of the at least one piece of QoS description information, sending, by the access network element, fourth indication information to the core network element, where the fourth indication information is used to indicate that the access network element does not meet a quality of service requirement of the service and/or indicate a specific QoS parameter requirement that is not met by the access network element. In this way, the core network element can correspondingly adjust a policy. Further, the core network element may send the fourth indication information to a service server, so that the service server can correspondingly adjust a policy.

In a possible implementation, the method further includes: receiving, by the access network element, fifth indication information sent by the core network element, where the fifth indication information is used to instruct the access network element to send the fourth indication information to the core network element when the access network element determines that the quality of service requirement of the service is not met.

In a possible implementation, each of the at least one piece of QoS description information includes a QoS parameter type set and a QoS parameter requirement set.

In a possible implementation, each piece of QoS description information further includes network element set information, and each piece of network element information in the network element set information is used to indicate a network element corresponding to at least one QoS parameter requirement in the QoS parameter requirement set.

In a possible implementation, the method further includes: determining, by the access network element, a QoS parameter requirement set of the access network element based on a network element information set; and determining, by the access network element based on the QoS parameter requirement set of the access network element and a parameter set corresponding to the access network element, that the parameter set corresponding to the access network element cannot meet a QoS parameter requirement set in any one of the at least one piece of QoS description information.

In a possible implementation, the QoS parameter requirement set includes at least one of the following: a time information requirement, a GFBR requirement, an MFBR requirement, an average time window size requirement, and a normalized feature requirement; and the normalized feature requirement is obtained by mapping a physical value of a feature to fixed value space.

According to a third aspect, a resource allocation method is provided. The method includes: receiving, by an access network element, at least one piece of QoS description information of a service that is sent by a core network element; and when determining that a parameter set corresponding to the access network element cannot meet a QoS parameter requirement set in any one of the at least one piece of QoS description information, sending, by the access network element, a handover request message to the core network element or sending redirection information to a terminal device, where the handover request message is used to hand over the terminal device corresponding to the service to another access network element, and the redirection information is used to redirect the terminal device to another access network element. In this way, the terminal device may be handed over to the another access network element based on the handover request message sent by the access network element, or redirected to the another access network element based on the redirection information.

In a possible implementation, each of the at least one piece of QoS description information includes a QoS parameter type set and a QoS parameter requirement set.

In a possible implementation, each piece of QoS description information further includes network element set information, and each piece of network element information in the network element set information is used to indicate a network element corresponding to at least one QoS parameter requirement in the QoS parameter requirement set.

In a possible implementation, the method further includes: determining, by the access network element based on a network element information set, a QoS parameter requirement set of (corresponding to) the access network element; and determining, by the access network element based on the QoS parameter requirement set of the access network element and a parameter set corresponding to the access network element, that the parameter set corresponding to the access network element cannot meet a QoS parameter requirement set in any one of the at least one piece of QoS description information.

In a possible implementation, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

According to a fourth aspect, an access network element is provided. The access network element includes: a receiving unit, configured to receive at least one piece of QoS description information of a service that is sent by a core network element; a determining unit, configured to determine one piece of target QoS description information of the service from the at least one piece of QoS description information; and a processing unit, configured to allocate a radio resource to the service based on the target QoS description information.

In a possible implementation, each of the at least one piece of QoS description information includes a QoS parameter type set and a QoS parameter requirement set.

In a possible implementation, each piece of QoS description information further includes network element set information, and each piece of network element information in the network element set information is used to indicate a network element corresponding to at least one QoS parameter requirement in the QoS parameter requirement set.

In a possible implementation, the determining unit is configured to determine one piece of target QoS description information from a plurality of pieces of QoS description information, where a parameter set corresponding to the access network element meets a QoS parameter requirement set in the target QoS description information.

In a possible implementation, the determining unit is configured to: determine a QoS parameter requirement set of the access network element based on network element information; and determine the target QoS description information based on the QoS parameter requirement set of the access network element, where the parameter set corresponding to the access network element meets the QoS parameter requirement set of the access network element in the target QoS description information.

In a possible implementation, the determining unit is configured to: determine a first set of QoS description information, where the first set includes some or all of the at least one piece of QoS description information; send the first set to a terminal device corresponding to the service; receive, by the access network element, a second set of QoS description information sent by the terminal device, where the second set includes a part or all of the QoS description information in the first set; and determine one piece of target QoS description information of the service in the second set.

In a possible implementation, the access network element further includes: a sending unit, configured to: if the access network element no longer meets a quality of service requirement of the service, send a handover request message to the core network element or send redirection information to the terminal device, where the handover request message is used to hand over the terminal device to another access network element, and the redirection information is used to redirect the terminal device to another access network element.

In a possible implementation, the receiving unit is further configured to receive third indication information sent by the core network element, where the third indication information is used to instruct the access network element to hand over or redirect the terminal device to the another access network element when the access network element no longer meets the quality of service requirement of the service.

In a possible implementation, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

In a possible implementation, the sending unit is further configured to: send, by the access network element, the target QoS description information to the core network element and/or the terminal device.

In a possible implementation, the determining unit is further configured to: if a parameter corresponding to the access network element no longer meets the QoS parameter requirement set in the target QoS description information, re-determine one piece of target QoS description information of the service from the at least one piece of QoS description information, where the parameter corresponding to the access network element meets a QoS parameter requirement set in the re-determined target QoS description information.

In a possible implementation, the sending unit is further configured to send the re-determined target QoS description information to the core network element and/or the terminal device.

According to a fifth aspect, an embodiment of the present invention provides an apparatus. The apparatus exists in a product form of a chip. A structure of the apparatus includes a processor and a memory. The memory is configured to couple to the processor, and stores a program instruction and data that are necessary for the apparatus. The processor is configured to execute the program instruction stored in the memory, so that the apparatus performs a function of the access network element in the foregoing method.

According to a sixth aspect, an embodiment of the present invention provides an access network element. The access network element can implement a function performed by the access network element in the foregoing method embodiment. The function may be implemented by hardware, or may be implemented by hardware by executing corresponding software. The hardware or the software includes one or more modules corresponding to the foregoing function.

In a possible design, a structure of the access network element includes a processor and a communications interface. The processor is configured to support the access network element in performing a corresponding function in the foregoing method. The communications interface is configured to support communication between the access network element and another network element. The access network element may further include a memory. The memory is configured to couple to the processor, and stores a program instruction and data that are necessary for the access network element.

According to a seventh aspect, an embodiment of this application provides a computer storage medium, configured to store a computer software instruction used in the foregoing method, where the computer software instruction includes a program designed to perform the foregoing aspects.

According to an eighth aspect, an embodiment of the present invention provides a computer program product including an instruction. When the computer program product is run on a computer, the computer is enabled to perform the method according to any one of the first aspect, the second aspect, and the third aspect.

According to a ninth aspect, a method for transmitting quality of service information of a service is provided. The method includes: receiving, by a terminal device, at least one piece of quality of service QoS description information of a service that is sent by an access network element; determining, by a terminal device, a second set of QoS description information, where the second set of QoS description information includes some or all of the at least one piece of QoS description information; and sending, by the terminal device, the second set of QoS description information to the access network element.

In a possible design, each of the at least one piece of QoS description information includes a QoS parameter type and/or a QoS parameter requirement.

In a possible design, each piece of QoS description information further includes network element information, and the network element information is used to indicate a network element corresponding to the QoS parameter requirement.

In a possible design, the determining, by a terminal device, a second set of QoS description information includes: determining, by the terminal device, the second set of QoS description information from a plurality of pieces of QoS description information, where a parameter corresponding to the terminal device meets a QoS parameter requirement in each piece of QoS description information in the second set of QoS description information.

In a possible design, the determining, by a terminal device, a second set of QoS description information includes: determining, by the terminal device, a QoS parameter requirement for the terminal device based on the network element information; and determining, by the terminal device, the second set of QoS description information based on the QoS parameter requirement for the terminal device and the parameter corresponding to the terminal device.

In a possible design, the method further includes: receiving, by the terminal device, one piece of target QoS description information sent by the access network element; and allocating, by the terminal device, a terminal resource and/or executing a corresponding terminal device policy based on the target QoS description information.

In a possible design, if the terminal device no longer meets the target QoS description information of the service, the terminal device sends first indication information to the access network element, where the first indication information is used to indicate that the terminal device does not meet the target QoS description information and/or the terminal device does not meet a QoS parameter requirement in the target QoS description information.

In a possible design, the terminal device receives second indication information sent by the access network element, where the second indication information is used to instruct the terminal device to send the first indication information to the access network element when the terminal device no longer meets the target QoS description information of the service.

In a possible design, if the terminal device no longer meets a quality of service requirement of the service, the terminal device sends fourth indication information to the access network element, where the fourth indication information is used to indicate that the terminal device does not meet the quality of service requirement of the service and/or indicate a QoS parameter requirement that is not met by the terminal device.

In a possible design, the method further includes: receiving, by the terminal device, fifth indication information sent by the access network element, where the fifth indication information is used to instruct the terminal device to send the fourth indication information to the access network element when the terminal device no longer meets the quality of service requirement of the service.

In a possible design, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable;

7

and the normalized feature requirement is obtained by mapping a physical value of the QoS parameter requirement to fixed value space.

According to a tenth aspect, a method for transmitting quality of service information of a service is provided. The method includes: receiving, by a terminal device, at least one piece of QoS description information of a service that is sent by an access network element; and when the terminal device determines that a corresponding parameter set cannot meet a QoS parameter requirement set in any one of the at least one piece of QoS description information, sending, by the terminal device, fourth indication information to the access network element, where the fourth indication information is used to indicate that a quality of service requirement of the service is not met and/or indicate a specific QoS parameter requirement that is not met.

In a possible implementation, the method further includes: receiving, by the terminal device, fifth indication information sent by the access network element, where the fifth indication information is used to instruct the terminal device to send the fourth indication information to a core network element when the terminal device determines that the quality of service requirement of the service is not met.

In a possible implementation, each of the at least one piece of QoS description information includes a QoS parameter type set and a QoS parameter requirement set.

In a possible implementation, each piece of QoS description information further includes network element set information, and each piece of network element information in the network element set information is used to indicate a network element corresponding to at least one QoS parameter requirement in the QoS parameter requirement set.

In a possible implementation, the determining, by the terminal device, that a corresponding parameter set cannot meet a QoS parameter requirement set in any one of the at least one piece of QoS description information includes: determining, by the terminal device, a QoS parameter requirement set of the terminal device based on a network element information set; and determining, by the terminal device based on the QoS parameter requirement set of the terminal device and a parameter set corresponding to the terminal device, that the parameter set corresponding to the terminal device cannot meet a QoS parameter requirement set in any one of the at least one piece of QoS description information.

In a possible design, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

According to an eleventh aspect, a terminal device is provided. The terminal device includes: a receiving unit, configured to receive at least one piece of quality of service QoS description information of a service that is sent by an access network element; a determining unit, configured to determine a second set of QoS description information, where the second set of QoS description information includes some or all of the at least one piece of QoS description information; and a sending unit, configured to send the second set of QoS description information to the access network element.

In a possible design, each of the at least one piece of QoS description information includes a QoS parameter type and/or a QoS parameter requirement.

In a possible design, each piece of QoS description information further includes network element information, and the network element information is used to indicate a network element corresponding to the QoS parameter requirement.

In a possible design, the determining unit is configured to determine the second set of QoS description information from a plurality of pieces of QoS description information, where a parameter corresponding to the terminal device meets a QoS parameter requirement in each piece of QoS description information in the second set of QoS description information.

In a possible design, the determining unit is configured to determine a QoS parameter requirement for the terminal device based on the network element information; and determine, by the terminal device, the second set of QoS description information based on the QoS parameter requirement for the terminal device and the parameter corresponding to the terminal device.

In a possible design, the method further includes: receiving, by the terminal device, one piece of target QoS description information sent by the access network element; and allocating, by the terminal device, a terminal resource and/or executing a corresponding terminal device policy based on the target QoS description information.

In a possible design, if the terminal device no longer meets the target QoS description information of the service, the sending unit is further configured to send first indication information, where the first indication information is used to indicate that the terminal device does not meet the target QoS description information and/or the terminal device does not meet a QoS parameter requirement in the target QoS description information.

In a possible design, the receiving unit is further configured to receive second indication information sent by the access network element, where the second indication information is used to instruct the terminal device to send the first indication information to the access network element when the terminal device no longer meets the target QoS description information of the service.

In a possible design, if the terminal device no longer meets a quality of service requirement of the service, the sending unit is further configured to send fourth indication information to the access network element, where the fourth indication information is used to indicate that the terminal device does not meet the quality of service requirement of the service and/or indicate a QoS parameter requirement that is not met by the terminal device.

In a possible design, the terminal device is further configured to receive fifth indication information sent by the access network element, where the fifth indication information is used to instruct the terminal device to send the fourth indication information to the access network element when the terminal device no longer meets the quality of service requirement of the service.

In a possible design, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

According to a twelfth aspect, an embodiment of the present invention provides an apparatus. The apparatus exists in a product form of a chip. A structure of the apparatus includes a processor and a memory. The memory is configured to couple to the processor, and stores a program instruction and data that are necessary for the apparatus. The processor is configured to execute the program instruction stored in the memory, so that the apparatus performs a function of the terminal device in the foregoing method.

According to a thirteenth aspect, an embodiment of the present invention provides a terminal device. The terminal device can perform a function performed by the terminal device in the foregoing method embodiment. The function may be implemented by hardware, or may be implemented by hardware by executing corresponding software. The hardware or the software includes one or more modules corresponding to the foregoing function.

In a possible design, a structure of the terminal device includes a processor and a communications interface. The processor is configured to support the terminal device in performing a corresponding function in the foregoing method. The communications interface is configured to support communication between the terminal device and another network element. The terminal device may further include a memory. The memory is configured to couple to the processor, and stores a program instruction and data that are necessary for the terminal device.

According to a fourteenth aspect, an embodiment of this application provides a computer storage medium, configured to store a computer software instruction used in the foregoing method, where the computer software instruction includes a program designed to perform the foregoing aspects.

According to a fifteenth aspect, an embodiment of the present invention provides a computer program product including an instruction. When the computer program product is run on a computer, the computer is enabled to perform the method according to either of the ninth aspect and the tenth aspect.

According to a sixteenth aspect, a method for transmitting quality of service information of a service is provided. The method includes: receiving, by a first core network element, at least one piece of QoS description information of a service that is sent by a data analysis network element, a second core network element, or a service server of the service; determining, by the first core network element, a third set of QoS description information, where the third set includes some or all of the at least one piece of QoS description information; and sending, by the first core network element, the third set of QoS description information to a third core network element or an access network element.

In a possible design, each of the at least one piece of QoS description information includes a QoS parameter type and/or a QoS parameter requirement.

In a possible design, each piece of QoS description information further includes network element information, and the network element information is used to indicate a network element corresponding to the QoS parameter requirement.

In a possible design, the determining, by the first core network element, a third set of QoS description information includes: determining, by the first core network element, the third set of QoS description information from a plurality of pieces of QoS description information, where a parameter corresponding to the first core network element meets a QoS parameter requirement in the third set of QoS description information.

In a possible design, the determining, by the first core network element, a third set of QoS description information includes: determining, by the first core network element, a QoS parameter requirement for the first core network element based on network element information; and determining, by the first core network element, the third set of QoS description information based on the QoS parameter requirement for the first core network element and the parameter corresponding to the first core network element.

In a possible design, the method further includes: receiving, by the first core network element, one piece of target QoS description information sent by the access network element; and allocating, by the first core network element, a core network resource and/or executing a quality of service policy based on the target QoS description information.

In a possible design, the method further includes: sending, by the first core network element, the target QoS description information to the service server, the second core network element, or the data analysis network element.

In a possible design, the method further includes: if the first core network element no longer meets the target QoS description information, sending, by the first core network element, first indication information to the service server, the second core network element, or the access network element, where the first indication information is used to indicate that the first core network element does not meet the target QoS description information and/or the first core network element does not meet a QoS parameter requirement in the target QoS description information.

In a possible design, the method further includes: receiving, by the first core network element, second indication information sent by the service server or the second core network element, where the second indication information is used to instruct the first core network element to send the first indication information to the service server, the second core network element, or the access network element when the first core network element no longer meets the target QoS description information.

In a possible design, the method further includes: if the first core network element no longer meets a quality of service requirement of the service, sending, by the first core network element, fourth indication information to the service server or the second core network element, where the fourth indication information is used to indicate that the first core network element does not meet the quality of service requirement of the service and/or indicate a QoS parameter requirement that is not met by the first core network element.

In a possible design, the method further includes: receiving, by the first core network element, fifth indication information sent by the service server or the second core network element, where the fifth indication information is used to instruct the first core network element to send the fourth indication information to the service server or the second core network element when the first core network element no longer meets the quality of service requirement of the service.

In a possible design, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

In a possible design, the first core network element includes at least one of the following network elements: a policy control function network element PCF, a session management function network element SMF, a user plane function network element UPF, and an access and mobility management function network element AMF

In a possible design, when the first core network element is the PCF, the method further includes: sending, by the first core network element, a QoS description information request message of the service to the data analysis network element, where the QoS description information request message is used to request the at least one piece of QoS description information of the service, and the QoS description information request message includes service identifier information of the service.

According to a seventeenth aspect, a method for sending a quality of service parameter of a service is provided. The method includes: receiving, by a first core network element, at least one piece of QoS description information of a service that is sent by a data analysis network element, a second core network element, or a service server of the service; and when determining that a parameter set corresponding to the first core network element does not meet a QoS parameter requirement set in any one of the at least one piece of QoS description information, sending, by the first core network element, fourth indication information to the service server or the second core network element, where the fourth indication information is used to indicate that the first core network element does not meet a quality of service requirement of the service and/or the first core network element does not meet a specific parameter requirement of the service.

In a possible implementation, the method further includes: receiving, by the first core network element, fifth indication information sent by the service server or the second core network element, where the fifth indication information is used to instruct the first core network element to send the fourth indication information to the service server or the second core network element when the first core network element determines that the quality of service requirement of the service is not met.

In a possible implementation, each of the at least one piece of QoS description information includes a QoS parameter type set and a QoS parameter requirement set.

In a possible implementation, each piece of QoS description information further includes network element set information, and each piece of network element information in the network element set information is used to indicate a network element corresponding to at least one QoS parameter requirement in the QoS parameter requirement set.

In a possible implementation, the determining, by the first core network element, a third set of QoS description information includes: determining, by the first core network element, a QoS parameter requirement set of the first core network element based on a network element information set; and determining, by the first core network element based on the QoS parameter requirement set of the first core network element and the parameter set corresponding to the first core network element, that the parameter set corresponding to the first core network element cannot meet a QoS parameter requirement set in any one of the at least one piece of QoS description information.

In a possible design, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

In a possible implementation, the first core network element includes at least one of the following network elements: a policy control function network element PCF, a session management function network element SMF, a user plane function network element UPF, and an access and mobility management function network element AMF.

In a possible implementation, when the first core network element is the PCF, the method further includes: sending, by the first core network element, a QoS description information request message of the service to the data analysis network element, where the QoS description information request message is used to request the at least one piece of QoS description information of the service, and the QoS description information request message includes service identifier information of the service.

According to an eighteenth aspect, a first core network element is provided. The first core network element includes: a receiving unit, configured to receive at least one piece of QoS description information of a service that is sent by a data analysis network element, a second core network element, or a service server of the service; a determining unit, configured to determine a third set of QoS description information, where the third set includes some or all of the at least one piece of QoS description information; and a sending unit, configured to send the third set of QoS description information to a third core network element or an access network element.

In a possible design, each of the at least one piece of QoS description information includes a QoS parameter type and/or a QoS parameter requirement.

In a possible design, each piece of QoS description information further includes network element information, and the network element information is used to indicate a network element corresponding to the QoS parameter requirement.

In a possible design, the determining unit is configured to determine the third set of QoS description information in a plurality of pieces of QoS description information, where a parameter corresponding to the first core network element meets a QoS parameter requirement in the third set of QoS description information.

In a possible design, the determining unit is configured to: determine a QoS parameter requirement for the first core network element based on network element information; and determine the third set of QoS description information based on the QoS parameter requirement for the first core network element and the parameter corresponding to the first core network element.

In a possible design, the receiving unit is further configured to receive one piece of target QoS description information sent by the access network element; and the first core network element further includes a processing unit, configured to allocate a core network resource and/or execute a quality of service policy based on the target QoS description information.

In a possible design, the sending unit is further configured to send the target QoS description information to the service server, the second core network element, or the data analysis network element.

In a possible design, if the first core network element no longer meets the target QoS description information, the sending unit is further configured to send first indication information to the service server, the second core network element, or the access network element, where the first indication information is used to indicate that the first core network element does not meet the target QoS description information and/or the first core network element does not meet a QoS parameter requirement in the target QoS description information.

In a possible design, the receiving unit is configured to receive second indication information sent by the service server or the second core network element, where the second indication information is used to instruct the first core network element to send the first indication information to the service server, the second core network element, or the access network element when the first core network element no longer meets the target QoS description information.

In a possible design, if the first core network element no longer meets a quality of service requirement of the service, the sending unit is further configured to send fourth indication information to the service server or the second core network element, where the fourth indication information is used to indicate that the first core network element does not meet the quality of service requirement of the service and/or indicate a QoS parameter requirement that is not met by the first core network element.

In a possible design, the receiving unit is further configured to receive fifth indication information sent by the service server or the second core network element, where the fifth indication information is used to instruct the first core network element to send the fourth indication information to the service server or the second core network element when the first core network element no longer meets the quality of service requirement of the service.

In a possible design, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which corresponding QoS description information is applicable; and the normalized feature requirement is obtained by mapping a physical value of the QoS parameter requirement to fixed value space.

In a possible design, the first core network element includes at least one of the following network elements: a policy control function network element PCF, a session management function network element SMF, a user plane function network element UPF, and an access and mobility management function network element AMF.

In a possible design, when the first core network element is the PCF, the method further includes: sending, by the first core network element, a QoS description information request message of the service to the data analysis network element, where the QoS description information request message is used to request the at least one piece of QoS description information of the service, and the QoS description information request message includes service identifier information of the service.

According to a nineteenth aspect, an embodiment of the present invention provides an apparatus. The apparatus exists in a product form of a chip. A structure of the apparatus includes a processor and a memory. The memory is configured to couple to the processor, and stores a program instruction and data that are necessary for the apparatus. The processor is configured to execute the program instruction stored in the memory, so that the apparatus performs a function of the first core network element in the foregoing method.

According to a twentieth aspect, an embodiment of the present invention provides a first core network element. The first core network element can implement a function performed by the first core network element in the foregoing method embodiment. The function may be implemented by hardware, or may be implemented by hardware by executing corresponding software. The hardware or the software includes one or more modules corresponding to the foregoing function.

In a possible design, a structure of the first core network element includes a processor and a communications interface. The processor is configured to support the first core network element in performing a corresponding function in the foregoing method. The communications interface is configured to support communication between the first core network element and another network element. The first core network element may further include a memory. The memory is configured to couple to the processor, and stores a program instruction and data that are necessary for the first core network element.

According to a twenty-first aspect, an embodiment of this application provides a computer storage medium, configured to store a computer software instruction used in the foregoing method, where the computer software instruction includes a program designed to perform the foregoing aspects.

According to a twenty-second aspect, an embodiment of the present invention provides a computer program product including an instruction. When the computer program product is run on a computer, the computer is enabled to perform the method according to either of the ninth aspect and the tenth aspect.

According to a twenty-third aspect, a method for transmitting quality of service information of a service is provided. The method includes: generating, by a data analysis network element, at least one piece of quality of service QoS description information of a service; and

sending, by the data analysis network element, the at least one piece of QoS description information to a core network element or a service server of the service, where each of the at least one piece of QoS description information includes network element information, and the network element information is used to indicate a network element corresponding to a QoS parameter requirement in the QoS description information.

In a possible design, each of the at least one piece of QoS description information further includes a QoS parameter type and/or a QoS parameter requirement.

In a possible design, the method further includes: receiving, by the data analysis network element, a QoS description information request message of the service that is sent by the core network element, where the QoS description information request message includes service identifier information of the service; and the sending, by a data analysis network element, at least one piece of QoS description information to a core network element includes: sending, by the data analysis network element, the at least one piece of QoS description information to the core network element based on the service identifier information.

In a possible design, the QoS parameter requirement includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which each piece of QoS description information is applicable; and the normalized feature requirement is obtained by mapping a physical value of the QoS parameter requirement to fixed value space.

In a possible design, the generating, by a data analysis network element, at least one piece of quality of service QoS description information of a service includes: obtaining, by the data analysis network element, training data of the service, where the training data of the service includes at least one of the following: data provided by the service server of the service, data provided by a telecommunications network device corresponding to the service, and data provided by a terminal device; and obtaining, by the data analysis network element, the at least one piece of QoS description information of the service from the training data of the service.

According to a twenty-fourth aspect, a data analysis network element is provided. The data analysis network element includes: a processing unit, configured to generate at least one piece of quality of service QoS description information of a service; and a sending unit, configured to send the at least one piece of QoS description information to a core network element or a service server of the service, where each of the at least one piece of QoS description information includes network element information, and the network element information is used to indicate a network element corresponding to at least one QoS parameter requirement in a QoS parameter requirement set.

In a possible implementation, each of the at least one piece of QoS description information further includes a QoS parameter type and/or a QoS parameter requirement.

In a possible implementation, the data analysis network element further includes a receiving unit, configured to receive a QoS description information request message of the service that is sent by the core network element, where the QoS description information request message includes service identifier information of the service; and the sending unit is configured to send the at least one piece of QoS description information to the core network element based on the service identifier information.

In a possible implementation, the QoS parameter requirement set includes at least one of the following: a time information requirement, a GFBR requirement, an MFBR requirement, an average time window size requirement, and a normalized feature requirement; and the normalized feature requirement is obtained by mapping a physical value of a feature to fixed value space.

According to a twenty-fifth aspect, an embodiment of the present invention provides an apparatus. The apparatus exists in a product form of a chip. A structure of the apparatus includes a processor and a memory. The memory is configured to couple to the processor, and stores a program instruction and data that are necessary for the apparatus. The processor is configured to execute the program instruction stored in the memory, so that the apparatus performs a function of the data analysis network element in the foregoing method.

According to a twenty-sixth aspect, an embodiment of the present invention provides a data analysis network element. The data analysis network element can implement a function performed by the data analysis network element in the foregoing method embodiment. The function may be implemented by hardware, or may be implemented by hardware by executing corresponding software. The hardware or the software includes one or more modules corresponding to the foregoing function.

In a possible design, a structure of the data analysis network element includes a processor and a communications interface. The processor is configured to support the data analysis network element in performing a corresponding function in the foregoing method. The communications interface is configured to support communication between the data analysis network element and another network element. The data analysis network element may further include a memory. The memory is configured to couple to the processor, and stores a program instruction and data that are necessary for the data analysis network element.

According to a twenty-seventh aspect, an embodiment of this application provides a computer storage medium, configured to store a computer software instruction used in the foregoing method, where the computer software instruction includes a program designed to perform the foregoing aspects.

According to a twenty-eighth aspect, an embodiment of the present invention provides a computer program product including an instruction. When the computer program product is run on a computer, the computer is enabled to perform the method according to either of the ninth aspect and the tenth aspect.

According to a twenty-ninth aspect, a method for transmitting quality of service information of a service is provided. The method includes: receiving, by a service server, at least one piece of QoS description information of a service that is sent by a first core network element; determining, by the service server, a second set of QoS description information, where the second set includes some or all of the at least one piece of QoS description information; and sending, by the service server, the second set to the first core network element.

In a possible implementation, each of the at least one piece of QoS description information includes a QoS parameter type set and a QoS parameter requirement set.

In a possible implementation, each piece of QoS description information further includes network element set information, and each piece of network element information in the network element set information is used to indicate a network element corresponding to at least one QoS parameter requirement in the QoS parameter requirement set.

In a possible implementation, after the sending, by the service server, the second set to the first core network element, the method further includes: receiving, by the service server, one piece of target QoS description information sent by the first core network element; and executing, by the service server, a corresponding application layer policy based on the target QoS description information.

In a possible implementation, the QoS parameter requirement set includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which each piece of QoS description information is applicable; and the normalized feature requirement is obtained by mapping a physical value of the QoS parameter requirement to fixed value space.

According to a thirtieth aspect, a service server is provided. The service server includes a receiving unit, configured to receive at least one piece of QoS description information of a service that is sent by a first core network element; a determining unit, configured to determine a second set of QoS description information, where the second set includes some or all of the at least one piece of QoS description information; and a sending unit, configured to send the second set to the first core network element.

In a possible implementation, each of the at least one piece of QoS description information includes a QoS parameter type set and a QoS parameter requirement set.

In a possible implementation, each piece of QoS description information further includes network element set information, and each piece of network element information in the network element set information is used to indicate a network element corresponding to at least one QoS parameter requirement in the QoS parameter requirement set.

In a possible implementation, after the service server sends the second set to the first core network element, the receiving unit is further configured to receive one piece of target QoS description information sent by the first core network element; and the determining unit is further configured to execute a corresponding application layer policy based on the target QoS description information.

In a possible implementation, the QoS parameter requirement set includes at least one of the following: a time information requirement, a location information requirement, a guaranteed flow bit rate GFBR requirement, a maximum flow bit rate MFBR requirement, an average time window size requirement, and a normalized feature requirement; the location information requirement refers to a network location to which each piece of QoS description information is applicable; and the normalized feature requirement is obtained by mapping a physical value of the QoS parameter requirement to fixed value space.

According to a thirty-first aspect, an embodiment of the present invention provides an apparatus. The apparatus exists in a product form of a chip. A structure of the apparatus includes a processor and a memory. The memory is configured to couple to the processor, and stores a program instruction and data that are necessary for the apparatus. The processor is configured to execute the program instruction stored in the memory, so that the apparatus performs a function of the service server in the foregoing method.

According to a thirty-second aspect, an embodiment of the present invention provides a service server. The service server can perform a function performed by the service server in the foregoing method embodiment. The function may be implemented by hardware, or may be implemented by hardware by executing corresponding software. The hardware or the software includes one or more modules corresponding to the foregoing function.

In a possible design, a structure of the service server includes a processor and a communications interface. The processor is configured to support the service server in performing a corresponding function in the foregoing method. The communications interface is configured to support communication between the service server and another network element. The service server may further include a memory. The memory is configured to couple to the processor, and stores a program instruction and data that are necessary for the service server.

According to a thirty-third aspect, an embodiment of this application provides a computer storage medium, configured to store a computer software instruction used in the foregoing method, where the computer software instruction includes a program designed to perform the foregoing aspects.

According to a thirty-fourth aspect, an embodiment of the present invention provides a computer program product including an instruction. When the computer program product is run on a computer, the computer is enabled to perform the method according to either of the ninth aspect and the tenth aspect.

Embodiments of the present invention further provide a resource allocation method and apparatus.

According to a thirty-fifth aspect, an embodiment of this application provides a resource allocation method. The method includes: receiving, by a session management function network element, at least one piece of first QoS description information of a service from a policy control function network element; determining, by a session management function network element, at least one piece of QoS information of an access network element based on the at least one piece of first QoS description information; and sending, by the session management function network element, the at least one piece of QoS information of the access network element to the access network element.

According to the foregoing method, compared with a current QoS mechanism in which a QoS parameter is usually not properly set or is set in a relatively fixed manner, in this embodiment of this application, a data analysis network element obtains at least one set of QoS description information according to a big data analysis method, and provides the at least one set of QoS description information for the session management function network element to perform filtering based on an actual network parameter. In this way, a QoS parameter can be flexibly set for the service, thereby ensuring quality of service of the service.

In a possible design, each of the at least one piece of first QoS description information includes QoS information of a user plane function network element and QoS information of the access network element.

In a possible design, the first QoS description information further includes one or more of the following information: QoS information of a service server, QoS information of a terminal device, and QoS information of the policy control function network element.

In a possible design, the QoS information of the access network element includes one or more of the following: a QoS parameter type, a QoS parameter requirement, and access network element information.

In a possible design, the QoS information of the user plane function network element includes one or more of the following: a QoS parameter type, a QoS parameter requirement, and user plane function network element information.

In a possible design, the QoS information of the service server includes one or more of the following: a QoS parameter type, a QoS parameter requirement, and service server information.

In a possible design, the QoS information of the terminal device includes one or more of the following: a QoS parameter type, a QoS parameter requirement, and terminal device information.

In a possible design, the QoS information of the policy control function network element includes one or more of the following: a QoS parameter type, a QoS parameter requirement, and policy control function network element information.

In a possible design, the session management function network element determines, based on the at least one piece of first QoS description information, at least one piece of second QoS description information that can be met by the user plane function network element, where the at least one piece of second QoS description information is one or more of the at least one piece of first QoS description information; and the session management function network element determines the at least one piece of QoS information of the access network element based on the at least one piece of second QoS description information, where the at least one piece of second QoS description information includes the at least one piece of QoS information of the access network element.

In a possible design, the session management function network element sends the QoS information of the user plane function network element in the at least one piece of first QoS description information to the user plane function network element; the session management function network element receives selection information of the user plane function network element from the user plane function network element, where the selection information is used to indicate a status of meeting the QoS information of the user plane function network element by the user plane function network element; and the session management function network element determines, based on the selection information of the user plane function network element, the at least one piece of second QoS description information that can be met by the user plane function network element.

In a possible design, the session management function network element receives target QoS information of the access network element from the access network element, where the target QoS information of the access network element is one of the at least one piece of QoS information of the access network element; and the session management function network element determines target QoS description information based on the target QoS information of the access network element, where the target QoS description information is one of the at least one piece of second QoS description information.

In a possible design, the session management function network element sends target QoS information of the terminal device in the target QoS description information to the terminal device.

In a possible design, before the session management function network element sends the target QoS information of the terminal device in the target QoS description information to the terminal device, the session management function network element determines that the target QoS information of the terminal device in the target QoS description information changes.

In a possible design, the session management function network element sends target QoS information of the user plane function network element in the target QoS description information to the user plane function network element.

In a possible design, before the session management function network element sends the target QoS information in the user plane function network element in the target QoS description information to the user plane function network element, the session management function network element determines that the target QoS information of the user plane function network element in the target QoS description information changes.

In a possible design, the session management function network element sends target QoS information of an application server in the target QoS description information to the application server.

In a possible design, before the session management function network element sends the target QoS information of the application server in the target QoS description information to the application server, the session management function network element determines that the target QoS information of the application server in the target QoS description information changes.

In a possible design, the session management function network element sends target QoS information of the policy control function network element in the target QoS description information to the policy control function network element.

In a possible design, before the session management function network element sends the target QoS information of the policy control function network element in the target QoS description information to the policy control function network element, the session management function network element determines that the target QoS information of the policy control function network element in the target QoS description information changes.

In a possible design, the QoS parameter requirement includes one or more of the following information: a time information requirement, a location information requirement, a guaranteed flow bit rate GFBR requirement, a maximum flow bit rate MFBR requirement, an average time window size requirement, a value requirement of at least one data type, a jitter buffer size requirement, a TCP congestion window size requirement, a TCP receive window size requirement, a buffer size requirement, and a radio access type (radio access type, RAT) requirement.

In a possible design, values of data types in a value of the at least one data type have same value space.

In a possible design, the session management function network element determines that the user plane function network element no longer meets the target QoS description information; the session management function network element re-determines at least one piece of QoS information of the access network element based on the at least one piece of first QoS description information; and the session management function network element sends the at least one piece of re-determined QoS information of the access network element to the access network element.

In a possible design, the session management function network element determines that the user plane function network element no longer meets any one of the at least one piece of first QoS description information; and the session management function network element sends first notification information to the policy control function network element, where the first notification information is used to notify the policy control function network element that the user plane function network element cannot meet any one of the at least one piece of first QoS description information.

In a possible design, the session management function network element sends a QoS parameter value of the user plane function network element to the policy control function network element, where the QoS parameter value of the user plane function network element is an actual value obtained by measuring a QoS parameter type for the user plane function network element by the user plane function network element.

According to a thirty-sixth aspect, this application further discloses a resource allocation method. The method includes: receiving, by an access network element, at least one piece of QoS information of the access network element from a session management function network element; determining, by the access network element, target QoS information of the access network element from the at least one piece of QoS information of the access network element; and sending, by the access network element, the target QoS information of the access network element to the session management function network element and/or a terminal device.

According to the foregoing method, compared with a current QoS mechanism in which a QoS parameter is usually not properly set or is set in a relatively fixed manner, in this embodiment of this application, the access network element determines one piece of target QoS information of a service from the at least one piece of received QoS information, and allocates a radio resource and/or executes a quality of service policy to/for the service based on the target QoS information, thereby ensuring quality of service of the service.

In a possible design, the QoS information of the access network element includes one or more of the following: a QoS parameter type, a QoS parameter requirement, and access network element information.

In a possible design, the access network element determines that the access network element meets a QoS parameter requirement in the target QoS information of the access network element.

In a possible design, the access network element allocates the radio resource and/or executes the quality of service policy to/for the service based on the target QoS information of the access network element.

In a possible design, the access network element determines that the access network element no longer meets the QoS parameter requirement in the target QoS information of the access network element; and the access network element re-determines target QoS information of the access network element from the at least one piece of QoS information of the access network element.

In a possible design, the access network element sends the re-determined target QoS information of the access network element to the session management function network element and/or the terminal device.

In a possible design, if the access network element no longer meets a QoS parameter requirement included in any one of the at least one piece of QoS information of the access network element, the access network element triggers a handover of the terminal device to another access network element; or the access network element sends redirection information to the terminal device, where the redirection information is used to redirect the terminal device to another access network element.

In a possible design, if the access network element no longer meets a QoS parameter requirement in any one of the at least one piece of QoS information of the access network element, the access network element sends second notification information to the session management function network element, where the second notification information is used to notify the session management function network element that the access network element cannot meet any one of the at least one piece of QoS information of the access network element.

In a possible design, the access network element sends a QoS parameter value of the access network element to the session management function network element, where the QoS parameter value of the access network element is an actual value obtained by measuring a QoS parameter type for the access network element by the access network element.

In a possible design, the QoS parameter requirement includes one or more of the following information: a time information requirement, a location information requirement, a guaranteed flow bit rate GFBR requirement, a maximum flow bit rate MFBR requirement, an average time window size requirement, a value requirement of at least one data type, a jitter buffer size requirement, a TCP congestion window size requirement, a TCP receive window size requirement, a buffer size requirement, and a radio access type requirement.

In a possible design, the access network element determines that a radio access type of a cell in which the terminal device is currently located is different from a radio access type requirement included in the re-determined target QoS information of the access network element; and the access network element triggers a handover of the terminal device from the cell in which the terminal device is currently located to a target cell, where a radio access type of the target cell is the same as the radio access type requirement in the re-determined target QoS information of the access network element.

According to a thirty-seventh aspect, an embodiment of this application provides a resource allocation method. The method includes: obtaining, by a policy control function network element, at least one piece of third QoS description information of a service from a data analysis network element; determining, by the policy control function network element, at least one piece of first QoS description information based on the at least one piece of third QoS description information; and sending, by the policy control function network element, the at least one piece of first QoS description information to a session management function network element.

According to the foregoing method, compared with a current QoS mechanism in which a QoS parameter is usually not properly set or is set in a relatively fixed manner, in this embodiment of this application, the data analysis network element obtains at least one set of QoS description information according to a big data analysis method, and provides the at least one set of QoS description information for the policy control function network element to perform filtering based on an actual network parameter. In this way, a QoS parameter can be flexibly set for the service, thereby ensuring quality of service of the service.

In a possible design, the policy control function network element obtains service description information that is sent by a service server.

In a possible design, the service description information includes one or more of the following information: a service identifier to which a service flow belongs, IP filtering information, a media bandwidth requirement, traffic routing information, a jitter buffer requirement, a media coding type requirement, a coding rate requirement of the media coding type requirement, a TCP congestion window requirement, a TCP receive window requirement, a buffer requirement, and a value requirement of at least one data type.

In a possible design, the policy control function network element determines the at least one piece of first QoS description information based on the service description information and the at least one piece of third QoS description information.

In a possible design, the policy control function network element receives a service establishment request from the service server, where the service establishment request is used to request to establish a service flow for the service, and the service establishment request includes the service description information; and the policy control function network element obtains, based on the service establishment request, the service description information that is sent by the service server.

In a possible design, the policy control function network element sends a QoS description information request of the service to a data analysis network element based on the service establishment request, where the QoS description information request of the service is used to request the third QoS description information of the service; and the policy control function network element receives a QoS description information request response of the service that is sent by the data analysis network element, where the QoS description information request response of the service includes the at least one piece of third QoS description information of the service.

In a possible design, the QoS description information request of the service includes service identifier information and/or service description information.

In a possible design, the QoS description information request of the service further includes one or more of the following information: user identifier information, location area identifier information, and time information.

In a possible design, the policy control function network element sends a QoS description information subscription request of the service to the data analysis network element, where the QoS description information subscription request of the service is used to subscribe to QoS description information of the service from the data analysis network element; and the policy control function network element receives a QoS description information notification of the service from the data analysis network element, where the QoS description information notification of the service includes the at least one piece of third QoS description information of the service.

In a possible design, the QoS description information subscription request of the service includes service identifier information.

In a possible design, the QoS description information subscription request of the service further includes one or more of the following information: user identifier information, location area identifier information, and time information.

According to a thirty-eighth aspect, an embodiment of this application provides a resource allocation apparatus. The apparatus has a function of implementing an action of the session management function network element in the foregoing method. The function may be implemented by hardware, or may be implemented by hardware by executing corresponding software. The hardware or the software includes one or more modules corresponding to the foregoing function. In a possible design, a structure of the apparatus includes a processor and a transceiver. The processor is configured to support the apparatus to perform a corresponding function in the foregoing method. The transceiver is configured to implement communication between the apparatus and a policy control function network element/an access network element/a user plane function network element/a terminal device. The apparatus may further include a memory. The memory is configured to couple to the processor, and stores a program instruction and data that are necessary for the apparatus.

According to a thirty-ninth aspect, an embodiment of this application provides a resource allocation apparatus. The apparatus has a function of implementing an action of the access network element in the foregoing method. The function may be implemented by hardware, or may be implemented by hardware by executing corresponding software. The hardware or the software includes one or more modules corresponding to the foregoing function. In a possible design, a structure of the apparatus includes a processor and a transceiver. The processor is configured to support the apparatus to perform a corresponding function in the foregoing method. The transceiver is configured to implement communication between the apparatus and a session management function network element/a terminal device. The apparatus may further include a memory. The memory is configured to couple to the processor, and stores a program instruction and data that are necessary for the apparatus.

According to a fortieth aspect, an embodiment of this application provides a resource allocation apparatus. The apparatus has a function of implementing an action of the policy control function network element in the foregoing method. The function may be implemented by hardware, or may be implemented by hardware by executing corresponding software. The hardware or the software includes one or more modules corresponding to the foregoing function. In a possible design, a structure of the apparatus includes a processor and a transceiver. The processor is configured to support the apparatus to perform a corresponding function in the foregoing method. The transceiver is configured to implement communication between the apparatus and a session management function network element/a data analysis network element/a service server. The apparatus may further include a memory. The memory is configured to couple to the processor, and stores a program instruction and data that are necessary for the apparatus.

According to a forty-first aspect, an embodiment of this application provides a computer-readable storage medium. The computer-readable storage medium stores an instruction, and when the instruction is run on a computer, the computer is enabled to perform the methods according to the aspects.

According to a forty-second aspect, an embodiment of this application provides a computer program product including an instruction. When the computer program product is run on a computer, the computer is enabled to perform the methods according to the aspects.

According to a forty-third aspect, this application provides a chip system. The chip system includes a processor, configured to support the foregoing apparatus in implementing a function according to the foregoing aspects, for example, generating or processing information in the foregoing methods. In a possible design, the chip system further includes a memory. The memory is configured to store a program instruction and data that are necessary for a data sending device. The chip system may include a chip, or may include a chip and another discrete component.

**BRIEF DESCRIPTION OF DRAWINGS**

FIG. 1 is a schematic architectural diagram of a communications system according to an embodiment of this application;

FIG. 2A and FIG. 2B are a schematic diagram of signaling exchange in a resource allocation method according to an embodiment of this application;

FIG. 3A and FIG. 3B are a schematic diagram of signaling exchange in a resource allocation method according to an embodiment of this application;

FIG. 4A and FIG. 4B are a schematic diagram of signaling exchange in a resource allocation method according to an embodiment of this application;

FIG. 5 is a schematic diagram of signaling exchange in a resource allocation method according to an embodiment of this application;

FIG. 6 is a schematic structural diagram of an access network element according to an embodiment of this application;

FIG. 7 is a schematic structural diagram of an access network element according to an embodiment of this application;

FIG. 8 is a schematic structural diagram of a terminal device according to an embodiment of this application;

FIG. 9 is a schematic structural diagram of a terminal device according to an embodiment of this application;

FIG. 10 is a schematic structural diagram of a first core network element according to an embodiment of this application;

FIG. 11 is a schematic structural diagram of a first core network element according to an embodiment of this application;

FIG. 12 is a schematic structural diagram of a data analysis network element according to an embodiment of this application;

FIG. 13 is a schematic structural diagram of a data analysis network element according to an embodiment of this application;

FIG. 14 is a schematic structural diagram of a service server according to an embodiment of this application;

FIG. 15 is a schematic structural diagram of a service server according to an embodiment of this application;

FIG. 16A to FIG. 16C are a flowchart of another resource allocation method according to an embodiment of this application;

FIG. 17A and FIG. 17B are a flowchart of another resource allocation method according to an embodiment of this application;

FIG. 18A and FIG. 18B are a flowchart of another resource allocation method according to an embodiment of this application;

FIG. 19 is a flowchart of another resource allocation method according to an embodiment of this application; and

FIG. 20A and FIG. 20B are schematic structural diagrams of a resource allocation apparatus according to embodiments of this application.

## DESCRIPTION OF EMBODIMENTS

Embodiments of this application may be applied to a wireless communications system or a fixed network communications system. The wireless communications system includes a long term evolution (Long Term Evolution, LTE) system proposed in the 3rd generation partnership project (3rd Generation Partnership Project, 3GPP), a 5th generation (5th Generation, 5G) mobile communications system, a global system for mobile communications (Global System of Mobile communication, GSM), a code division multiple access (Code Division Multiple Access, CDMA) system, a wideband code division multiple access (Wideband Code Division Multiple Access, WCDMA) system, a subsequently evolved communications system, and the like. The fixed network communications system includes a multi-service access node (Multi-Service Access Node, MSAN) system, a cable modem termination system (Cable Modem Termination System, CMTS), and a broadband remote access server (Broadband Remote Access Server, BRAS) system

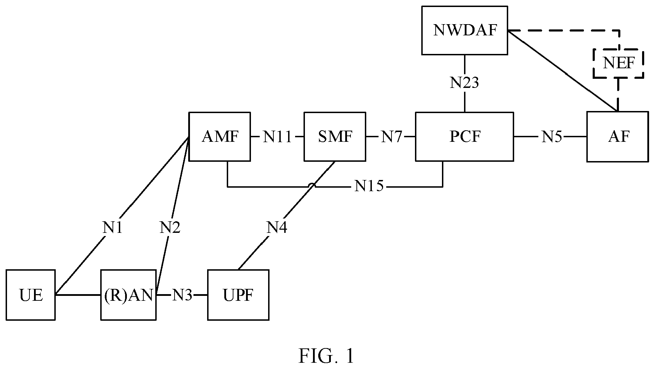

FIG. 1 is a schematic architectural diagram of a communications system according to an embodiment of this application. The communications system includes a data analysis network element, an application function (Application Function, AF) network element (also referred to as a service server), a core network element, an access network element (Radio Access Network, RAN or AN), a terminal device, and a network exposure function (Network Exposure Function, NEF) network element. The data analysis network element may be a network data analytics function network element (Network Data Analytic Function, NWDAF), and the core network element may include a PCF network element, an SMF, an AMF network element, and a user plane function (User plane Function, UPF) network element. The terminal device may be user equipment (User Equipment, UE).

The NWDAF network element is connected to the PCF network element through an N23 interface. The PCF is connected to the AF network element through an N5 interface, is connected to the SMF network element through an N7 interface, and is connected to the AMF network element through an N15 interface. The PCF may dynamically formulate a QoS policy, and distribute a corresponding policy to network elements such as the SMF and the AMF. The UPF is connected to the SMF network element through an N4 interface, and is connected to the AN element through an N3 interface. The AN is connected to the AMF network element through an N2 interface. The UE is connected to the AMF network element through an N1 interface. In addition, the present invention does not exclude a case in which the NWDAF may directly communicate, through a service-oriented interface, with a network element that requires communication, for example, the NWDAF may communicate, through a service-oriented interface, with network elements such as the PCF, the SMF, the AMF, the UPF, and the AN by invoking different services of the service-oriented interface.

It may be understood that in the communications system shown in FIG. 1, functions and interfaces of the network elements are merely examples. When the network elements are applied to the embodiments of this application, not all functions are required.

The terminal device includes but is not limited to: UE, a subscriber unit, a subscriber station, a mobile station, a remote station, a remote terminal device, a mobile terminal device, a user terminal device, a wireless communications device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, a processing device connected to a wireless modem, a vehicle mounted device, a wearable device, a terminal device in the internet of things, a home appliance, a virtual reality device, a terminal device in a future 5G network, a terminal device in a future evolved public land mobile network (public land mobile network, PLMN), or the like.

The access network element may be a device that communicates with the terminal device. The access network device may provide communication coverage for a specific geographic area, and may communicate with a terminal device located in the coverage area (a cell). The access network device may communicate with any quantity of terminal devices. There may be a plurality of air interface connections between the access network device and the terminal device. For example, there are two air interface connections between the access network device and the terminal device, which are respectively used to transmit a data flow A and a data flow B. The access network device may support communication protocols of different standards, or may support different communication modes. For example, the access network device may be an evolved NodeB (evolved node B, eNodeB), a wireless fidelity access point (wireless fidelity access point, WiFi AP), a worldwide interoperability for microwave access base station (worldwide interoperability for microwave access base station, WiMAX BS), or a radio controller in a cloud radio access network (cloud radio access network, CRAN), or the network device may be an access network device in a future 5G network or an access network device in a future evolved PLMN

The PCF network element has a policy control decision function, and provides a policy for a network. The AMF network element is used for mobility management, lawful interception, access authorization and authentication, or the like. The SMF network element is configured to implement session and bearer management, address allocation, or the like.

The data analysis network element can provide a network data analysis result to the PCF, for example, provide at least one piece of QoS description information.

In the embodiments of this application, all or some network elements of the access network and a core network may belong to a 3rd generation partnership project (3rd generation partnership project, 3GPP) network, or may belong to a non-3GPP network, for example, an intranet. All or some network elements of the core network may be physical entity network elements, or may be virtualized network elements. This is not limited herein.

The term "and/or" in the embodiments of this application describes only an association relationship for describing associated objects and represents that three relationships may exist. For example, A and/or B may represent the following three cases: Only A exists, both A and B exist, and only B exists. In addition, in the descriptions of this application, "a plurality of" means two or more than two.

In the embodiments of this application, that a network element (for example, a network element A) obtains information from another network element (for example, a network element B) may mean that the network element A directly receives the information from the network element B, or may mean that the network element A receives the information from the network element B through another network element (for example, a network element C). When the network element A receives information from the network element B through the network element C, the network element C may transparently transmit the information, or may process the information, for example, add the information to different messages for transmission or filter the information, and send only information obtained after the filtering to the network element A. Similarly, in various embodiments of this application, that the network element A sends information to the network element B may mean that the network element A directly sends the information to the network element B, or may mean that the network element A sends the information to the network element B through another network element (for example, the network element C).

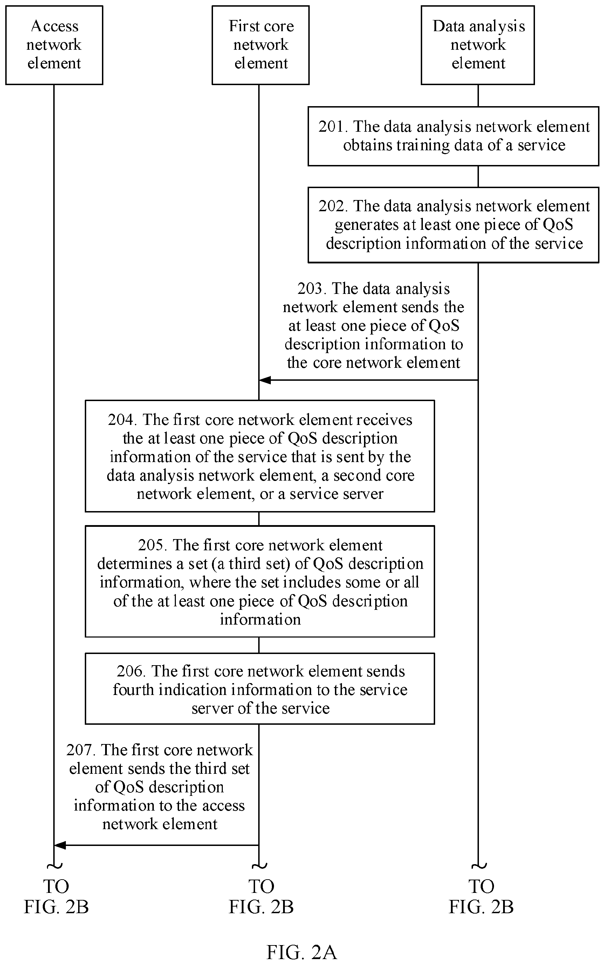

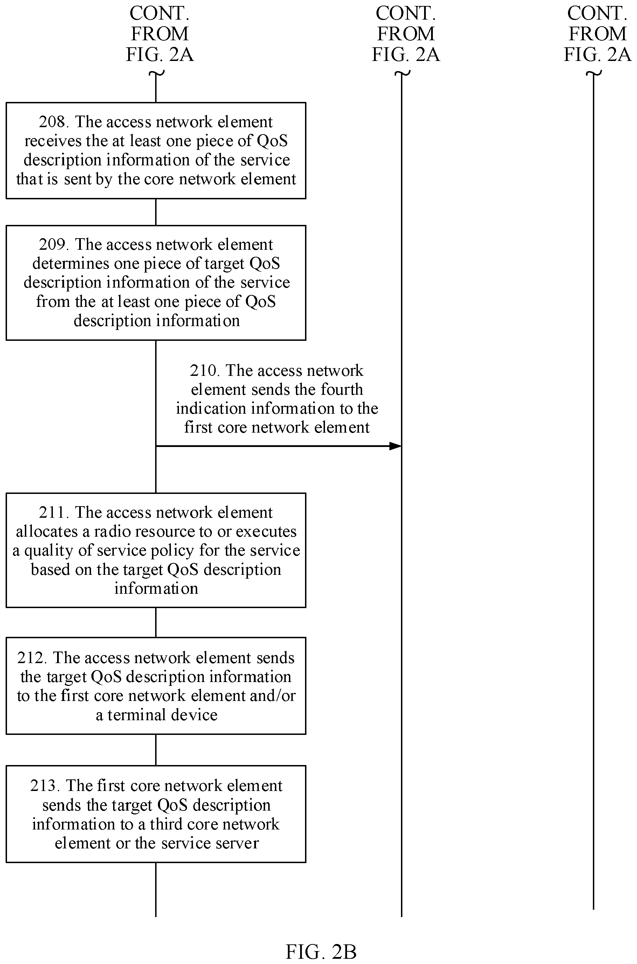

An embodiment of this application provides a resource allocation method. As shown in FIG. 2A and FIG. 2B, the method includes steps 201 to 213. The resource allocation method includes a method for transmitting quality of service information of a service.

201. A data analysis network element obtains training data of a service.

The data analysis network element may be the NWDAF network element in FIG. 1. The data analysis network element may alternatively be another network element having a network data analysis function. This is not limited herein.

The data analysis network element obtains the training data of the service, and the data analysis network element obtains at least one piece of QoS description information of the service from the training data of the service. The service may include a voice service, an ultra-reliable and low-latency communication (Ultra-Reliable and Low-Latency Communication, URLLC) service, an IP multimedia subsystem (IP Multimedia Subsystem, IMS) video service, a vehicle to everything (Vehicle to Everything, V2X) service, a voice over long term evolution (Voice over Long Term Evolution, VoLTE) service, or the like. This is not limited in this application. The QoS description information includes at least one of the following: a policy and charging control rule (policy and charging control rule, PCC rule), a QoS profile, a QoS rule, and parameter information that affects a network formulating a PCC rule, a QoS profile, or a QoS rule. The training data of the service includes at least one of the following: data provided by a service server of the service, data provided by the network, and data provided by a terminal device.

The service server of the service may be at least one of the following servers: a service server controlled by an operator and a service server controlled by a third party. The service server controlled by the third party includes: an application program (application, App) server, an OTT (over the top) server, or a vertical industry control center. The data provided by the service server may include at least one type of application layer data such as a service type, service experience, service description information, an internet protocol (internet protocol, IP) quintuple of a service user, a size of user plane data, a user plane data interval, a service start time, and a service end time.

The data provided by the network may include service-related network data provided by a telecommunications network device, for example, at least one of an address of a terminal device that executes the service, a cell (cell) identifier (identifier, ID), a tunnel endpoint identifier (tunnel endpoint identifier, TEID), time information, a network congestion status, a network resource status, a type or an identifier of a network element, a QoS indicator, a data network name (data network name, DNN), real-time radio channel quality (for example, reference signal received power (reference signal receiving power, RSRP), reference signal received quality (reference signal received quality, RSRQ), or a signal to interference plus noise ratio (signal to interference plus noise ratio, SINR)), a service switching threshold, a filtering coefficient, an antenna tilt, a carrier, a packet loss rate, a guaranteed flow bit rate (guaranteed flow bit rate, GFBR), a maximum flow bit rate (maximum flow bit rate, MFBR), and an aggregate maximum bit rate (aggregate maximum bit rate, AMBR) of a subscribed session. The telecommunications network device may include at least one of the following devices: an access network device, a control plane function network element (for example, an AMF, an SMF, or a PCF), a UPF, a network management network element (for example, a business support system (business support system, BSS), an operation support system (operation support system, OSS), a management support system (management support system, MSS)), or a unified data management (unified data management, UDM) network element.

The data provided by the terminal device may include at least one of the following data: identifier information of the terminal device, service-related IP quintuple information, a type of the terminal device, a capability of the terminal device, an operating system version, a temperature of the terminal device, a quantity of electricity of the terminal device, cell radio channel quality (for example, RSRP, RSRQ, or an SINR) measured by the terminal device, a congestion level, and the like.

It should be noted that, the foregoing network elements and data types are merely examples for description. This is not limited in this application.

202. The data analysis network element generates at least one piece of QoS description information of the service.

Each of the at least one piece of QoS description information may include a QoS parameter type and/or a QoS parameter requirement. The QoS parameter type and/or the QoS parameter requirement may implicitly indicate a network element corresponding to the QoS parameter type and/or the QoS parameter requirement.

Each piece of QoS description information may include one or more QoS parameter types, the QoS parameter type includes a specific type or name of a QoS parameter, and each QoS parameter may correspond to one parameter type or name. Each piece of QoS description information may include one or more QoS parameter requirements, and the QoS parameter requirement includes a specific value requirement of a QoS parameter. A type of the specific value requirement includes but is not limited to a value type, a date type, a time type, and a Boolean type. It should be noted that, the specific value requirement may be an actual physical value of the parameter, or may be a value obtained after a value of the parameter is normalized. Normalization is an operation of mapping a physical value of a parameter to fixed value space, for example, mapping a physical data value of each feature to the fixed value space by using a minmax normalization method, a Z-Score normalization method, or the like. This processing not only facilitates improvement of a model training convergence speed in a big data analysis process, but also provides a feature data transmission manner. For example, a QoS parameter requirement set includes at least one of the following QoS parameter requirements that are already defined in a protocol: a quality of service class identifier (QoS class identifier) requirement, a reflective QoS attribute (reflective QoS attribute, RQA) requirement, an allocation/retention priority (allocation/retention priority, ARP) requirement, a notification control (notification control) requirement, a guaranteed flow bit rate (guaranteed flow bit rate, GFBR) requirement, a maximum flow bit rate (maximum flow bit rate, MFBR) requirement, a session-aggregate maximum bit rate (session-aggregate maximum bit rate, session-AMBR) requirement, a user equipment-aggregate maximum bit rate (UE-aggregate maximum bit rate, UE-AMBR) requirement, a maximum packet loss rate (maximum Packet Loss Rate, Max PLR) requirement, a resource type (resource type) requirement, a packet delay budget (packet delay budget, PDB) requirement, a packet error rate (packet error rate, PER) requirement, a priority requirement, an average time window (average window, AW) requirement, and a maximum data burst volume (maximum data burst volume) requirement. It should be noted that, the foregoing parameter requirements such as the GFBR, the MFBR, and the Max PLR may be used to indicate GFBR, MFBR, and Max PLR requirements for uplink or downlink data. In a possible implementation, the QoS parameter requirement set may further include a QoS parameter requirement that is not defined in a current standard, for example, include at least one of the following: a time information requirement, a location information requirement, a packet size requirement, a coding scheme requirement, a jitter requirement, a packet arrival rate requirement, a traffic activation rate requirement, a radio channel quality requirement, a user identifier/type requirement, and a user IP quintuplet requirement. The time information requirement is used to indicate a time to which current QoS description information is applicable. The location information requirement is used to indicate a location to which the current QoS description information is applicable. Similarly, another QoS parameter requirement is used to indicate a scenario to which the current QoS description information is applicable. In a possible implementation, the QoS parameter requirement set may further include a normalized feature requirement; and the normalized feature requirement is obtained by mapping a physical value of the QoS parameter requirement to fixed value space.

In a possible implementation, each of the at least one piece of QoS description information may correspond to one QoS description information index, for example, a numerical symbol, and the numerical symbol may be used to represent corresponding QoS description information.

For example, as shown in Table 1, assuming that the service is an IMS video service, after analyzing training data of the IMS video service, the data analysis network element generates two pieces of QoS description information numbered 0 and 1, and a QoS parameter type set of each piece of QoS description information includes a time period, a GBR, an MBR, a packet loss rate, a delay, and a window size, so that the QoS parameter requirement set of each piece of QoS description information includes a time period requirement, a GBR requirement, an MBR requirement, a packet loss rate requirement, a delay requirement, and a window size requirement.

**Table 1**

| Numerical symbol | Time | GBR | MBR | packet loss rate | Delay | Window size |
|---|---|---|---|---|---|---|
| 0 | Daytime (06:00-18:00) | 496 kbps | 5120 kbps | 0.1% | 150 ms | 2s |
| 1 | Nighttime (18:00-06:00) | 568 kbps | 8640 kbps | 0.1% | 100 ms | 2s |

As shown in Table 2, assuming that the service is a VoLTE service, after analyzing training data of the VoLTE service, the data analysis network element generates six pieces of QoS description information numbered 0 to 5, and a QoS parameter type set of each piece of QoS description information includes an uplink/downlink (Uplink/Downlink, UL/DL) Max PLR, a coding type, and a coding rate, so that the QoS parameter requirement set of each piece of QoS description information includes a UL/DL Max PLR requirement, a coding type requirement, and a coding rate requirement.

Table 2

| Numerical symbol | Coding type | Coding rate (kbps) | UL/DL Max PLR |
|---|---|---|---|
| 0 | AMR-WB | 6.6 | 1% |
| 1 | AMR-WB | 12.65 | 3% |
| 2 | AMR-WB | 23.85 | 4% |
| 3 | EVS | 5.9 | 3% |
| 4 | EVS | 64 | 5% |
| 5 | EVS | 128 | 6% |

In a possible implementation, each of the at least one piece of QoS description information further includes network element information. There may be one or more pieces of network element information, and each piece of network element information is used to indicate a network element corresponding to at least one QoS parameter requirement in the QoS parameter requirement. The network element information may include network element type information or identifier information. The network element information is used to indicate one network element or one type of network element to which a corresponding QoS parameter requirement is applicable. For example, the packet loss rate requirement and the average window size requirement are applied to the UPF. To be specific, the UPF may determine, based on UPF information (a UPF identifier or type) in the network element information, that QoS parameter requirements related to the UPF in each piece of QoS description information include the packet loss rate requirement and the average window size requirement. Subsequently, the UPF only needs to determine whether a packet loss rate and an average window size of a current network (including the UPF) can meet the packet loss rate requirement and the average window size requirement in each piece of QoS description information, and the UPF does not need to identify or consider another QoS parameter requirement in the QoS description information. Therefore, the UPF may sift out, from the at least one piece of received QoS description information, zero pieces of QoS description information or one or more pieces of QoS description information in which the packet loss rate requirement and the average window size requirement can be met, and filter out another piece of QoS description information in which the packet loss rate requirement and the average window size requirement cannot be met. For another example, the time requirement is applied to the PCF. To be specific, the PCF may determine, based on PCF information in the network element information, that a QoS parameter requirement related to the PCF in each piece of QoS description information includes the time requirement. Subsequently, the PCF only needs to determine whether a time of a current network can meet the time requirement in each piece of QoS description information, and accordingly, the PCF may select, from the at least one piece of received QoS description information, zero pieces of QoS description information or one or more pieces of QoS description information in which the time requirement can be met, and filter out another piece of QoS description information in which the time requirement cannot be met. It should be noted that the network element information may indicate that the QoS parameter requirement is to be applied to or determined by a network element. For example, a network element corresponding to the foregoing time requirement is the PCF, and a specific meaning thereof is that the PCF is to determine or apply the time requirement. For another example, assuming that the location requirement may be used as a QoS parameter requirement in a piece of QoS description information, and assuming that a network element corresponding to the location requirement is the access network device, a specific meaning is that the access network device is to determine or use the location requirement. For example, it is determined whether a location of a user terminal that executes the service meets the location requirement, but the location requirement may not be an attribute requirement for an access network. In a possible implementation, the network element information in the QoS description information does not need to cover each QoS parameter requirement. To be specific, there is one or more QoS parameter requirements that do not specify a corresponding network element. For example, it is assumed that the Max PLR is used as a QoS parameter requirement in QoS description information of a service; however, it is clearly defined in a protocol that the Max PLR is a parameter for the access network element. In this case, network element information corresponding to the Max PLR parameter may not need to exist in the QoS description information.

For example, the data analysis network element may obtain, by using an existing big data learning and analysis method, the at least one piece of QoS description information of the service based on service data (for example, service experience) provided by the service server. For example, it is assumed that the service is a URLLC service, and service experience of the URLLC service is described by using a mean opinion score (Mean Opinion Score, MOS). A range of the MOS is [0, 5]. A larger value indicates better service experience of the URLLC service. As shown in Table 3, after analyzing training data of the URLLC service, the data analysis network element may learn that a QoS parameter type set that affects the MOS of the URLLC service includes a maximum packet loss rate (Max Packet Loss Rate, Max PLR) of uplink and downlink data transmission, a packet arrival rate (Packet Arrival Rate), and a packet size (Packet Size), thereby learning that a QoS parameter requirement set includes a Max PLR value requirement, a packet arrival rate value requirement, and a packet size value requirement, and learning that a network element information set includes network element information respectively corresponding to the Max PLR, the packet arrival rate, and the packet size. For example, the Max PLR may correspond to the access network element, the packet arrival rate may correspond to a core network element (the PCF/SMF/AMF/UPF), and the packet size may correspond to the terminal device. In other words, the network element information set includes the core network element, the access network element, and the terminal device.

**Table 3**

| Number | Access network element | Core network element | Terminal device |
|---|---|---|---|
| | Max PLR | Packet arrival rate | Packet size (byte) |
| 0 | 1% | 95% | 200 |
| 1 | 3% | 98% | 200 |

As shown in Table 4, it is assumed that the service is a V2X service, and service experience of the V2X service is described by using a MOS. After analyzing training data of the V2X service, the data analysis network element may learn that a QoS parameter type set that affects the MOS of the V2X service includes an average window, a packet loss rate, RSRP of a cell in which the service user is located, a media plane data coding type and coding rate of the service, and a time period of the service, thereby learning that a QoS parameter requirement set includes a receive window requirement, a packet loss rate requirement, an RSRP requirement (which is a normalized value, and within a range of [0, 1]) of the cell in which the service user is located, a media plane data coding scheme requirement of the service, and a time period requirement of the service, and learning that a network element information set includes network element information respectively corresponding to the average window, the packet loss rate, the RSRP of the cell in which the service user is located, a media plane data coding scheme of the service, and the time period of the service. For example, the media plane data coding scheme requirement of the service and the time period requirement of the service correspond to the PCF, the packet loss rate requirement and the receive window requirement correspond to the UPF, and the RSRP requirement of the cell in which the service user is located may correspond to an AN. In other words, the network element information includes the PCF, the UPF, and the AN.

**Table 4**

| | PCF | | | UPF | | AN |
|---|---|---|---|---|---|---|
| | Time period | Coding type | Coding rate (kbps) | Receive window (s) | Packet loss rate | RSRP |
| 0 | Daytime (06:00-18:00) | AMR-WB | 25.5 | 2 | 1% | 0.2 |
| 1 | Nighttime (18:00-06:00) | AMR-WB | 36.4 | 2 | 3% | 0.5 |
| 2 | Daytime (06:00-18:00) | EVS | 48.2 | 2 | 4% | 0.7 |
| 3 | Nighttime (18:00-06:00) | EVS | 36.6 | 1 | 3% | 1.0 |

In a possible implementation, each of the at least one piece of QoS description information may correspond to one QoS policy in the network element, the terminal device, or the service server. For example, the network element, the terminal device, or the service server may use the received QoS description information as a QoS policy, or may generate or map a corresponding QoS policy based on the QoS description information. The network element, the terminal device, or the service server may execute a corresponding QoS policy, for example, allocate a corresponding resource and/or perform corresponding threshold control based on a QoS policy requirement.

In this embodiment of this application, in a method for sending the at least one piece of QoS description information to the first core network element (the core network element) by the data analysis network element, the first core network element may be at least one of a policy control function network element, a session management function network element, the user plane function network element, an access control function network element, and an access network function network element. This is not limited herein. The data analysis network element may send the at least one piece of QoS description information to the first core network element through a point-to-point interface, or may send the at least one piece of QoS description information to the first core network element through a service-oriented interface. This is not limited herein either.

203. The data analysis network element sends the at least one piece of QoS description information to the core network element.

In a possible implementation, before the data analysis network element sends the at least one piece of QoS description information to the core network element, the data analysis network element receives a QoS description information request message of the service that is sent by the core network element. The QoS description information request message is used to request the at least one piece of QoS description information of the service, and the QoS description information request message includes service identifier information (for example, a public land mobile network (public land mobile network, PLMN) ID, a service identifier (service ID), and an analysis identifier (analytic ID)) of the service.

In a possible implementation, the QoS description information request message may further include identifier information (an IMSI, an SUPI, or a UE IP address) of the terminal device that executes the service, location information (a TA, a TA list, or a cell list (cell list) in which the terminal is currently located) of the terminal device, a name of a data network in which the terminal device is located, and the like. In a possible design, before the core network element sends the QoS description information request message of the service to the data analysis network element, in a service establishment process, the core network element receives an authentication authorization request message (for example, a policy authentication authorization request message) sent by the service server of the service, where the authentication authorization request message includes the service identifier information, and is used to instruct to establish the service corresponding to the service identifier information. The service identifier information may be uniformly allocated by the data analysis network element to any type of service in advance and sent to a corresponding service server. The data analysis network element may communicate with the service server through an NEF, and the data analysis network element, the NEF, and the service server may communicate with each other through a uniform northbound interface. Specifically, the service server may request service identifier information allocation from the data analysis network element through the uniform northbound interface, or the service server requests service identifier information allocation from the NEF through the uniform northbound interface, and then the NEF requests service identifier information allocation from the data analysis network element. The service identifier information may alternatively be provided by another network element to the PCF. For example, in a session establishment process corresponding to the service, the SMF or the terminal device provides the service identifier information to the PCF. This is not limited herein. The service identifier information may be service type information.

In a possible implementation, the authentication authorization request message may further include other application layer information of the service, for example, a classifier identifier, bandwidth requirement description information, media type description information, and a media coding scheme.

In a possible implementation, the authentication authorization request message may further include indication information (fifth indication information), used to instruct the network element (including the PCF, the SMF, the AMF, the UPF, the AN, and the UE) to send fourth indication information to the service server when the network element determines that a quality of service requirement of the service is not met, where the fourth indication information may indicat that each network element does not meet the quality of service requirement of the service and/or indicate a specific QoS parameter requirement that is not met. It should be noted that, that the quality of service requirement of the service is not met may mean that any one of the at least one piece of QoS description information received by the network element is not met. That the network element does not meet one piece of QoS description information may be that a parameter corresponding to the network element does not meet one or more QoS parameter requirements in the QoS description information.

In a possible implementation, if the data analysis network element receives the QoS description information request message of the service that is sent by the core network element, the data analysis network element may send a QoS description information response message to the core network element, where the QoS description information response message includes the at least one piece of QoS description information. The at least one piece of QoS description information may be presented in a form of a table, an image, a function, a description file, or the like. This is not limited in this application.

In a possible design, after obtaining the at least one piece of QoS description information of the service based on the training data, the data analysis network element may actively push the at least one piece of QoS description information of the service to the PCF. In other words, the core network element does not need to request the QoS description information from the data analysis network element. In addition, in a push process, the data analysis network element may further send the service identifier information of the service corresponding to the at least one piece of QoS description information to the PCF. In a possible implementation, the data analysis network element may select an occasion for active push, and may perform real-time push or offline push; and may perform single-service push, or multi-service batch push.

In a scenario in which the data analysis network element actively pushes the at least one piece of QoS description information to the PCF, the PCF may receive the authentication authorization request message sent by the service server or a service-related session policy control request message sent by the session management function network element, where the authentication authorization request message or the session policy control request message is used to request to establish a service-related dedicated tunnel or a service-related session. In a possible implementation, the authentication authorization request message includes the service identifier information and other application layer information of the service, for example, a classifier identifier, bandwidth requirement description information, media type description information, and a media coding scheme. In a possible implementation, the authentication authorization request message may further include fifth indication information, where the fifth indication information is used to instruct the network element to send fourth indication information to the service server when the network element determines that the quality of service requirement of the service is not met, and the fourth indication information is used to indicate that the quality of service requirement of the service is not met and/or indicate a specific QoS parameter requirement that is not met. The session policy control request message includes the service identifier information and other network parameters, for example, user location information and user type information.

In a possible implementation, when sending the at least one piece of QoS description information to the core network element, the data analysis network element needs to consider identifier information, location information, or the like of the user. For example, the data analysis network element sifts out, based on a TA or a TA list or a cell list in which the user is currently located, at least one piece of QoS description information that meets a current location scenario, and delivers the at least one piece of QoS description information to the core network element, instead of delivering all the generated QoS description information of the service; for another example, delivers, based on a type of the user terminal that executes the service, at least one piece of QoS description information that meets a current terminal type scenario.

In a possible implementation, the data analysis network element may further send fifth indication information to the core network element when sending the at least one piece of QoS description information to the core network element, or send fifth indication information to another network element through the core network element, where the fifth indication information is used to instruct the network element to send fourth indication information to the data analysis network element when the network element determines that the quality of service requirement of the service is not met, and the fourth indication information is used to indicate that a corresponding network element does not meet the quality of service requirement of the service and/or indicate a specific QoS parameter requirement that is not met. Herein, that the quality of service requirement of the service is not met means that a QoS parameter requirement in any piece of QoS description information is not met. In this way, accuracy and effectiveness of feeding back the QoS description information by the network element to the data analysis network element can be improved, so that the data analysis network element adaptively adjusts a method for generating the QoS description information, to obtain more accurate QoS description information of the service.

In addition, if the QoS description information does not include the network element information set, the data analysis network element may further send the network element information set to the core network element when sending the at least one piece of QoS description information. For example, the at least one piece of QoS description information and the network element information set are sent in a same message to the core network element.

204. The first core network element receives the at least one piece of QoS description information of the service that is sent by the data analysis network element, a second core network element, or the service server.

The first core network element includes one of the PCF, the SMF, the UPF, and the AMF

It should be noted that, when the first core network element is the PCF, the PCF receives the at least one piece of QoS description information of the service that is sent by the data analysis network element or the service server. In a possible design, after the PCF receives the at least one piece of QoS description information of the service that is sent by the data analysis network element, the PCF may send some or all of the at least one piece of QoS description information received by the PCF to the service server. The service server may feed back some or all of the at least one piece of QoS description information received by the service server to the PCF.

When the first core network element is the SMF and the second core network element is the PCF, the SMF receives the at least one piece of QoS description information of the service that is sent by the PCF or the data analysis network element. The at least one piece of QoS description information sent by the PCF includes some or all of the at least one piece of QoS description information generated by the data analysis network element.

When the first core network element is the UPF or the AMF and the second core network element is the SMF, the UPF or the AMF receives the at least one piece of QoS description information of the service that is sent by the SMF or the data analysis network element. The at least one piece of QoS description information sent by the SMF includes some or all of the at least one piece of QoS description information received by the SMF

205. The first core network element determines a set (a third set) of QoS description information, where the set includes some or all of the at least one piece of QoS description information.

For each of the at least one piece of QoS description information received by the first core network element, the first core network element may determine, based on the network element information, one or more QoS parameter types corresponding to the first core network element in the QoS description information, and determines, based on the one or more QoS parameter types corresponding to the first core network element, one or more QoS parameter requirements corresponding to the first core network element. Then the first core network element determines, based on a QoS parameter requirement related to the first core network element, whether each piece of QoS description information can be met by the first core network element. QoS description information that can be met forms a set of QoS description information met by the first core network element, and the set may include zero pieces of QoS description information or one or more pieces of QoS description information. It should be noted that, that the first core network element meets one or more pieces of QoS description information is not limited to a case in which an attribute condition of the first core network element can meet a related QoS parameter requirement in the one or more pieces of QoS description information, and may further include a case in which a parameter (for example, a time or a service coding scheme) related to the first core network element can meet a corresponding QoS parameter requirement in the QoS description information. In other words, these parameter requirements may not be requirements for an attribute of the first core network element, but are determined and used by the first core network element. Similarly, in subsequent steps of this application, that another network element meets QoS description information also has a same meaning, and refer to descriptions in which the first core network element meets one or more pieces of QoS description information.

In a possible design, if the QoS description information does not include the network element information, or the data analysis network element does not deliver the network element information set, the first core network element may identify, based on a capability of the first core network element, a QoS parameter requirement related to the first core network element in the QoS description information, and determine, based on the QoS parameter requirement related to the first core network element, the set of QoS description information met by the first core network element. Specifically, for each of the at least one piece of QoS description information received by the first core network element from the data analysis network element, the first core network element may identify the QoS parameter requirement related to the first core network element in the QoS description information. Then the first core network element determines, based on the QoS parameter requirement related to the first core network element, whether each piece of QoS description information can be met by the first core network element. The QoS description information that can be met forms the set of QoS description information met by the first core network element, and the set may include zero pieces of QoS description information or one or more pieces of QoS description information.

In another design of this application, when the first core network element determines that there is no QoS parameter requirement related to the first core network element in the at least one piece of QoS description information received by the first core network element, the set of QoS description information met by the first core network element includes all of the at least one piece of QoS description information. In other words, the first core network element does not need to perform a filtering operation (that is, does not need to determine the third set of QoS description information), but only needs to perform an operation of forwarding the at least one piece of QoS description information to the second core network element or the access network element. The first core network element may determine, by using the network element information and/or the QoS parameter requirement, whether there is a QoS parameter requirement related to the first core network element in the at least one piece of QoS description information received by the first core network element. In a possible design, when the first core network element is the SMF, the AMF, or the UPF, if the SMF, the AMF, or the UPF determines that there is no QoS parameter requirement related to the SMF, the AMF, or the UPF in the at least one piece of QoS description information received by the SMF, the AMF, or the UPF, the SMF, the AMF, or the UPF does not need to perform a filtering operation, but only needs to forward the at least one piece of QoS description information to a next network element.

In a possible design, when the first core network element is the PCF, the third set of QoS description information is a set of QoS description information met by the PCF, and the set of QoS description information met by the PCF includes some or all of the at least one piece of QoS description information of the service.

For example, as shown in Table 5, it is assumed that the PCF receives 10 pieces of QoS description information of a voice service that are sent by the NWDA, and the pieces of QoS description information may respectively correspond to numerical symbols 0 to 9. A network element information set in each piece of QoS description information may include the PCF, the AN, and the UE. A QoS parameter type set corresponding to the PCF includes time information, a service coding type, and a service coding rate; a parameter type set corresponding to the AN may include a packet loss rate, a delay, a start time, and an end time; and a parameter type set corresponding to the UE may include UE priority information and a UE type. Correspondingly, QoS parameter requirements corresponding to the PCF include a time information requirement, a service coding type requirement, and a service coding rate requirement; the QoS parameter requirements corresponding to the AN may include a packet loss rate requirement, a delay requirement, a start time requirement, and an end time requirement; and the QoS parameter requirements corresponding to the UE may include a UE priority information requirement and a UE type requirement.

Table 5

| Number | PCF | | | AN | | | | UE | |
|---|---|---|---|---|---|---|---|---|---|
| | Time | Service coding type | Service coding rate (Kbps) | packet loss rate | Delay | Packet arrival rate | Packet size (byte) | UE priority | UE Type |
| 0 | Daytime (06:00-18:00) | AMR-WB | 5 to 50 | 0% to 1% | 1 ns | 98% | 200 | 1 | iPhone 5S |
| 1 | Daytime (06:00-18:00) | AMR-WB | 5 to 50 | 0% to 1% | 1 ns | 98% | 200 | 1 | IPhone 7 |
| 2 | Daytime (06:00-18:00) | AMR-WB | 5 to 50 | 0% to 1% | 2 ns | 98% | 200 | 7 | iPhone 5S |
| 3 | Daytime (06:00-18:00) | AMR-WB | 5 to 50 | 0% to 1% | 2 ns | 98% | 200 | 1 | iPhone 5S |
| 4 | Daytime (06:00-18:00) | AMR-WB | 5 to 50 | 0% to 1% | 4 ns | 98% | 200 | 7 | IPhone 8 |
| 5 | Daytime (06:00-18:00) | AMR-WB | 5 to 50 | 0% to 1% | 4 ns | 98% | 200 | 1 | iPhone 5S |
| 6 | Daytime (06:00-18:00) | AMR-WB | 5 to 50 | 0% to 1% | 2 ns | 98% | 200 | 1 | iPhone 5S |

(continued)

| Number | PCF | | | AN | | | | UE | |
|---|---|---|---|---|---|---|---|---|---|
| | Time | Service coding type | Service coding rate (Kbps) | packet loss rate | Delay | Packet arrival rate | Packet size (byte) | UE priority | UE Type |
| 7 | Daytime (06:00-18:00) | AMR-WB | 50-100 | 2% to 3% | 5 ns | 98% | 200 | 1 | IPhone 6 |
| 8 | Nighttime (18:00-12:00) | EVS | 50 to 100 | 2% to 3% | 8 ns | 92% | 200 | 7 | iPhone 5S |
| 9 | Nighttime (18:00-12:00) | AMR-WB | 50 to 100 | 2% to 3% | 2 ns | 91% | 200 | 7 | IPhone 8 |

The PCF may determine that, in each piece of QoS description information, QoS parameter requirements related to the PCF are the time requirement, the service coding type requirement, and the service coding rate requirement. Then the PCF determines that a current time belongs to the daytime, a current coding type actually used by the service is AMR-WB, and a current coding rate of the service falls within a range of 5 (Kbps) to 50 (Kbps), so that eight pieces of QoS description information with numerical symbols 0 to 7 are determined as the set of QoS description information met by the PCF. It may be understood that, the current time may be any moment that belongs to the daytime.

When the first core network element is the SMF, the third set of QoS description information is a set of QoS description information met by the SMF, and the set of QoS description information met by the SMF includes some or all of the at least one piece of QoS description information of the service. In a possible design, the set of QoS description information met by the SMF is a subset of the set of QoS description information met by the PCF.

When the first core network element is the UPF or the AMF, the third set of QoS description information is a set of QoS description information met by the UPF or the AMF, and the set of QoS description information met by the UPF or the AMF includes some or all of the at least one piece of QoS description information of the service. In a possible design, the set of QoS description information met by the UPF or the AMF is a subset of the set of QoS description information met by the SMF.

206. In a possible design, when the first core network element does not meet the quality of service requirement of the service, the first core network element sends indication information (fourth indication information) to the service server of the service, to indicate that the first core network element does not meet the quality of service requirement of the service and/or indicate a specific QoS parameter requirement that is not met.

That the first core network element does not meet the quality of service requirement of the service may be that parameter information corresponding to the first core network element does not meet a QoS parameter requirement in any one of the at least one piece of QoS description information. To be specific, the first core network element cannot determine the set of QoS description information met by the first core network element. For example, a method for setting the fourth indication information by the first core network element may be that: when the first core network element determines that a current coding scheme actually used by the service does not meet a coding scheme requirement in any piece of QoS description information, the first core network element specifically sets the fourth indication information to that the current coding scheme does not meet a corresponding QoS parameter requirement. In this way, the service server can learn of a specific reason for a service establishment failure, and can further adjust a corresponding application layer policy, for example, change a service coding scheme. For another example, when the first core network element determines that the current time and a current coding scheme actually used by the service do not meet a combination of a time requirement and a coding scheme requirement in any piece of QoS description information, the fourth indication information may specifically indicate that the coding scheme actually used by the service at the current time does not meet corresponding QoS parameter requirements. The foregoing is merely an example for description. Actually, there is still a scenario in which the first core network element cannot meet any piece of QoS description information due to another reason. This is not limited herein. It may be understood that, for setting the fourth indication information by another network element below, refer to the method for setting the fourth indication information by the first core network element.

In a possible implementation, when it is determined that a parameter set corresponding to the first core network element does not meet a QoS parameter requirement set in any one of the at least one piece of QoS description information, to be specific, when the first core network element cannot determine the set of QoS description information met by the first core network element, the first core network element may send indication information (fourth indication information) to the second core network element or the data analysis network element, to indicate that a corresponding network element does not meet the quality of service requirement of the service and/or indicate a specific QoS parameter requirement that is not met. The second core network element or the data analysis network element may also use a corresponding adjustment policy based on the received fourth indication information. In a possible implementation, the second core network element re-filters, based on the fourth indication information, the QoS description information received by the second core network element, and then sends QoS description information obtained after the filtering to the first core network element. For example, after the SMF receives the fourth indication information fed back by the AMF or the AN or the UPF, the SMF requests the PCF to update optional QoS description information, and may carry a specific cause value. Alternatively, the SMF sifts out, from the at least one piece of received QoS description information based on the fourth indication information, one or more pieces of QoS description information that meet a requirement. In another possible implementation, the data analysis network element re-trains the QoS description information of the service based on the fourth indication information.

In a possible implementation, the first core network element receives indication information (fifth indication information) sent by the data analysis network element, to instruct the network element to send the fourth indication information to the PCF when the network element determines that the quality of service requirement of the service is not met. If the first core network element receives the fifth indication information sent by the data analysis network element, in this step, the first core network element sends the fourth indication information to the data analysis network element based on the fifth indication information.

207. The first core network element sends the third set of QoS description information to a third core network element or the access network element.

When the first core network element is the PCF, the third core network element may be the SMF, and the third set is the set of QoS description information met by the PCF. To be specific, the PCF sends the set of QoS description information met by the PCF to the SMF. The set of QoS description information met by the PCF includes some or all of the at least one piece of QoS description information received by the PCF.

When the first core network element is the SMF, the third core network element may be the UPF or the AMF, and the third set is the set of QoS description information met by the SMF. To be specific, the SMF sends the set of QoS description information met by the SMF to the UPF or the AMF. The set of QoS description information met by the SMF includes some or all of the at least one piece of QoS description information received by the SMF

When the first core network element is the AMF, the third set is a set of QoS description information met by the AMF. To be specific, the AMF sends the set of QoS description information met by the AMF to the access network element. The set of QoS description information met by the AMF includes some or all of the at least one piece of QoS description information received by the AMF.

In a possible implementation, the first core network element further obtains the network element information when obtaining the at least one piece of QoS description information from the second core network element, the data analysis network element, or the service server. In this case, the first core network element further needs to send the network element information to the third core network element or the access network element when sending the third set of QoS description information to the third core network element or the access network element.

In a possible implementation, when the first core network element obtains the fifth indication information, the first core network element further needs to send the fifth indication information to the third core network element or the access network element when sending the third set of QoS description information to the third core network element or the access network element.

208. The access network element receives the at least one piece of QoS description information of the service that is sent by the core network element.

In a possible implementation, the core network element is the AMF network element. The access network element receives the at least one piece of QoS description information of the service that is sent by the AMF. The at least one piece of QoS description information of the service that is sent by the AMF may be the set of QoS description information met by the AMF.

In a possible implementation, when the core network element is the PCF, the access network element may receive, through the SMF and the AMF, the at least one piece of QoS description information of the service that is sent by the PCF. The at least one piece of QoS description information of the service that is sent by the PCF may be the set of QoS description information met by the PCF.

In a possible implementation, when the core network element is the SMF, the access network element may receive, through the AMF, the at least one piece of QoS description information of the service that is sent by the SMF. The at least one piece of QoS description information of the service that is sent by the SMF may be the set of QoS description information met by the SMF.

In a possible implementation, the access network element further receives the network element information and/or the fifth indication information sent by the core network element.

209. The access network element determines one piece of target QoS description information of the service from the at least one piece of QoS description information.

In a possible design, the access network element determines one piece of target QoS description information of the service from the at least one piece of QoS description information received by the access network element.

For example, for each of the at least one piece of QoS description information received by the access network element, the access network element may determine, based on the network element information set, one or more QoS parameter types corresponding to the access network element in the QoS description information, and determine, based on the one or more QoS parameter types corresponding to the access network element, one or more QoS parameter requirements corresponding to the access network element. Then the access network element may determine, based on a QoS parameter requirement related to the access network element, whether each piece of QoS description information can be met by the access network element. The set of QoS description information met by the access network element may include zero pieces of QoS description information or one or more pieces of QoS description information. The access network element may determine one piece of QoS description information from the set of QoS description information met by the access network element, as the target QoS description information, so that the network or the terminal device executes a quality of service policy such as resource allocation, scheduling, or threshold control based on the target QoS description information.

In another design of this application, if the QoS description information does not include the network element information set or the access network element does not obtain the network element information set, the access network element may identify, based on a capability of the access network element, a QoS parameter requirement related to the access network element in the QoS description information, and determine, based on the QoS parameter requirement related to the access network element, the set of QoS description information met by the access network element. Then the access network element selects one piece of QoS description information from the set of QoS description information met by the access network element, as the target QoS description information.

In a possible implementation, the access network element may determine QoS description information with the smallest/largest numerical symbol in one or more pieces of corresponding QoS description information met by the access network element, as the target QoS description information; or the access network element may select one piece of QoS description information with least air interface resource consumption from the set of QoS description information met by the access network element, as the target QoS description information; or the access network element may randomly select one piece of QoS description information from the set of QoS description information met by the access network element, as the target QoS description information. The access network element may alternatively determine the target QoS description information in another manner. This is not limited herein.

In a possible design, the access network element determines a first set of QoS description information from the at least one piece of received QoS description information, where the first set of QoS description information includes some or all of the at least one piece of QoS description information received by the access network element. The access network element sends the first set to the terminal device corresponding to the service. For example, the access network element sends an access network related resource establishment/update message to the terminal device, where the access network related resource establishment/update message includes the first set. The access network element receives a second set of QoS description information sent by the terminal device, where the second set is a subset of the first set, to be specific, any piece of QoS description information in the second set belongs to the first set. The access network element determines one piece of target QoS description information of the service from the second set.

In a possible design, the access network element sends the at least one piece of QoS description information received from the core network element to the terminal device corresponding to the service, and the terminal device determines the second set of QoS description information, where the second set includes some or all of the at least one piece of QoS description information received by the access network element. The access network element receives the second set of QoS description information sent by the terminal device. The access network element determines the first set of QoS description information from the second set of QoS description information sent by the terminal device, where the first set includes some or all of QoS description information in the second set. The access network element determines one piece of target QoS description information of the service from the first set.

In a possible implementation, if the access network element receives the network element information and/or the fifth indication information sent by the core network element, the access network element may further send, when sending the first set or the at least one piece of QoS description information to the terminal device, the network element information set and/or the fifth indication information to the terminal device corresponding to the service.

In a possible implementation, when the terminal device determines that a QoS parameter requirement set in any one of the at least one piece of QoS description information is not met, to be specific, when the terminal device cannot determine the second set of QoS description information met by the terminal device, the terminal device sends fourth indication information to the access network element, where the fourth indication information is used to indicate that the terminal device does not meet the quality of service requirement of the service and/or indicate a specific QoS parameter requirement that is not met. It should be noted that, the fourth indication information may be transferred by the access network element, the AMF, and the SMF to the PCF or even the service server or the data analysis network element, so that the SMF, the PCF, the service server, or the data analysis network element correspondingly adjusts a policy.

In a possible design, the terminal device determines, depending on whether the fifth indication information is received, whether to send the fourth indication information. To be specific, when the terminal device receives the fifth indication information and determines that any piece of obtained QoS description information is not met, the terminal device sends the fourth indication information; otherwise, does not send the fourth indication information.

The access network element may determine one piece of QoS description information from the second set of QoS description information sent by the terminal device, as the target QoS description information, so that the network or the terminal device executes a quality of service policy such as resource allocation, scheduling, or threshold control based on the target QoS description information.

In a possible implementation, if a parameter related to the access network element changes, for example, single-user resources are insufficient due to an increase in a quantity of users, a user corresponding to the service moves to a weak signal coverage area, or a period of time changes, the access network element no longer meets a QoS parameter requirement in the target QoS description information. The access network element may determine, through identification by the access network element or based on a QoS parameter requirement that is related to the access network element and that is identified by using the network element information set, parameter changes in the network that may cause the access network element to no longer meet the QoS parameter requirement in the target QoS description information. For example, in the foregoing example, the access network needs to first determine that a user resource requirement, a radio signal strength requirement, and a time period requirement are QoS parameter requirements for the access network element. The access network element can subsequently determine that when these actual parameters in a live network change, the access network element may no longer meet the QoS parameter requirement in the target QoS description information.

In a possible implementation, if the parameter corresponding to the access network element no longer meets the QoS parameter requirement in the target QoS description information, the access network element re-determines one piece of target QoS description information of the service from the at least one piece of QoS description information, where the parameter corresponding to the access network element meets a QoS parameter requirement for the access network element in the re-determined target QoS description information.

In a possible implementation, the access network element sends the re-determined target QoS description information to the core network element and/or the terminal device.

In a possible implementation, after the access network element re-determines one piece of QoS description information of the service from the at least one piece of QoS description information received by the access network element, the access network element may send first indication information to the core network element, where the first indication information is used to indicate that the access network element can no longer meet the target QoS description information and/or no longer meets a specific QoS parameter requirement in the target QoS description information. The core network element may correspondingly adjust a policy, for example, initiate a new round of QoS description information selection procedure. For example, when the access network can no longer meet a GFBR requirement in any piece of QoS description information, the access network element may set the first indication information to that the GFBR requirement is not met. Certainly, the access network element may not meet the quality of service requirement of the service because the access network element does not meet a plurality of QoS requirement parameters or does not meet a joint relationship requirement of a plurality of parameters. In this case, the access network element sets the first indication information based on an actual situation.

In a possible implementation, before the access network element sends the first indication information to the core network element, the access network element receives second indication information sent by the core network element, where the second indication information is used to instruct the access network element to send the first indication information when the access network element does not meet the target QoS description information.

In a possible implementation, when the access network element does not meet the quality of service requirement of the service, to be specific, when the access network element no longer meets the QoS parameter requirement in the target QoS description information and a related parameter updated by the access network element does not meet any one of the at least one piece of QoS description information, the access network element may send fourth indication information to the core network element, where the fourth indication information is used to indicate that the access network element does not meet the quality of service requirement of the service and/or indicate a specific QoS parameter requirement that is not met.

In a possible design, the access network element receives fifth indication information sent by the core network element, where the fifth indication information is used to instruct the access network element to send a fourth indication message to the core network element when the access network element does not meet the quality of service requirement of the service.

In a possible design, the access network element determines, depending on whether the fifth indication information is received, whether to send the fourth indication information. To be specific, when the terminal device receives the fifth indication information and determines that any piece of obtained QoS description information is not met, the terminal device sends the fourth indication information; otherwise, does not send the fourth indication information. The fifth indication information is used to instruct the access network element to send the fourth indication information when the access network element determines that the quality of service requirement of the service is not met. Herein, that the quality of service requirement of the service is not met may specifically mean that a QoS parameter requirement in any piece of received QoS description information is not met.

When the access network element no longer meets the quality of service requirement of the service, to be specific, when the access network element no longer meets the QoS parameter requirement in the target QoS description information and the related parameter updated by the access network element does not meet any one of the at least one piece of QoS description information, the access network element sends a handover request message to the core network element or sends redirection information to the terminal device, where the handover request message is used to hand over the terminal device to another access network element, and the redirection information is used to redirect the terminal device to another access network element.

In a possible implementation, the access network element receives third indication information sent by the core network element, where the third indication information is used to instruct the access network element to hand over or redirect the terminal device to the another access network element when the access network element determines that the quality of service requirement of the service is not met. That the quality of service requirement of the service is not met is that any one of the at least one piece of QoS description information is not met. The another access network element includes another access network element in a same network and another access network element in a different network. For example, when the access network element is an NG RAN in a 5G network, the NG RAN may trigger a handover of the terminal device to one of another NG RAN in the 5G network, an EUTRAN in the 5G network, an EUTRAN in a 4G network, a UTRAN in a 3G network, and a GERAN in a 2G network. In a possible implementation, before the access network element sends the handover request message or the redirection information, the access network element further needs to determine that the another access network element is an access network element that can meet a QoS parameter requirement in any one of at least one piece of QoS parameter information.

In a possible design manner, the access network element determines, depending on whether the third indication information is received from the core network element, whether to hand over or redirect the terminal device to the another access network element. To be specific, if the access network device obtains the third indication information sent by the core network element and the third indication information is used to instruct the access network element to hand over the terminal device to the another access network element when the access network element determines that the quality of service requirement of the service is not met, the access network element sends the handover request message; if the access network element obtains the third indication information sent by the core network element and the third indication information is used to instruct the access network element to redirect the terminal device to the another access network element when the access network element determines that the quality of service requirement of the service is not met, the access network device sends the redirection information; or if the access network element does not receive the third indication information, the access network element may not send the handover message and the redirection information.

210. In a possible implementation, when the access network element determines that a QoS parameter requirement set in any one of the at least one piece of QoS description information is not met, that is, when the access network element cannot determine the target QoS description information, the access network element sends fourth indication information to the AMF, where the fourth indication information is used to indicate that the access network element does not meet the quality of service requirement of the service and/or indicate a specific QoS parameter requirement that is not met.

For a specific method for setting the fourth indication information by the access network element, refer to the setting method of the first core network element in step 206. Details are not described herein again. It should be noted that, the fourth indication information sent by the access network element may be transferred by the AMF and the SMF to the PCF, or further sent by the PCF to the service server or the data analysis network element, so that the SMF, the PCF, the service server, or the data analysis network element correspondingly adjusts a policy subsequently.

In a possible design, the access network element determines, depending on whether the fifth indication information is received, whether to send the fourth indication information. To be specific, when the access network element receives the fifth indication information and determines that any piece of obtained QoS description information is not met, the access network element sends the fourth indication information; otherwise, does not send the fourth indication information.

211. The access network element allocates a radio resource to or executes a quality of service policy for the service based on the target QoS description information.

For example, the access network element may execute a quality of service policy such as resource allocation, scheduling, or threshold control based on the target QoS description information.

In a possible design, the access network element sends the target QoS description information to the core network element, the terminal device, and an application server that correspond to the service. The terminal device receives the target QoS description information sent by the access network element, and the terminal device determines a QoS parameter requirement for the terminal device based on the target QoS description information, and executes a corresponding QoS policy based on the QoS parameter requirement for the terminal device, for example, a GFBR, controlling a terminal device-aggregate maximum bit rate (UE-AMBR), or using a corresponding service flow processing priority. The core network element executes a quality of service policy such as resource allocation, scheduling, or threshold control based on the target QoS description information. The service server executes a corresponding quality of service policy based on the target QoS description information. The quality of service policy includes an application layer related policy, for example, selecting or adjusting a service coding scheme or adjusting an application layer buffer size.

212. The access network element sends the target QoS description information to the first core network element and/or the terminal device.

For example, the access network element may send an access network related resource establishment/update message to the terminal device, to send the target QoS description information to the terminal device, where the access network related resource establishment/update message includes the target QoS description information.

The terminal device receives the target QoS description information sent by the access network element, and the terminal device determines a QoS parameter requirement for the terminal device based on the target QoS description information, and executes a corresponding QoS policy based on the QoS parameter requirement for the terminal device, for example, a GFBR, controlling a terminal device-aggregate maximum bit rate (UE-AMBR), or using a corresponding service flow processing priority.

In a possible implementation, if a parameter related to the terminal device changes and consequently the terminal device determines that the QoS parameter requirement in the target QoS description information is no longer met, the terminal device sends first indication information to the access network element, where the first indication information is used to indicate that the terminal device cannot meet the QoS parameter requirement in the target QoS description information.

In a possible implementation, before the terminal device sends the first indication information to the SMF, the terminal device receives second indication information sent by the access network element, where the second indication information is used to instruct the terminal device to send the first indication information to the AMF when the target QoS description information is not met.

In a possible implementation, when the terminal device does not meet the quality of service requirement of the service, to be specific, when the terminal device no longer meets the QoS parameter requirement in the target QoS description information and a related parameter updated by the terminal device does not meet any one of the at least one piece of QoS description information, the terminal device may send fourth indication information to the service server or the second core network element, where the fourth indication information is used to indicate that the terminal device does not meet the quality of service requirement of the service and/or indicate a specific QoS parameter requirement that is not met.

In a possible design, the terminal device receives fifth indication information sent by the core network element, where the fifth indication information is used to instruct the terminal device to send a fourth indication message to the core network element when the terminal device does not meet the quality of service requirement of the service.

In a possible design, the terminal device determines, depending on whether the fifth indication information is received, whether to send the fourth indication information. To be specific, when the terminal device receives the fifth indication information and determines that any piece of obtained QoS description information is not met, the terminal device sends the fourth indication information; otherwise, does not send the fourth indication information.

In a possible implementation, the first core network element receives the target QoS description information sent by the access network element, and the second core network element executes a quality of service policy such as resource allocation, scheduling, or threshold control based on the target QoS description information.

In a possible implementation, if a parameter related to the first core network element changes and consequently the first core network element determines that the QoS parameter requirement in the target QoS description information is no longer met, the first core network element sends first indication information to the service server, the second core network element, or the access network element, where the first indication information is used to indicate that the first core network element cannot meet the QoS parameter requirement in the target QoS description information. The second core network element may correspondingly adjust a policy, for example, initiate a new round of QoS description information selection procedure.

In a possible implementation, before the first core network element sends the first indication information to the second core network element, the first core network element receives second indication information sent by the service server or the second core network element, where the second indication information is used to instruct the first core network element to send the first indication information to the service server, the second core network element, or the access network element when the first core network element does not meet the target QoS description information.

In a possible implementation, when the first core network element does not meet the quality of service requirement of the service, to be specific, when the first core network element no longer meets the QoS parameter requirement in the target QoS description information and a related parameter updated by the first core network element does not meet any one of the at least one piece of QoS description information, the first core network element may send fourth indication information to the service server or the second core network element, where the fourth indication information is used to indicate that the first core network element does not meet the quality of service requirement of the service and/or indicate a specific QoS parameter requirement that is not met.

In a possible design, the first core network element receives fifth indication information sent by the core network element, where the fifth indication information is used to instruct the first core network element to send a fourth indication message to the core network element when the first core network element does not meet the quality of service requirement of the service.

In a possible design, the first core network element determines, depending on whether the fifth indication information is received, whether to send the fourth indication information. To be specific, when the first core network element receives the fifth indication information and determines that any piece of obtained QoS description information is not met, the first core network element sends the fourth indication information; otherwise, does not send the fourth indication information.

213. The first core network element sends the target QoS description information to the third core network element or the service server.

The third core network element may execute a quality of service policy such as resource allocation, scheduling, or threshold control based on the target QoS description information. For a related action of the third core network element, refer to a related action of the first core network element in step 212. Details are not described herein again.

The service server of the service receives the target QoS description information sent by the first core network element, and the service server executes a corresponding quality of service policy based on the target QoS description information. The quality of service policy includes an application layer related policy, for example, selecting or adjusting a service coding scheme, adjusting an application layer buffer size, or setting a TCP sliding window.

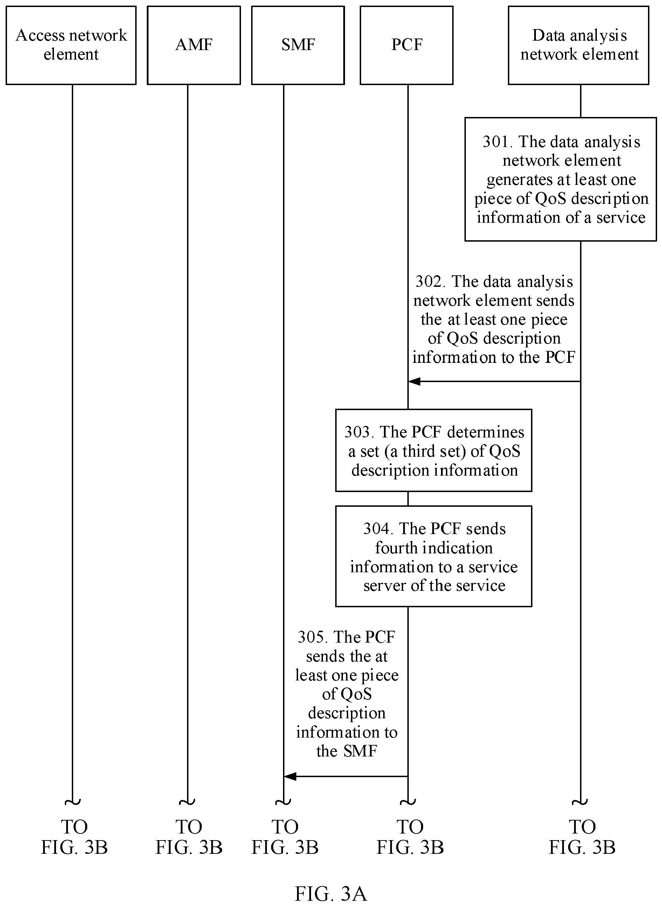

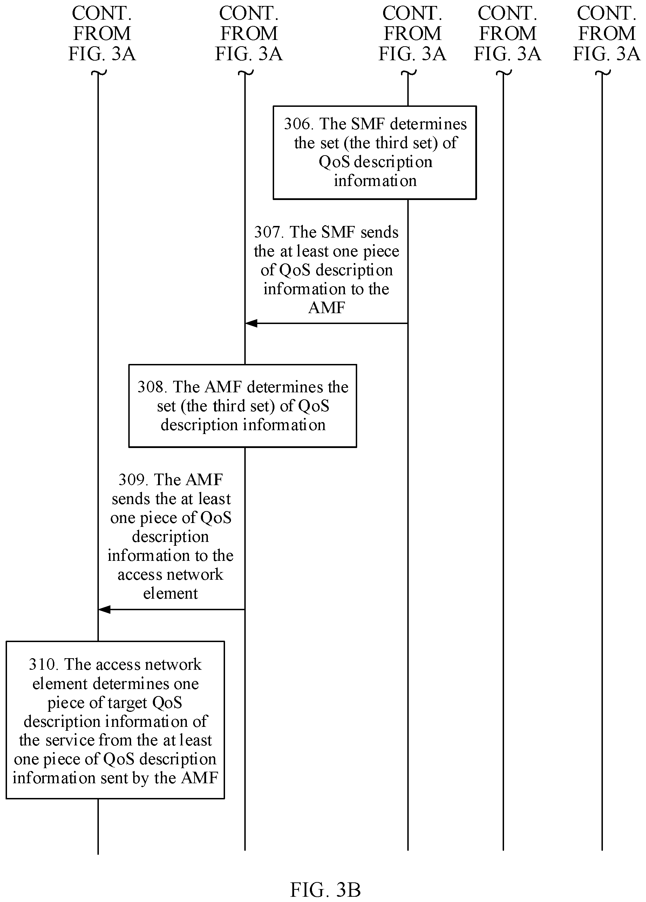

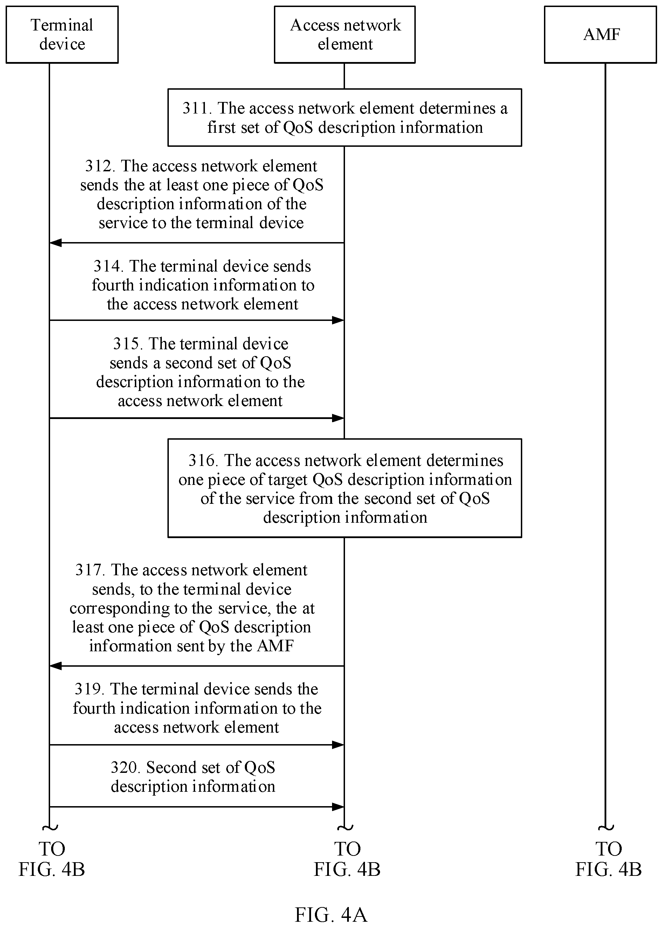

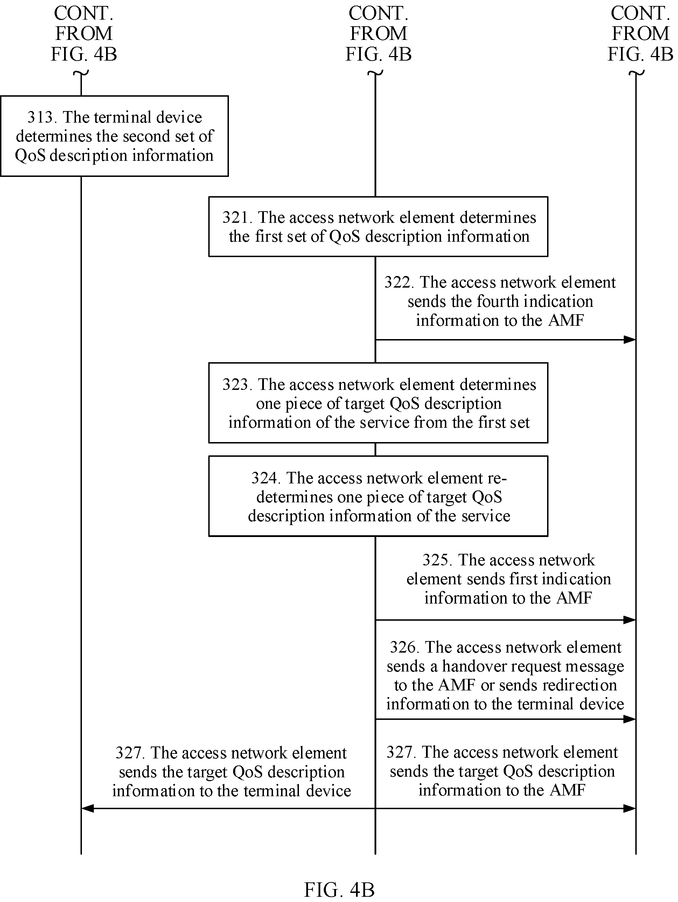

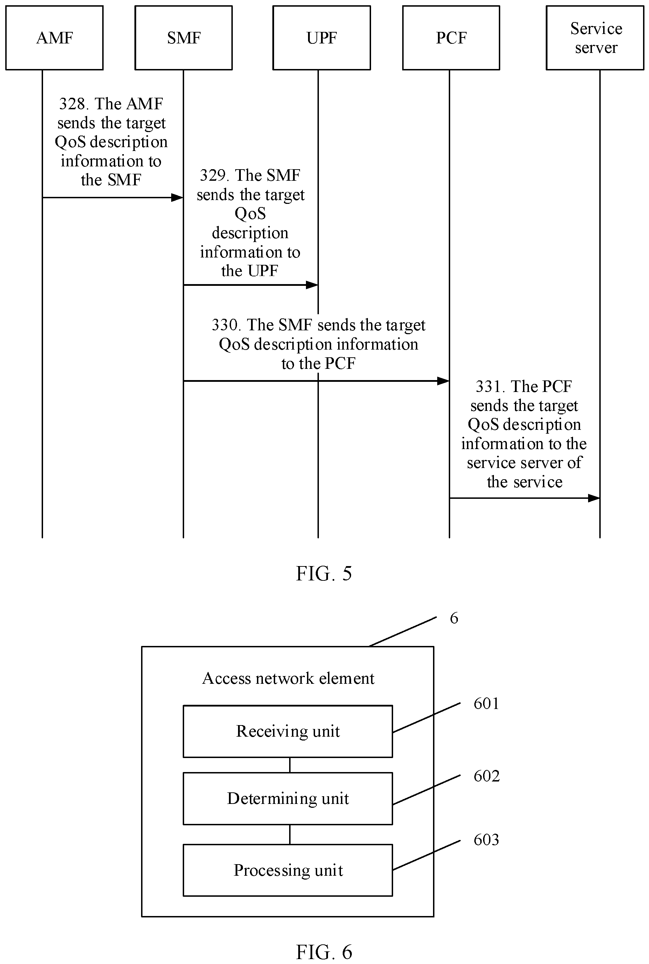

An embodiment of this application provides a resource allocation method, as shown in FIG. 3A and FIG. 3B to FIG. 5. FIG. 3A and FIG. 3B include steps 301 to 310, FIG. 4A and FIG. 4B include steps 311 to 327, and FIG. 5 includes steps 328 to 331. The resource allocation method includes a method for transmitting quality of service information of a service.

301. A data analysis network element generates at least one piece of QoS description information of a service.

For a specific process, refer to related descriptions of steps 201 and 202.

An example in which a first core network element is a PCF is used for description below.

302. The data analysis network element sends the at least one piece of QoS description information to the PCF.

For a specific process, refer to related descriptions of step 203.

303. The PCF determines a set (a third set) of QoS description information.

The PCF receives the at least one piece of QoS description information of the service that is sent by the data analysis network element.

The PCF determines the third set of QoS description information (namely, a set of QoS description information met by the PCF) from the at least one piece of QoS description information of the service that is sent by the data analysis network element, and the set of QoS description information met by the PCF includes some or all of the at least one piece of QoS description information. For a specific process in which the PCF determines the set of QoS description information met by the PCF, refer to step 205. Details are not described herein again.

When the PCF meets some or all of at least one piece of QoS parameter information, to be specific, when an access network element can determine the set of QoS description information met by the PCF from the at least one piece of QoS description information, the PCF performs step 305.

304. In a possible implementation, when it is determined that a parameter set corresponding to the PCF does not meet any one of the at least one piece of QoS description information, to be specific, when the PCF cannot determine the set of QoS description information met by the PCF, the PCF sends fourth indication information to a service server of the service, where the fourth indication information is used to indicate that a quality of service requirement of the service is not met and/or indicate a specific QoS parameter requirement that is not met.

For a specific process, refer to related descriptions of step 206. Details are not described herein again.

305. The PCF sends the at least one piece of QoS description information to an SMF

In a possible design, the at least one piece of QoS description information sent by the PDCT may be the set of QoS description information met by the PCF. For example, the PCF may send a policy control message to the SMF, where the policy control message includes the set of QoS description information met by the PCF.

In a possible design, before the PCF sends the set of QoS description information met by the PCF to the SMF, the PCF may send the set of QoS description information met by the PCF to the service server. For example, the PCF sends a policy authentication authorization message to the service server, where the policy authentication authorization message includes the set of QoS description information met by the PCF. The service server determines a set of QoS description information that can be met by the service server and feeds back the set to the PCF. For example, the service server sends a policy authentication authorization message to the PCF, where the policy authentication authorization message includes the set of QoS description information met by the PCF. The PCF sends, to the SMF, the set of QoS description information that can be met by the service server, as the set of QoS description information met by the PCF. For a method for determining, by the service server, the set of QoS description information met by the service server, refer to the determining method of the first core network element in step 205. Details are not described herein again.

In a possible implementation, if the PCF receives fifth indication information sent by the service server, the PCF may further send the fifth indication information to the SMF when sending the set of QoS description information met by the PCF to the SMF For the fifth indication information, refer to related descriptions of step 205.

In a possible implementation, if the PCF does not receive the fifth indication information sent by the service server, the PCF generates the fifth indication information, and may send the fifth indication information to the SMF when sending the set of QoS description information met by the PCF to the SMF.

An example in which the first core network element is the SMF, a second core network element is the PCF, and a third core network element is a UPF is used for description below.

306. The SMF determines the set (the third set) of QoS description information.

The SMF receives the at least one piece of QoS description information of the service that is sent by the PCF. In a possible implementation, the at least one piece of QoS description information received by the SMF may be the set of QoS description information met by the PCF.

The SMF determines the third set of QoS description information from the at least one piece of QoS description information sent by the PCF. The third set of QoS description information determined by the SMF may be a first QoS description information set met by the SMF, a second QoS description information set met by the SMF, or a third QoS description information set met by the SMF.

In a possible implementation, the SMF may directly determine the first QoS description information set met by the SMF from the at least one piece of received QoS description information of the service. For an operation method for determining the first QoS description information set met by the SMF, refer to the determining method of the first core network element in step 205. Details are not described herein again.

In another possible implementation, the SMF may first send the at least one piece of QoS description information of the service that is received by the SMF to the UPF. For example, the SMF sends an N4 interface session establishment/modification request message to the UPF, where the N4 interface session establishment/modification request message includes the at least one piece of QoS description information of the service. The UPF may filter the at least one piece of QoS description information of the service based on a QoS parameter requirement related to the UPF, to obtain a first QoS description information set met by the UPF, and feed back the first QoS description information set met by the UPF to the SMF. For example, the UPF sends an N4 interface session establishment/modification response message to the SMF, where the N4 interface session establishment/modification response message includes the QoS description information set met by the UPF. The SMF further determines, based on a QoS parameter requirement related to the SMF, the second QoS description information set met by the SMF in the first QoS description information set met by the UPF.

In another possible implementation, the SMF may send the first QoS description information set met by the SMF to the UPF. For example, the SMF sends an N4 interface session establishment/modification request message to the UPF, where the N4 interface session establishment/modification request message includes the first QoS description information set met by the SMF. The UPF may filter, based on the QoS parameter requirement related to the UPF, the first QoS description information set met by the SMF, to obtain a second QoS description information set met by the UPF, and feed back the second QoS description information set met by the UPF to the SMF. For example, the UPF sends an N4 interface session establishment/modification response message to the SMF, where the N4 interface session establishment/modification response message includes the second QoS description information set met by the UPF. The SMF uses the second QoS description information set met by the UPF, as the third QoS description information set met by the SMF.

In a possible implementation, if the SMF receives a network element information set and/or fifth indication information sent by the PCF, the SMF may further send the network element information set and/or the fifth indication information to the UPF when sending the at least one piece of QoS description information of the service or the first QoS description information set met by the SMF to the UPF. For an operation method for determining the met QoS description information by the UPF based on the network element information set, refer to the determining method of the first core network element in step 205. Details are not described herein again.

In a possible implementation, if the UPF determines that any piece of QoS description information received by the UPF is not met, the UPF may send fourth indication information to the SMF, where the fourth indication information is used to indicate that the UPF does not meet the quality of service requirement of the service and/or indicate a specific QoS parameter requirement that is not met. For a specific method for setting the fourth indication information by the UPF, refer to the setting method of the first core network element in step 206. Details are not described herein again. After the UPF sends the fourth indication information to the SMF, the SMF may send the fourth indication information to the PCF, or further send the fourth indication information to the service server through the PCF, so that the PCF or the service server correspondingly adjusts a policy subsequently.

In a possible design, the UPF determines, depending on whether the fifth indication information is received, whether to send the fourth indication information. To be specific, when the UPF receives the fifth indication information and determines that any piece of obtained QoS description information is not met, the UPF sends the fourth indication information; otherwise, does not send the fourth indication information.

In a possible implementation, when the SMF determines that a QoS parameter requirement set in any one of the at least one piece of QoS description information is not met, to be specific, when the SMF cannot determine the set of QoS description information met by the SMF, the SMF sends fourth indication information to the PCF, where the fourth indication information is used to indicate that the SMF does not meet the quality of service requirement of the service and/or indicate a specific QoS parameter requirement that is not met. For a specific method for setting the fourth indication information by the SMF, refer to the setting method of the first core network element in step 206. Details are not described herein again. After the SMF sends the fourth indication information to the PCF, the PCF may further send the fourth indication information to the service server, so that the PCF or the service server correspondingly adjusts a policy subsequently.

In a possible implementation, the SMF determines, depending on whether the fifth indication information is received, whether to send the fourth indication information. To be specific, when the SMF receives the fifth indication information and determines that any piece of obtained QoS description information is not met, the SMF sends the fourth indication information; otherwise, does not send the fourth indication information.

307. The SMF sends the at least one piece of QoS description information to an AMF

In a possible implementation, the at least one piece of QoS description information sent by the SMF to the AMF may include the third set of QoS description information determined by the SMF. The third set of QoS description information determined by the SMF may be the first QoS description information set met by the SMF, the second QoS description information set met by the SMF, or the third QoS description information set met by the SMF.

In a possible implementation, if the SMF receives the network element information set and/or the fifth indication information sent by the PCF, the SMF may further send the network element information set and/or the fifth indication information to the AMF when sending the QoS description information met by the SMF to the AMF For example, the SMF may send a session management context update response message or an N1N2 message direct transfer message to the AMF, where the session management context update response message or the N1N2 message direct transfer message includes the set of QoS description information met by the SMF.

An example in which the first core network element is the AMF and the second core network element is the SMF is used for description below.

308. The AMF determines the set (the third set) of QoS description information.

The AMF receives the at least one piece of QoS description information of the service that is sent by the SMF. The at least one piece of QoS description information of the service that is sent by the SMF may include the set of QoS description information met by the SMF. The set of QoS description information met by the SMF may be the first QoS description information set met by the SMF, the second QoS description information set met by the SMF, or the third QoS description information set met by the SMF.

In a possible implementation, the AMF receives, when receiving the at least one piece of QoS description information of the service that is sent by the SMF, the network element information set and/or the fifth indication information sent by the SMF.

For an operation method for determining the third set of QoS description information by the AMF, to be specific, determining, by the AMF, the set of QoS description information met by the AMF, refer to the determining method of the first core network element in step 205. Details are not described herein again.

In a possible implementation, when the AMF determines that a QoS parameter requirement set in any one of the at least one piece of QoS description information is not met, to be specific, when the AMF cannot determine the set of QoS description information met by the AMF, the AMF sends fourth indication information to the SMF, where the fourth indication information is used to indicate that the AMF does not meet the quality of service requirement of the service and/or indicate a specific QoS parameter requirement that is not met. For a specific method for setting the fourth indication information by the AMF, refer to the setting method of the first core network element in step 206. Details are not described herein again. It should be noted that, after the AMF sends the fourth indication information to the SMF, the SMF may send the fourth indication information to the PCF, or further send the fourth indication information to the service server through the PCF, so that the PCF or the service server correspondingly adjusts a policy subsequently.

In a possible design, the AMF determines, depending on whether the fifth indication information is received, whether to send the fourth indication information. To be specific, when the AMF receives the fifth indication information and determines that any piece of obtained QoS description information is not met, the AMF sends the fourth indication information; otherwise, does not send the fourth indication information.

309. The AMF sends the at least one piece of QoS description information to the access network element.

In a possible implementation, the at least one piece of QoS description information sent by the AMF may be the set of QoS description information met by the AMF. For example, the AMF sends an N2 interface message or an N2 interface session request message to the access network element, where the N2 interface message or the N2 interface session request message includes the set of QoS description information met by the AMF

In a possible implementation, if the AMF receives the network element information set and/or the fifth indication information sent by the SMF, the AMF may further send the network element information set and/or the fifth indication information to the access network element when sending the QoS description information met by the AMF to the access network element.

It should be noted that, after step 309, step 310 may be performed, or steps 311 to 316 may be performed, or steps 317 to 323 may be performed.

An example in which the core network element is the AMF is used for description below.

310. The access network element determines one piece of target QoS description information of the service from the at least one piece of QoS description information sent by the AMF

The access network element receives the at least one piece of QoS description information of the service that is sent by the AMF. The at least one piece of QoS description information of the service that is sent by the AMF may be the set of QoS description information met by the AMF

For a process in which the access network element determines the one piece of target QoS description information of the service, refer to related descriptions of step 209.

311. The access network element determines a first set of QoS description information.

For a specific process, refer to related descriptions of step 209.

312. The access network element sends the at least one piece of QoS description information of the service to a terminal device.

In a possible design, the at least one piece of QoS description information of the service that is sent by the access network element may be the first set of QoS description information met by the access network element.

313. The terminal device determines a second set of QoS description information, where the second set includes some or all of the at least one piece of QoS description information.

For a method for determining the second set by the terminal device, refer to the determining method of the first core network element in step 205. Details are not described herein again.

314. In a possible implementation, when the terminal device determines that a QoS parameter requirement set in any one of the at least one piece of QoS description information is not met, to be specific, when the terminal device cannot determine the second set of QoS description information met by the terminal device, the terminal device sends fourth indication information to the access network element, where the fourth indication information is used to indicate that the terminal device does not meet the quality of service requirement of the service and/or indicate a specific QoS parameter requirement that is not met.

It should be noted that, the fourth indication information may be transferred by the access network element, the AMF, and the SMF to the PCF or even the service server, so that the PCF or the service server correspondingly adjusts a policy. In this scenario, other steps in the following procedure may be ignored, and are not performed any longer.

In a possible design, the terminal device determines, depending on whether the fifth indication information is received, whether to send the fourth indication information. To be specific, when the terminal device receives the fifth indication information and determines that any piece of obtained QoS description information is not met, the terminal device sends the fourth indication information; otherwise, does not send the fourth indication information.

315. The terminal device sends the second set of QoS description information to the access network element.

For example, the terminal device sends an access network related resource establishment/update message to the access network element, where the access network related resource establishment/update message includes the second set.

316. The access network element determines one piece of target QoS description information of the service from the second set of QoS description information.

The access network element receives the second set of QoS description information sent by the terminal device.

The access network element may determine one piece of QoS description information from the second set of QoS description information, as the target QoS description information. For a method for determining the target QoS description information by the access network element, refer to related descriptions of step 209.

317. The access network element sends, to the terminal device corresponding to the service, the at least one piece of QoS description information sent by the AMF

For example, the access network element sends an access network related resource establishment/update message to the terminal device, where the access network related resource establishment/update message includes the at least one piece of QoS description information received from the AMF

In a possible implementation, if the access network element receives the network element information set and/or the fifth indication information sent by the AMF, the access network element may further send, when sending the at least one piece of QoS description information to the terminal device, the network element information set and/or the fifth indication information to the terminal device corresponding to the service.

318. The terminal device determines the second set of QoS description information, where the second set includes some or all of the at least one piece of QoS description information sent by the AMF.

For an operation method for determining the second set of QoS description information by the terminal device, refer to the determining method of the first core network element in step 205. Details are not described herein again.

319. In a possible implementation, when the terminal device determines that a QoS parameter requirement set in any one of the at least one piece of QoS description information is not met, to be specific, when the terminal device cannot determine the second set of QoS description information met by the terminal device, the terminal device sends fourth indication information to the access network element.

For a specific process, refer to related descriptions of step 314.

320. The terminal device sends the second set of QoS description information to the access network element.

For example, the terminal device sends an access network related resource establishment/update message to the access network element, where the access network related resource establishment/update message includes the at least one piece of QoS description information received from the AMF.

321. The access network element determines the first set of QoS description information.

The access network element receives the second set of QoS description information sent by the terminal device.

In a possible implementation, the access network element determines the first set of QoS description information from the second set of QoS description information, to be specific, determines the set of QoS description information met by the access network element. For a method for determining the first set of QoS description information by the access network element, refer to the determining method of the first core network element in step 205. Details are not described herein again.

322. In a possible implementation, when the access network element determines that a QoS parameter requirement set in any piece of QoS description information in the second set of QoS description information is not met, to be specific, when the access network element cannot determine the first set of QoS description information met by the access network element, the access network element sends fourth indication information to the AMF, where the fourth indication information is used to indicate that the access network element does not meet the quality of service requirement of the service and/or indicate a specific QoS parameter requirement that is not met.

It should be noted that, the access network element may send the fourth indication information to the SMF through the AMF. The AMF achieves a function of transparently transmitting the fourth indication information, to be specific, the AMF does not parse the fourth indication information. Further, the fourth indication information may be transferred by the access network element, the AMF, and the SMF to the PCF or even the service server, so that the PCF or the service server correspondingly adjusts a policy. If the access network element determines that a QoS parameter requirement set in any piece of QoS description information in the third set is not met, other steps in the following procedure may be ignored, and are not performed any longer.

In a possible design, the access network element determines, depending on whether the fifth indication information is received, whether to send the fourth indication information. To be specific, when the access network element receives the fifth indication information and determines that any piece of obtained QoS description information is not met, the access network element sends the fourth indication information; otherwise, does not send the fourth indication information.

323. The access network element determines one piece of target QoS description information of the service from the first set.

For a specific process, refer to related descriptions of step 209.

If a parameter related to the access network element changes, for example, single-user resources are insufficient due to an increase in a quantity of users, a user corresponding to the service moves to a weak signal coverage area, or a period of time changes, the access network element no longer meets a QoS parameter requirement in the target QoS description information. The access network element may determine, through identification by the access network element or based on a QoS parameter requirement that is related to the access network element and that is identified by using the network element information set, parameter changes in the network that may cause the access network element to no longer meet the QoS parameter requirement in the target QoS description information. For example, in the foregoing example, the access network needs to first determine that a user resource requirement, a radio signal strength requirement, and a time period requirement are QoS parameter requirements for the access network element. The access network element can subsequently determine that when these actual parameters in a live network change, the access network element may no longer meet the QoS parameter requirement in the target QoS description information.

When the parameter related to the access network element changes, the access network element may perform step 324, 325, or 326.

324. The access network element re-determines one piece of target QoS description information of the service.

The access network element may re-determine one piece of target QoS description information of the service from the at least one piece of QoS description information sent by the AMF. For a specific process, refer to the foregoing related descriptions.

An example in which the core network element is the AMF is used for description below.

325. When a current value of a parameter corresponding to the access network element can no longer meet a QoS parameter requirement set in the target QoS description information, the access network element sends first indication information to the AMF

Specifically, when the current value of the parameter corresponding to the access network element does not meet some or all QoS parameter requirements in the target QoS description information, the access network element sends the first indication information to the AMF, where the first indication information is used to indicate that the target QoS description information is not met and/or the access network element does not meet the QoS parameter requirement in the target QoS description information.

The access network element receives second indication information sent by the core network element, where the second indication information is used to instruct the access network element to send the first indication message to the core network element when the access network element no longer meets the target QoS description information of the service.

In a possible implementation, when the access network element does not meet the quality of service requirement of the service, to be specific, when the access network element no longer meets the QoS parameter requirement in the target QoS description information and a related parameter updated by the access network element does not meet any one of the at least one piece of QoS description information, the access network element may send fourth indication information to the AMF, where the fourth indication information is used to indicate that the access network element does not meet the quality of service requirement of the service and/or a specific QoS parameter requirement that is not met.

In a possible design, the access network element receives fifth indication information sent by the AMF, where the fifth indication information is used to instruct the access network element, to send a fourth indication message to the core network element when the access network element does not meet the quality of service requirement of the service.

In a possible design, the access network element determines, depending on whether the fifth indication information is received, whether to send the fourth indication information. To be specific, when the access network element receives the fifth indication information and determines that any piece of obtained QoS description information is not met, the access network element sends the fourth indication information; otherwise, does not send the fourth indication information.

326. When the current value of the parameter corresponding to the access network element can no longer meet a QoS parameter requirement set in any one of the at least one piece of QoS description information, the access network element sends a handover request message to the AMF or sends redirection information to the terminal device, where the handover request message is used to hand over the terminal device to another access network element, and the redirection information is used to redirect the terminal device to another access network element.

The another access network element includes another access network element in a same network and another access network element in a different network. For example, when the access network element is an NG RAN in a 5G network, the NG RAN may trigger a handover of the terminal device to one of another NG RAN in the 5G network, an EUTRAN in the 5G network, an EUTRAN in a 4G network, a UTRAN in a 3G network, and a GERAN in a 2G network. In a possible implementation, before the access network element sends the handover request message or the redirection information, the access network element further needs to determine that the another access network element is an access network element that can meet a QoS parameter requirement in any one of at least one piece of QoS parameter information.

In a possible implementation, the access network element receives the third indication information sent by the AMF, where the third indication information is used to instruct the access network element to hand over or redirect the terminal device to the another access network element when the access network element determines that the quality of service requirement of the service is not met. That the quality of service requirement of the service is not met is that any one of the at least one piece of QoS description information is not met.

In a possible design manner, the access network element determines, depending on whether the third indication information is received from the AMF, whether to hand over or redirect the terminal device to the another access network element. To be specific, if the access network device obtains the third indication information sent by the AMF and the third indication information is used to instruct the access network element to hand over the terminal device to the another access network element when the access network element determines that the quality of service requirement of the service is not met, the access network element sends the handover request message; if the access network element obtains the third indication information sent by the AMF and the third indication information is used to instruct the access network element to redirect the terminal device to the another access network element when the access network element determines that the quality of service requirement of the service is not met, the access network device sends the redirection information; or if the access network element does not receive the third indication information, the access network element may not send the handover message and the redirection information.

327. The access network element sends the target QoS description information to the AMF and/or the terminal device.

For example, the access network element may send an access network related resource establishment/update message to the terminal device, to send the target QoS description information to the terminal device, where the access network related resource establishment/update message includes the target QoS description information.

The terminal device receives the target QoS description information sent by the access network element, and the terminal device determines a QoS parameter requirement for the terminal device based on the target QoS description information, and executes a corresponding QoS policy based on the QoS parameter requirement for the terminal device, for example, a GFBR, controlling a terminal device-aggregate maximum bit rate (UE-AMBR), or using a corresponding service flow processing priority.

In a possible implementation, if a parameter related to the terminal device changes and consequently the terminal device determines that the QoS parameter requirement in the target QoS description information is no longer met, the terminal device sends first indication information to the AMF, where the first indication information is used to indicate that the terminal device cannot meet the QoS parameter requirement in the target QoS description information. The AMF may send the first indication information received from the terminal device to the SMF, and the SMF may send the first indication information received from the terminal device to the PCF, so that the PCF correspondingly adjusts a policy subsequently, for example, initiates a new round of QoS description information selection procedure.

In a possible implementation, before the terminal device sends the first indication information to the SMF, the terminal device receives second indication information sent by the AMF, where the second indication information is used to instruct the terminal device to send the first indication information to the AMF when the target QoS description information is not met. The second indication information sent by the AMF may be sent by the SMF.

In a possible implementation, if the parameter related to the terminal device changes and consequently the terminal device determines that the QoS parameter requirement in the target QoS description information is no longer met, the terminal device may re-determine, from the at least one piece of received QoS description information, a set of QoS description information met by the terminal device, and may send the set to the access network element.

For example, the access network element may send the N2 interface message or an N2 interface session response message to the AMF, where the N2 interface message or the N2 interface session response message includes the target QoS description information. The AMF receives the target QoS description information sent by the access network element, and the AMF executes a quality of service policy such as resource allocation, scheduling, or threshold control based on the target QoS description information.

It should be noted that, in a scenario in which the access network element may send the target QoS description information to the SMF through the AMF, the AMF achieves a function of transparently transmitting the target QoS description information, to be specific, the AMF does not parse the target QoS description information.

In a possible implementation, if a parameter related to the AMF changes and consequently the AMF determines that the QoS parameter requirement in the target QoS description information is no longer met, the AMF sends first indication information to the SMF, where the first indication information is used to indicate that the AMF cannot meet the QoS parameter requirement in the target QoS description information. The second core network element may correspondingly adjust a policy, for example, initiate a new round of QoS description information selection procedure.

In a possible implementation, before the AMF sends the first indication information to the second core network element, the AMF receives second indication information sent by the service server or the second core network element, where the second indication information is used to instruct the AMF to send the first indication information to the SMF when the AMF does not meet the target QoS description information.

In a possible implementation, when the AMF does not meet the quality of service requirement of the service, to be specific, when the AMF no longer meets the QoS parameter requirement in the target QoS description information and a related parameter updated by the AMF does not meet any one of the at least one piece of QoS description information, the AMF may send fourth indication information to the SMF, where the fourth indication information is used to indicate that the AMF does not meet the quality of service requirement of the service and/or indicate a specific QoS parameter requirement that is not met.

In a possible design, the AMF receives fifth indication information sent by the SMF, where the fifth indication information is used to instruct the AMF to send a fourth indication message to the SMF when the AMF does not meet the quality of service requirement of the service.

In a possible design, the AMF determines, depending on whether the fifth indication information is received, whether to send the fourth indication information. To be specific, when the AMF receives the fifth indication information and determines that any piece of obtained QoS description information is not met, the AMF sends the fourth indication information; otherwise, does not send the fourth indication information.

An example in which the first core network element is the AMF and the second core network element is the SMF is used for description below.

328. The AMF sends the target QoS description information to the SMF.

For example, the AMF sends a session management context request message or an N1N2 message direct transfer message to the SMF, where the session management context request message or the N1N2 message direct transfer message includes the target QoS description information.

The SMF executes a quality of service policy such as resource allocation, scheduling, or threshold control based on the target QoS description information.

In a possible implementation, if a parameter related to the SMF changes and consequently the SMF determines that the QoS parameter requirement in the target QoS description information is no longer met, the SMF sends first indication information to the PCF, where the first indication information is used to indicate that the SMF cannot meet the QoS parameter requirement in the target QoS description information. The PCF may correspondingly adjust a policy, for example, initiate a new round of QoS description information selection procedure.

In a possible implementation, before the SMF sends the first indication information to the second core network element, the SMF receives second indication information sent by the PCF, where the second indication information is used to instruct the SMF to send the first indication information to the service server or the PCF when the SMF does not meet the target QoS description information.

In a possible implementation, when the SMF does not meet the quality of service requirement of the service, to be specific, when the SMF no longer meets the QoS parameter requirement in the target QoS description information and a related parameter updated by the SMF does not meet any one of the at least one piece of QoS description information, the SMF may send fourth indication information to the PCF, where the fourth indication information is used to indicate that the SMF does not meet the quality of service requirement of the service and/or indicate a specific QoS parameter requirement that is not met.

In a possible design, the SMF receives fifth indication information sent by the PCF, where the fifth indication information is used to instruct the SMF to send a fourth indication message to the PCF when the SMF does not meet the quality of service requirement of the service.

In a possible design, the SMF determines, depending on whether the fifth indication information is received, whether to send the fourth indication information. To be specific, when the SMF receives the fifth indication information and determines that any piece of obtained QoS description information is not met, the SMF sends the fourth indication information; otherwise, does not send the fourth indication information.

An example in which the first core network element is the SMF and the second core network element is the UPF is used for description below.

329. The SMF sends the target QoS description information to the UPF.

For example, the SMF may send an N4 interface session establishment/modification request message to the UPF, to send the target QoS description information to the UPF, where the N4 interface session establishment/modification request message includes the target QoS description information.

The UPF executes a quality of service policy such as resource allocation, scheduling, or threshold control based on the target QoS description information.

In a possible implementation, if a parameter related to the UPF changes and consequently the UPF determines that the QoS parameter requirement in the target QoS description information is no longer met, the UPF sends first indication information to the SMF, where the first indication information is used to indicate that the UPF cannot meet the QoS parameter requirement in the target QoS description information. For example, the UPF may send an N4 interface session establishment/modification response message to the SMF, to send the first indication information to the SMF, where the N4 interface session establishment/modification response message includes the first indication information. The SMF may send the first indication information received from the UPF to the PCF, so that the PCF correspondingly adjusts a policy subsequently, for example, initiates a new round of QoS description information selection procedure.

In a possible implementation, before the UPF sends the first indication information to the SMF, the UPF receives second indication information sent by the SMF, where the second indication information is used to instruct the UPF to send the first indication information when the UPF does not meet the target QoS description information. The UPF determines, based on the second indication information, to send the first indication information. For example, the UPF obtains the second indication information by receiving the N4 interface session establishment/modification request message sent by the SMF. The second indication information sent by the SMF may be sent by the PCF.

In a possible implementation, when the UPF does not meet the quality of service requirement of the service, to be specific, when the UPF no longer meets the QoS parameter requirement in the target QoS description information and a related parameter updated by the UPF does not meet any one of the at least one piece of QoS description information, the UPF may send fourth indication information to the SMF, where the fourth indication information is used to indicate that the UPF does not meet the quality of service requirement of the service and/or indicate a specific QoS parameter requirement that is not met.

In a possible design, the UPF receives fifth indication information sent by the SMF, where the fifth indication information is used to instruct the UPF to send a fourth indication message to the core network element when the UPF does not meet the quality of service requirement of the service.

In a possible design, the UPF determines, depending on whether the fifth indication information is received, whether to send the fourth indication information. To be specific, when the UPF receives the fifth indication information and determines that any piece of obtained QoS description information is not met, the UPF sends the fourth indication information; otherwise, does not send the fourth indication information.

An example in which the first core network element is the SMF and the second core network element is the PCF is used for description below.

330. The SMF sends the target QoS description information to the PCF.

For example, the SMF sends a policy control message to the PCF, where the policy control message includes the target QoS description information.

The PCF receives the target QoS description information sent by the SMF, and the PCF executes a quality of service policy such as resource allocation, scheduling, or threshold control based on the target QoS description information.

In a possible implementation, if a parameter related to the PCF changes and consequently the PCF determines that the QoS parameter requirement in the target QoS description information is no longer met, the PCF sends first indication information to the service server, the data analysis network element, or the access network element, where the first indication information is used to indicate that the PCF cannot meet the QoS parameter requirement in the target QoS description information. The second core network element may correspondingly adjust a policy, for example, initiate a new round of QoS description information selection procedure.

In a possible implementation, before the PCF sends the first indication information to the second core network element, the PCF receives second indication information sent by the service server or the second core network element, where the second indication information is used to instruct the PCF to send the first indication information to the service server, the data analysis network element, or the access network element when the PCF does not meet the target QoS description information.

In a possible implementation, if a parameter related to the network element (the AN, the AMF, the SMF, the UPF, or the PCF) changes and consequently the PCF determines that the QoS parameter requirement in the target QoS description information is no longer met, the PCF sends fourth indication information to the service server of the service, where the fourth indication information is used to indicate that the network no longer meets the QoS parameter requirement in the target QoS description information, so that the service server stops, based on the fourth indication information, execution of a quality of service policy corresponding to the target QoS description information, and further the service server adjusts the corresponding quality of service policy based on the fourth indication information. The quality of service policy includes an application layer related policy, for example, a service coding scheme, an application layer buffer size, or a TCP sliding window.

In a possible implementation, before the PCF sends the fourth indication information to the service server of the service, the PCF receives fifth indication information sent by the service server, where the fifth indication information is used to instruct the PCF to send the fifth indication information to the service server when the PCF no longer meets the target QoS description information.

In a possible design, the PCF determines, depending on whether the fifth indication information is received, whether to send the fourth indication information. To be specific, when the PCF receives the fifth indication information and determines that any piece of obtained QoS description information is not met, the PCF sends the fourth indication information; otherwise, does not send the fourth indication information.

An example in which the first core network element is the PCF is used for description below.

331. The PCF sends the target QoS description information to the service server of the service.

For example, the PCF sends a policy authentication authorization message to the service server, where the policy authentication authorization message includes the target QoS description information.

The service server of the service receives the target QoS description information sent by the PCF, and the service server executes a corresponding quality of service policy based on the target QoS description information. The quality of service policy includes an application layer related policy, for example, selecting or adjusting a service coding scheme, adjusting an application layer buffer size, or setting a TCP sliding window.

The solutions provided in the embodiments of this application are described above mainly from a perspective of the access network element, the terminal device, the first core network element, the data analysis network element, and the service server. It may be understood that, to implement the foregoing functions, the access network element, the terminal device, the first core network element, the data analysis network element, and the service server include corresponding hardware structures and/or software modules for performing the functions. A person skilled in the art should easily be aware that, in combination with the algorithm steps described in the embodiments disclosed in this specification, this application may be implemented by hardware or a combination of hardware and computer software.

Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In the embodiments of this application, functional modules of the access network element, the terminal device, the first core network element, the data analysis network element, and the service server may be divided according to the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that the module division in the embodiments of this application is an example, and is merely logical function division, and there may be other division manners in actual implementation.

When the functional modules are obtained through division based on corresponding functions, FIG. 6 is a possible schematic structural diagram of an access network element 6 in the foregoing embodiment. The access network element includes a receiving unit 601, a determining unit 602, and a processing unit 603. In this embodiment of this application, the receiving unit 601 may be configured to receive at least one piece of quality of service QoS description information of a service that is sent by a core network element; the determining unit 602 may be configured to determine one piece of target QoS description information of the service from the at least one piece of QoS description information; and the processing unit 603 may be configured to allocate a radio resource and/or execute a quality of service policy to/for the service based on the target QoS description information. All related content of the steps in the method embodiment shown in FIG. 2A and FIG. 2B or FIG. 3A and FIG. 3B to FIG. 5 may be cited in function descriptions of corresponding functional modules. Details are not described herein again.

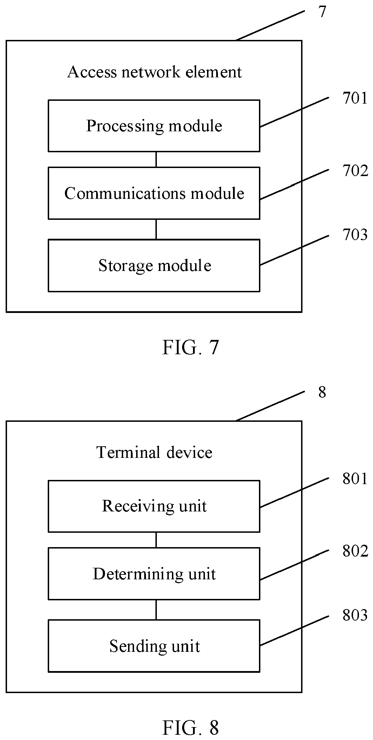

When an integrated unit is used, FIG. 7 is a possible schematic structural diagram of an access network element in the foregoing embodiment. In this application, the access network element may include a processing module 701, a communications module 702, and a storage module 703. The processing module 701 is configured to control hardware apparatuses, application program software, and the like of various parts of the access network element. The communications module 702 is configured to accept, in a communication manner such as wireless fidelity (Wireless Fidelity, WiFi), an instruction sent by another device, or send data of the access network element to another device. The storage module 703 is configured to store a software program of the access network element, store data, run software, and so on. The processing module 701 may be a determining unit or a controller, such as a central determining unit (Central Processing Unit, CPU), a general-purpose determining unit, a digital signal determining unit (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processing module 701 may implement or execute various example logical blocks, modules, and circuits described with reference to content disclosed in this application. Alternatively, the determining unit may be a combination that implements a computing function, for example, a combination that includes one or more micro determining units, or a combination of a DSP and a micro determining unit. The communications module 702 may be a transceiver, a transceiver circuit, a communications interface, or the like. The storage module 703 may be a memory.

When the functional modules are obtained through division based on corresponding functions, FIG. 8 is a possible schematic structural diagram of a terminal device 8 in the foregoing embodiment. The terminal device includes a receiving unit 801, a determining unit 802, and a sending unit 803. In this embodiment of this application, the receiving unit 801 may be configured to receive at least one piece of quality of service QoS description information of a service that is sent by an access network element; the determining unit 802 may be configured to determine a second set of QoS description information, where the second set of QoS description information includes some or all of the at least one piece of QoS description information; and the sending unit 803 may be configured to send the second set of QoS description information to the access network element. All related content of the steps in the method embodiment shown in FIG. 2A and FIG. 2B or FIG. 3A and FIG. 3B to FIG. 5 may be cited in function descriptions of corresponding functional modules. Details are not described herein again.

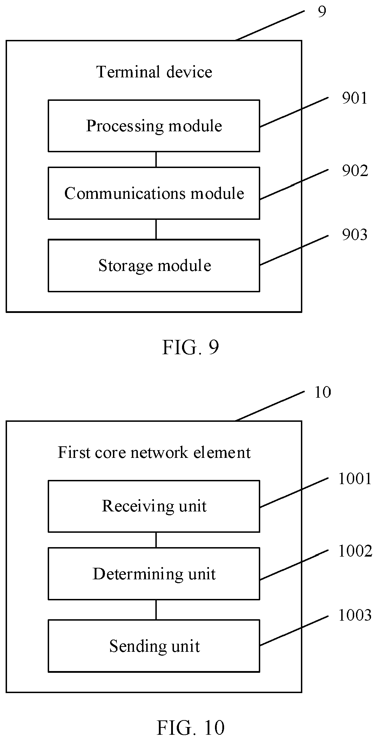

When an integrated unit is used, FIG. 9 is a possible schematic structural diagram of a terminal device in the foregoing embodiment. In this application, the terminal device may include a processing module 901, a communications module 902, and a storage module 903. The processing module 901 is configured to control hardware apparatuses, application program software, and the like of various parts of the terminal device. The communications module 902 is configured to accept, in a communication manner such as Wi-Fi, an instruction sent by another device, or send data of the terminal device to another device. The storage module 903 is configured to store a software program of the terminal device, store data, run software, and so on. The processing module 901 may be a determining unit or a controller, such as a CPU, a general-purpose determining unit, a DSP, an ASIC, an FPGA, or another programmable logic device, a transistor logic device, a hardware component, or any combination thereof. The processing module 901 may implement or execute various example logical blocks, modules, and circuits described with reference to content disclosed in this application. Alternatively, the determining unit may be a combination that implements a computing function, for example, a combination that includes one or more micro determining units, or a combination of a DSP and a micro determining unit. The communications module 902 may be a transceiver, a transceiver circuit, a communications interface, or the like. The storage module 903 may be a memory.

When the functional modules are obtained through division based on corresponding functions, FIG. 10 is a possible schematic structural diagram of a first core network element 10 in the foregoing embodiment. The first core network element includes a receiving unit 1001, a determining unit 1002, and a sending unit 1003. In this embodiment of this application, the receiving unit 1001 may be configured to receive at least one piece of QoS description information of a service that is sent by a data analysis network element, a second core network element, or a service server of the service; the determining unit 1002 may be configured to determine a third set of QoS description information, where the third set includes some or all of the at least one piece of QoS description information; and the sending unit 1003 may be configured to send the third set of QoS description information to a third core network element or an access network element. All related content of the steps in the method embodiment shown in FIG. 2A and FIG. 2B or FIG. 3A and FIG. 3B to FIG. 5 may be cited in function descriptions of corresponding functional modules. Details are not described herein again.

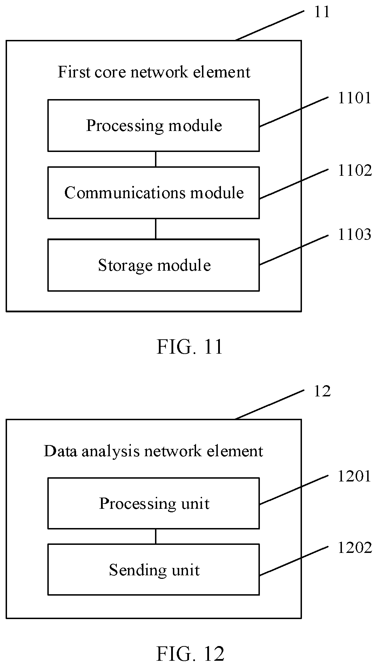

When an integrated unit is used, FIG. 11 is a possible schematic structural diagram of a first core network element in the foregoing embodiment. In this application, the first core network element may include a processing module 1101, a communications module 1102, and a storage module 1103. The processing module 1101 is configured to control hardware apparatuses, application program software, and the like of various parts of the first core network element. The communications module 1102 is configured to accept, in a communication manner such as Wi-Fi, an instruction sent by another device, or send data of the first core network element to another device. The storage module 1103 is configured to store a software program of the first core network element, store data, run software, and so on. The processing module 1101 may be a determining unit or a controller, such as a CPU, a general-purpose determining unit, a DSP, an ASIC, an FPGA, or another programmable logic device, a transistor logic device, a hardware component, or any combination thereof. The processing module 1101 may implement or execute various example logical blocks, modules, and circuits described with reference to content disclosed in this application. Alternatively, the determining unit may be a combination that implements a computing function, for example, a combination that includes one or more micro determining units, or a combination of a DSP and a micro determining unit. The communications module 1102 may be a transceiver, a transceiver circuit, a communications interface, or the like. The storage module 1103 may be a memory.

When the functional modules are obtained through division based on corresponding functions, FIG. 12 is a possible schematic structural diagram of a data analysis network element 12 in the foregoing embodiment. The data analysis network element includes a processing unit 1201 and a sending unit 1202. In this embodiment of this application, the processing unit 1201 may be configured to generate at least one piece of quality of service QoS description information of a service; and the sending unit 1202 sends the at least one piece of QoS description information to a core network element or a service server of the service, where each of the at least one piece of QoS description information includes network element information, and the network element information is used to indicate a network element corresponding to at least one QoS parameter requirement in a QoS parameter requirement set. All related content of the steps in the method embodiment shown in FIG. 2A and FIG. 2B or FIG. 3A and FIG. 3B to FIG. 5 may be cited in function descriptions of corresponding functional modules. Details are not described herein again.

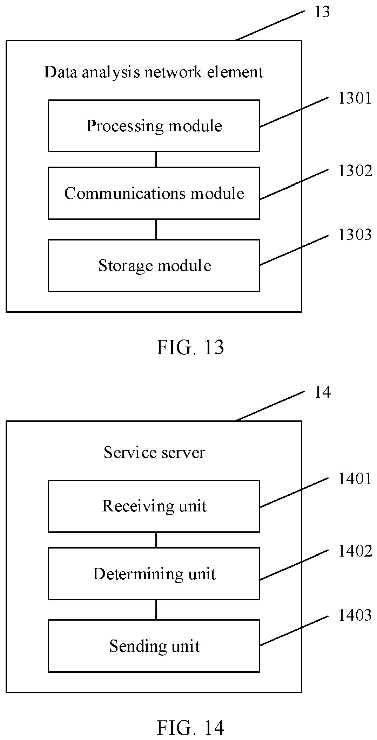

When an integrated unit is used, FIG. 13 is a possible schematic structural diagram of a data analysis network element in the foregoing embodiment. In this application, the data analysis network element may include a processing module 1301, a communications module 1302, and a storage module 1303. The processing module 1301 is configured to control hardware apparatuses, application program software, and the like of various parts of the data analysis network element. The communications module 1302 is configured to accept, in a communication manner such as Wi-Fi, an instruction sent by another device, or send data of the data analysis network element to another device. The storage module 1303 is configured to store a software program of the data analysis network element, store data, run software, and so on. The processing module 1301 may be a determining unit or a controller, such as a CPU, a general-purpose determining unit, a DSP, an ASIC, an FPGA, or another programmable logic device, a transistor logic device, a hardware component, or any combination thereof. The processing module 1301 may implement or execute various example logical blocks, modules, and circuits described with reference to content disclosed in this application. Alternatively, the determining unit may be a combination that implements a computing function, for example, a combination that includes one or more micro determining units, or a combination of a DSP and a micro determining unit. The communications module 1302 may be a transceiver, a transceiver circuit, a communications interface, or the like. The storage module 1303 may be a memory.

When the functional modules are obtained through division based on corresponding functions, FIG. 14 is a possible schematic structural diagram of a service server 14 in the foregoing embodiment. The service server includes a receiving unit 1401, a determining unit 1402, and a sending unit 1403. In this embodiment of this application, the receiving unit 1401 may be configured to receive at least one piece of QoS description information of a service that is sent by a first core network element; the determining unit 1402 may be configured to determine a second set of QoS description information, where the second set includes some or all of the at least one piece of QoS description information; and the sending unit 1403 may be configured to send the second set to the first core network element. All related content of the steps in the method embodiment shown in FIG. 2A and FIG. 2B or FIG. 3A and FIG. 3B to FIG. 5 may be cited in function descriptions of corresponding functional modules. Details are not described herein again.

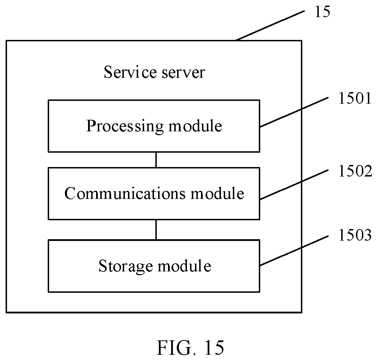

When an integrated unit is used, FIG. 15 is a possible schematic structural diagram of a service server in the foregoing embodiment. In this application, the service server may include a processing module 1501, a communications module 1502, and a storage module 1503. The processing module 1501 is configured to control hardware apparatuses, application program software, and the like of various parts of the service server. The communications module 1502 is configured to accept, in a communication manner such as Wi-Fi, an instruction sent by another device, or send data of the service server to another device. The storage module 1503 is configured to store a software program of the service server, store data, run software, and so on. The processing module 1501 may be a determining unit or a controller, such as a CPU, a general-purpose determining unit, a DSP, an ASIC, an FPGA, or another programmable logic device, a transistor logic device, a hardware component, or any combination thereof. The processing module 1501 may implement or execute various example logical blocks, modules, and circuits described with reference to content disclosed in this application. Alternatively, the determining unit may be a combination that implements a computing function, for example, a combination that includes one or more micro determining units, or a combination of a DSP and a micro determining unit. The communications module 1502 may be a transceiver, a transceiver circuit, a communications interface, or the like. The storage module 1503 may be a memory.

A person skilled in the art should be aware that in the foregoing one or more examples, the functions described in this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer storage medium and a communications medium, where the communications medium includes any medium that facilitates transmission of a computer program from one place to another. The storage medium may be any available medium accessible to a general-purpose or special-purpose computer.

The objectives, technical solutions, and beneficial effects of this application are further described in detail in the foregoing specific embodiments. It should be understood that the foregoing descriptions are merely specific embodiments of this application, but are not intended to limit the protection scope of this application. Any modification, equivalent replacement, improvement, or the like made based on the technical solutions of this application shall fall within the protection scope of this application.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a magnetic disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a determining unit of another programmable data processing device to generate a machine, so that the instructions executed by the computer or the determining unit of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Definitely, a person skilled in the art can make various modifications and variations to the embodiments of this application without departing from and scope of this application. This application is also intended to cover these modifications and variations to the embodiments of this application provided that they fall within the scope of the claims of this application and their equivalent technologies.

In addition, this application further provides the following embodiments. A network element in the following embodiments may be a corresponding network element in the foregoing embodiments. For example, an access network element may be the foregoing access network element, a policy control function network element may include but is not limited to the foregoing PCF network element, a session management function network element may include but is not limited to the foregoing SMF network element, a user plane function network element may include but is not limited to the foregoing UPF network element, a service server may be the foregoing service server, a terminal device may be the foregoing terminal device, and a data analysis network element may be the foregoing data analysis network element.

It should be noted that, a name of information in the following embodiments is not limited in this application. In other words, information having a same name in the following embodiments and the foregoing embodiments may be same information, or may be different information. This is not limited herein. For example, at least one piece of first QoS description information in the following embodiments may be the third set of QoS description information determined by the PCF in the foregoing embodiments. At least one piece of second QoS description information in the following embodiments may be the third set of QoS description information determined by the SMF network element/the UPF network element in the foregoing embodiments. Target QoS description information in the following embodiments may be the target QoS description information determined by the SMF network element in the foregoing embodiments. The following embodiments and the foregoing embodiments may be combined with each other, or may be independently applied. A same or similar concept or process may not be described in detail again in the following some embodiments.

In the embodiments of this application, "at least one" means one or more, and "a plurality of" means two or more. "At least one (one piece) of the following" or a similar expression thereof refers to any combination of these items, including any combination of singular items (pieces) or plural items (pieces). For example, at least one (one piece) of a, b, or c may represent: a, b, c, a-b, a-c, b-c, or a-b-c, where a, b, and c may be singular or plural.

The terminal device in the embodiments of this application is not limited to a 5G network, and is further applicable to a 4G or another network standard. This is not limited herein.

The access network element in the embodiments of this application is an apparatus configured to provide a wireless communication function for the terminal device. The access network element may include various forms of base stations, such as a macro base station, a micro base station (also referred to as a small cell), a relay node, and an access point. A device having a base station function may have different names in systems that use different radio access technologies. For example, in an LTE system, the device is referred to as an evolved NodeB (evolved NodeB, eNB or eNodeB); and in a 3rd generation (3rd generation, 3G) system, the device is referred to as a NodeB (NodeB). In a new generation system, the device is referred to as a gNB (gNodeB).

The session management function network element in the embodiments of this application may be responsible for session management for the terminal device. For example, the session management includes selection of a user plane device, reselection of a user plane device, IP address assignment, quality of service (quality of service, QoS) control, and session establishment, modification, or release.

The user plane function network element in the embodiments of this application may implement functions such as forwarding, statistics collection, and detection of a user packet.

The policy control function network element in the embodiments of this application includes a policy control function and a flow based charging control function. For example, the policy control function network element may implement a subscriber subscription data management function, a policy control function, a charging policy control function, and QoS control. For example, the policy control function network element may be a PCF network element or a PCRF network element.

The foregoing network elements are not limited to a 5G network, and may alternatively be network elements having corresponding functions in a 4G or another network standard. This is not limited herein. The foregoing network elements may be network elements implemented on dedicated hardware, or may be software instances run on dedicated hardware, or may be instances of virtualization functions on a proper platform. For example, the foregoing virtualization platform may be a cloud platform.

In addition, the embodiments of this application are also applicable to another future-oriented communications technology. Network architectures and service scenarios described in this application are intended to describe the technical solutions in this application more clearly, but are not intended to limit the technical solutions provided in this application. A person of ordinary skill in the art may know that as the network architectures evolve and a new service scenario emerges, the technical solutions provided in this application are also applicable to a similar technical problem.

It should be noted that, in the resource allocation method provided in the embodiments of this application, interaction between different network element entities may be based on a point-to-point interface, or may be based on a service-oriented interface. This is not limited herein. An interaction manner based on a service-oriented interface is used as an example to describe a procedure of the following resource allocation method in the embodiments of this application.

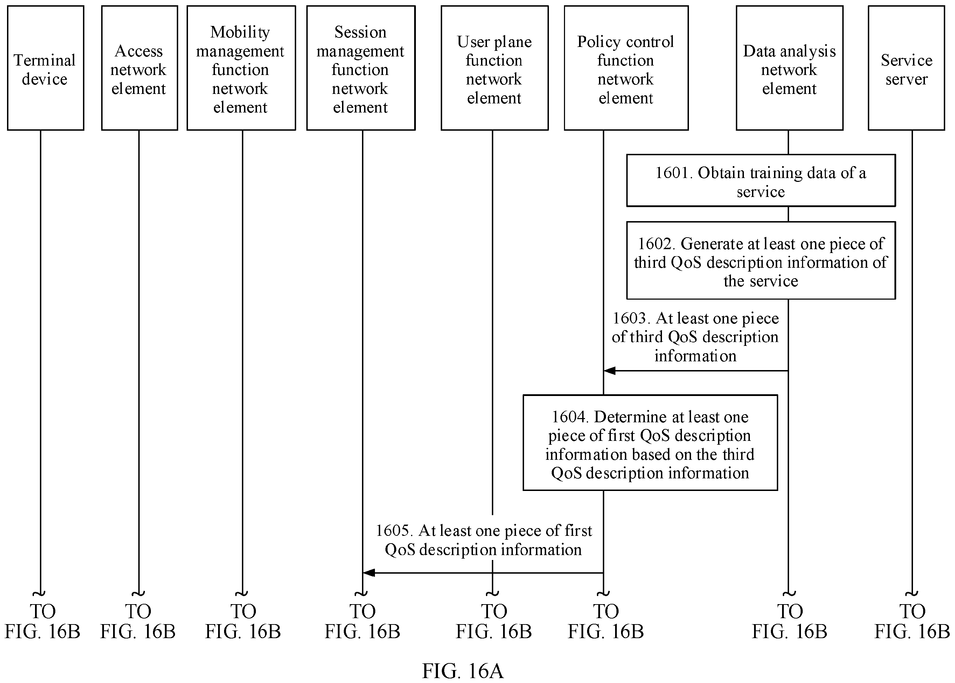

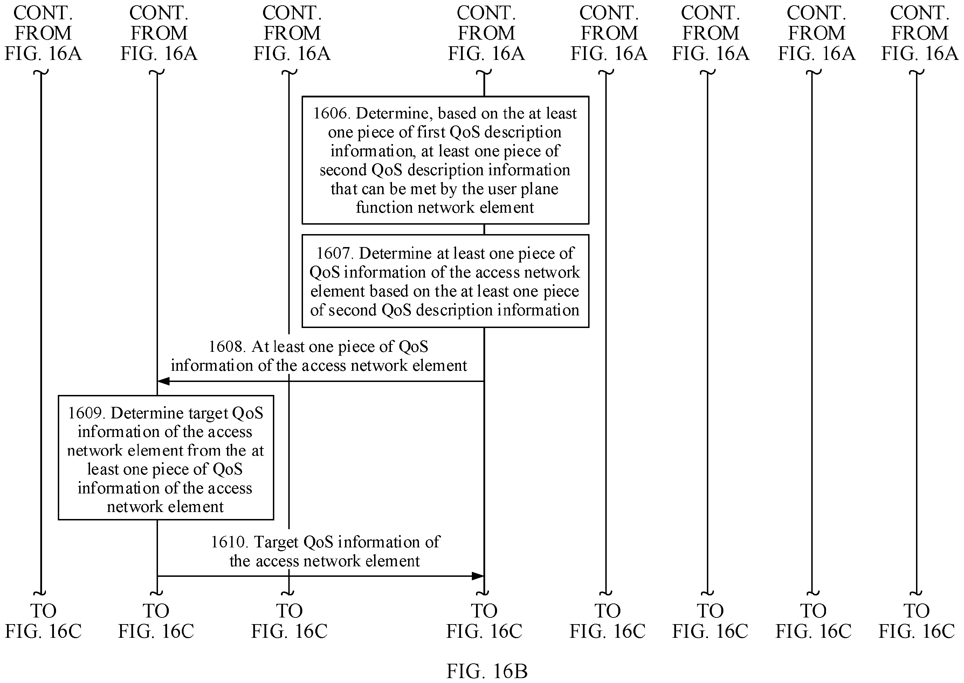

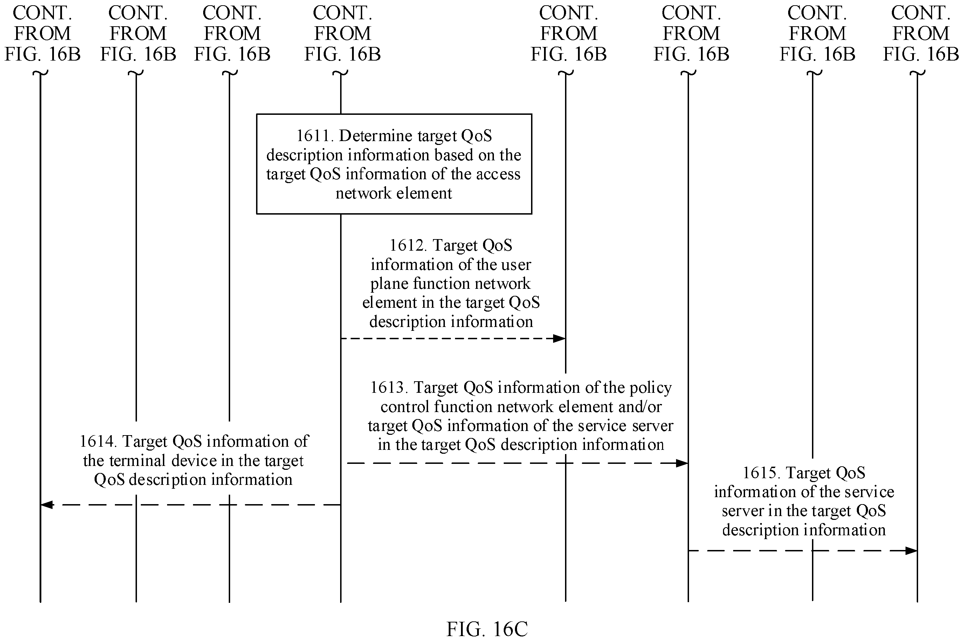

FIG. 16A to FIG. 16C are a flowchart of a resource allocation method according to an embodiment of this application. The resource allocation method includes a method for transmitting quality of service information of a service. FIG. 16 is described with reference to FIG. 2A and FIG. 2B.

First, it should be noted that, the method in FIG. 16A to FIG. 16CA to FIG. 16C is applicable to a scenario in which a data analysis network element can train a service mode and provide at least one set of QoS description information for a network.

For a service, there is at least one set of QoS description information. For example, considering a service experience requirement (for example, a MOS score of the service is greater than 3.0) for a vertical industry, packet delay data conflicts with packet loss rate data.

In an example 1, within weak coverage, a RAN may transmit packets for a plurality of times to ensure a packet loss rate. However, in this case, a packet delay is increased, and further, a flow bit rate may be increased.

In an example 2, within strong coverage, a RAN does not need to transmit packets for a plurality of times. In this case, both a packet loss rate and a packet delay can be ensured, and further, a flow bit rate may be reduced.

Therefore, for one service, there is one or more sets of QoS description information.

Specifically, the data analysis network element obtains, by using a big data method, at least one set of QoS description information of a service based on time variant network data, service data, or terminal data, and corresponding service experience data. A process is described by using the following two steps 1601 and 1602.

1601. The data analysis network element obtains training data of the service.

The data analysis network element first collects data from network elements such as a service server (for example, an AF), an access network element (for example, a RAN), a user plane function network element (for example, a UPF), a terminal device (for example, UE), a mobility management function network element (for example, an AMF), a session management function network element (for example, an SMF), and a policy control function network element (for example, a PCF), and then associates the data of the network elements by using information such as a service identifier, a service flow identifier, a terminal identifier, a session identifier of a service flow, an association identifier on each network element, and a time, to obtain complete training data. The training data includes:

(1) service experience data that is from the AF network element; and
(2) other time variant parameter data that affects service experience data, including:

a. TCP congestion window data, TCP receive window data, jitter buffer data, media coding type and coding rate data, buffer data, and data of at least one data type that are from the AF network element;
b. flow bit rate data, packet loss rate data, delay data, radio channel quality data, and data of at least one data type that are from the RAN element;
c. flow bit rate data, packet loss rate data, delay data, and data of at least one data type that are from the UPF network element;
d. flow bit rate data, packet loss rate data, delay data, data of at least one data type, TCP congestion window data, TCP receive window data, jitter buffer data, media coding type and coding rate data, buffer data, CPU usage, and memory usage;
e. and the like.

For another specific process, refer to descriptions of step 201 in FIG. 2A and FIG. 2B. Details are not described herein again.

1602. The data analysis network element generates at least one piece of third QoS description information of the service.

For a specific process, refer to descriptions of step 202 in FIG. 2A and FIG. 2B. For ease of distinguishing from first and second QoS description information in subsequent steps, the third QoS description information is used herein, but actually, the at least one piece of third QoS description information has a same meaning as the at least one piece of QoS description information of the service that is generated by the data analysis network element in step 202. Details are not described herein again.

For example, the data analysis network element obtains, based on a linear regression (Linear Regression) method, a relational model, namely, a service experience model, between service experience and other time variant parameter data that affects the service experience data, which is as follows:

$$\mathrm{h(x)} = w_0 x_0 + w_1 x_1 + w_2 x_2 + w_3 x_3 + \cdots + w_D x_D \quad (1)$$

In the formula (1),

h(x) is service experience data of a service, for example, a MOS of the service;

$X = (x_0, x_1 x_2, x_3, ..., x_D)$ is an eigenvector, for example, $x_1$ indicates a packet delay, $x_2$ identifies a packet loss rate, $x_3$ identifies a flow bit rate, ..., $x_D$ indicates a TCP congestion window, $x_0$ is a constant $1 x_0$; and

$W = (w_0, w_1 w_2, w_3, ..., w_D)$ is a parameter vector, which is also referred to as a weight vector, and $w_i$ identifies a value of a weight affected by an $i^{th}$ parameter for the service experience data.

The data analysis network element obtains at least one set of third QoS description information of a service based on a multi-objective optimization model (Multiple-objective Optimization Model) that is commonly used in multi-criteria decision making (Multiple Criteria Decision Making, MCDM). Details are as follows:

Step (1). For a service experience requirement of a service provider (from the AF network element), for example, a MOS of the service is greater than 3.0, one constraint condition of a multi-objective optimization problem may be obtained based on the service experience model, which is as follows:

$$3.0 = w_0 x_0 + w_1 x_1 + w_2 x_2 + w_3 x_3 + \cdots + w_D x_D \quad (2)$$

Step (2). The data analysis network element learns of a range of each time variant parameter through statistics collection, to be specific, the range of each time variant parameter is a constraint condition. For example, a range of RSRP in radio channel quality on a RAN side is as follows:

$$\text{RSRP} \in [-140, 40] \ \text{dbm} \quad (3)$$

Step (3). The data analysis network element designs a plurality of objective functions. An example is as follows:

Minmize: Flow Bit Rate7
Maximize: Packet Delay
Maximize: Packet Rrror Rate

Step (4). The data analysis network element obtains at least one piece of third QoS description information of a service based on a generic algorithm (Generic Algorithm, GA).

1603. The data analysis network element sends the at least one piece of third QoS description information to the policy control function network element. Correspondingly, the policy control function network element receives the at least one piece of third QoS description information from the data analysis network element.

In a possible implementation, before the data analysis network element sends the at least one piece of third QoS description information to the policy control function network element, the data analysis network element receives a QoS description information request of the service that is sent by the policy control function network element, where the QoS description information request is used to request the at least one piece of third QoS description information of the service. To be specific, an operation of sending the at least one piece of third QoS description information data to the policy control function network element by the data analysis network element is triggered by the QoS description information request of the service. The QoS description information request may include service identifier information (for example, a public land mobile network (public land mobile network, PLMN) ID, a service identifier (service ID), and an analysis identifier (analytic ID)) of the service. The service identifier information may be uniformly allocated by the data analysis network element to any type of service in advance and sent to a corresponding service server. The data analysis network element may communicate with the service server through an NEF, and the data analysis network element, the NEF, and the service server may communicate with each other through a uniform northbound interface. Specifically, the service server may request service identifier information allocation from the data analysis network element through the uniform northbound interface, or the service server requests service identifier information allocation from the NEF through the uniform northbound interface, and then the NEF requests service identifier information allocation from the data analysis network element. The service identifier information may alternatively be provided by another network element to the PCF. For example, in a session establishment process corresponding to the service, the SMF or the terminal device provides the service identifier information to the PCF. This is not limited herein. The service identifier information may be service type information. It should be noted that, in addition to the service identifier information, the QoS description information request of the service may further include one or more of the following information: identifier information (an IMSI, an SUPI, a UE IP address, a UE group identifier, a UE type identifier, or the like) of a terminal device that executes the service, location information (a TA, a TA list, or a cell list (cell list)) of the terminal device, a name (for example, a DNN) of a data network in which the terminal device is located, slice identifier information (such as NSSAI, S-NSSAI, or NSI) of the terminal device, and time information. An objective of the operation is to obtain the at least one piece of third QoS description information of the service from the data analysis network element at one or a combination of the following granularities: a terminal device granularity, a user group granularity, a location area granularity, a DNN granularity, a slice granularity, and a time granularity.

It should be noted that, in a possible design, an operation of sending the QoS description information request of the service to the data analysis network element by the policy control function network element may alternatively be triggered by a service establishment request message received by the policy control function network element. To be specific, before the policy control function network element sends the QoS description information request of the service, the policy control function network element receives the service establishment request sent by the service server of the service, where the service establishment request is used to establish a service flow for the service. It should be noted that, usually, a communications network establishes a dedicated packet transmission channel (for example, a dedicated bearer or quality of service flow QoS flow) for the service flow based on a requirement of the service server. The service establishment request includes the service identifier information and/or service description information of the service, and the service description information may include one or more of the following information: a service identifier to which the service flow belongs, IP filtering information, a media bandwidth requirement, traffic routing information, a jitter buffer requirement, a media coding type requirement, a coding rate requirement of the media coding type requirement, a TCP congestion window requirement, a TCP receive window requirement, a buffer requirement, and a value requirement of at least one data type. For example, in a 5G network, the service establishment request may be an authentication authorization request message (for example, a policy authentication authorization request message) sent by the service server to the PCF, and the authentication authorization request message includes the service identifier information, and is used to instruct to establish the service corresponding to the service identifier information. In addition, the authentication authorization request message further includes the service description information. In this design method, if the policy control function network element obtains the service description information included in the service establishment request, the QoS description information request of the service that is sent by the policy control function network element to the data analysis network element may also include the service description information, so that the data analysis network element generates the at least one piece of third QoS description information of the service based on the service description information.

Corresponding to the foregoing implementation, if the data analysis network element receives the QoS description information request message of the service that is sent by the policy control function network element, the data analysis network element may send a QoS description information request response to the policy control function network element, where the QoS description information request response includes the at least one piece of third QoS description information of the service. The at least one piece of third QoS description information may be presented in a form of a table, an image, a function, a description file, or the like. This is not limited in this application.

In another possible implementation, the policy control function network element may send a QoS description information subscription request of the service to the data analysis network element, to subscribe to QoS description information of the service from the data analysis network element, where the QoS description information subscription request of the service may include the service identifier information. It should be noted that, in addition to the service identifier information, the QoS description information request of the service may further include one or more of the following information: identifier information (an IMSI, an SUPI, a UE IP address, a UE group identifier, a UE type identifier, or the like) of a terminal device that executes the service, location information (a TA, a TA list, or a cell list (cell list)) of the terminal device, a name (for example, a DNN) of a data network in which the terminal device is located, slice identifier information (such as NSSAI, S-NSSAI, or NSI) of the terminal device, and time information. An objective of the operation is to subscribe to the at least one piece of third QoS description information of the service from the data analysis network element at one or a combination of the following granularities: a terminal device granularity, a user group granularity, a location area granularity, a DNN granularity, a slice granularity, and a time granularity. In a possible design, the QoS description information subscription request of the service may include a notification trigger condition, and the notification trigger condition is used to instruct the data analysis network element to notify the policy control function network element of a trigger condition for the QoS description information of the subscribed service.

Corresponding to the implementation, the data analysis network element may send a QoS description information notification of the service to the policy control function network element based on the subscription request, where the QoS description information notification of the service includes the at least one piece of third QoS description information of the service. For example, the third QoS description information of the service may be pushed to the data analysis network element at a service granularity based on the service identifier information in the subscription request. The data analysis network element may further push the at least one piece of third QoS description information of the service to the policy control network element at one or a combination of the following granularities: a terminal device granularity, a user group granularity, a location area granularity, a DNN granularity, a slice granularity, and a time granularity. In a possible design, if the subscription request includes the notification trigger condition, further, the data analysis network element may send the at least one piece of third QoS description information of the service to the data analysis network element only when the trigger condition is met.

1604. The policy control function network element determines at least one piece of first QoS description information based on the third QoS description information.

For example, each of the at least one piece of first QoS description information includes QoS information of the user plane function network element and QoS information of the access network element, and further includes one or more of the following: QoS information of the service server, QoS information of the terminal device, or QoS information of the policy control function network element. The QoS information of the access network element includes one or more of the following: a QoS parameter type, a QoS parameter requirement, and access network element information. The QoS information of the user plane function network element includes one or more of the following: a QoS parameter type, a QoS parameter requirement, and user plane function network element information. The QoS information of the service server includes one or more of the following: a QoS parameter type, a QoS parameter requirement, and service server information. The QoS information of the terminal device includes one or more of the following: a QoS parameter type, a QoS parameter requirement, and terminal device information. The QoS information of the policy control function network element includes one or more of the following: a QoS parameter type, a QoS parameter requirement, and policy control function network element information. In addition, the network element information may be used to indicate a network element to which the QoS information is applicable. For example, the user plane function network element information is used to indicate that the QoS information of the user plane function network element is applicable to the UPF. The device information may be used to indicate a device to which the QoS information is applicable. For example, the terminal device information is used to indicate that the QoS information of the terminal device is applicable to the terminal device. The network element information may include network element type information or identifier information, and the device information may include device type information or identifier information. The network element information is used to indicate one network element or one type of network element to which a corresponding QoS parameter requirement is applicable, and the device information is used to indicate one device or one type of device to which a corresponding QoS parameter requirement is applicable. For a specific meaning and an example description thereof, refer to step 202.

In a possible design, the QoS parameter requirements for the foregoing function network elements or devices include one or more of the following information: a time information requirement, a location information requirement, a guaranteed flow bit rate GFBR requirement, a maximum flow bit rate MFBR requirement, an average time window size requirement, a jitter buffer size requirement, a TCP congestion window requirement, a TCP receive window requirement, a buffer requirement, a value requirement of at least one data type, and a radio access type (Radio access type, RAT) requirement.

In a possible design, a process of obtaining the value requirement for the at least one data type may specifically include: the function network element or the device determines a second data value based on a first data value of a first data type, where the first data value belongs to first value space, the second data value belongs to second value space, and the first data type is any one of the at least one data type.

In another possible design, a process of obtaining the value requirement for the at least one data type may specifically include: the function network element or the device determines a fourth data value based on a third data value of a second data type, where the third data value belongs to third value space, the fourth data value belongs to fourth value space, and the second data type is any one of the at least one data type.

In the foregoing two designs, optionally, the second value space is the same as the fourth value space. To facilitate processing by the function network element or the device, value space of all data types may be the same, and the data analysis network element does not need to perform further processing in same value space.

In another possible design, a process of obtaining the value requirement for the at least one data type may further include: the function network element or the device determines a sixth data value based on a fifth data value of a third data type, where the fifth data value belongs to fifth value space, the sixth data value belongs to sixth value space, and the third data type is any one of the at least one data type.

Optionally, every two of the second value space, the fourth value space, and the sixth value space are the same.

The function network element or the device may determine the second data value by normalizing the first data value of the first data type, or may determine the fourth data value by normalizing the third data value of the second data type, or may determine the sixth data value by normalizing the fifth data value of the third data type, where the normalization includes mapping a physical data value of the data type to fixed value space. The normalization is mainly to map a physical data value of each data type to fixed value space by using a min-max normalization method, a Z-Score normalization method, or the like. This processing not only facilitates improvement of a model training convergence speed in a big data analysis process, but also provides a feature data transmission manner.

For example, the policy control function network element determines the at least one piece of first QoS description information (namely, a third QoS description information set met by the policy control function network element) in the at least one piece of third QoS description information of the service that is received from the data analysis network element, where the third QoS description information set met by the policy control function network element includes some or all of the at least one piece of third QoS description information. For a specific process in which the policy control function network element determines the met third QoS description information set, refer to step 205 in FIG. 2A and FIG. 2B. The first core network element in step 205 is specifically the policy control function network element in this embodiment, and the third set in step 205 is specifically the third QoS description information set in this embodiment.

For example, if each piece of third QoS description information corresponds to one radio access type requirement, where radio access type requirement information is used to indicate a radio access type to which the third QoS description information is applicable, in a possible design, the PCF may filter each piece of third QoS description information based on a current radio access type of the terminal device that executes the service, so that the current radio access type meets a radio access type requirement in each piece of selected third QoS description information, and the PCF may use each piece of selected third QoS description information as the third QoS description information set that can be met by the PCF.

Each piece of second QoS description information determined by the session management function network element through step 1606 also corresponds to one radio access type requirement. In this case, preferably, the session management function network element may further determine at least one piece of QoS information of the access network element based on the radio access type requirement, so that the at least one piece of determined QoS information of the access network element is applicable to an access network element in which the terminal device is currently located.

In a possible design, in step 1603, if the policy control function network element obtains the service description information from the service server, for example, the service description information includes one or more of the following information of the service: a service identifier to which a service flow belongs, IP filtering information, a media bandwidth requirement, traffic routing information, a jitter buffer requirement, a media coding type requirement, a coding rate requirement of the media coding type requirement, a TCP congestion window requirement, a TCP receive window requirement, a buffer requirement, and a value requirement of at least one data type. The policy control function network element may determine the at least one piece of first QoS description information from the at least one piece of obtained third QoS description information based on the service description information. In this design manner, actually, the policy control function network element also uses a parameter requirement related to the service server in the third QoS description information obtained from the data analysis network element, as a QoS parameter requirement for the policy control function network element, and the policy control function network element performs, in replacement with the AF, based on a part or all of information in the service description information, an operation of determining the QoS description information. To be specific, in this design manner, the AF may not need to participate in a procedure of filtering the QoS description information.

In a possible design, the policy control function network element may send the third QoS description information set met by the policy control function network element to the service server. For example, the policy control function network element sends a policy authentication authorization message to the service server, where the policy authentication authorization message includes the third QoS description information set met by the policy control function network element. The service server determines a third QoS description information set that can be met by the service server and feeds back the set to the policy control function network element. For example, the service server sends a policy authentication authorization message to the policy control function network element, where the policy authentication authorization message includes the third QoS description information set met by the service server. The policy control function network element sends the third QoS description information set that can be met by the service server, as the third QoS description information set (namely, the at least one piece of first QoS description information) met by the policy control function network element to the session management function network element. For a method for determining, by the service server, the third QoS description information set met by the service server, refer to the determining method of the first core network element in step 205. Details are not described herein again.

In a possible design, the policy control function network element may first send the at least one piece of third QoS description information of the service that is obtained from the data analysis network element to the service server, so that the service server sifts out the third QoS description information set met by the service server, and then sends the third QoS description information set to the policy control function network element. For a method for determining, by the service server, the third QoS description information set met by the service server, refer to the determining method of the first core network element in step 205. Details are not described herein again. The policy control function network element then filters the third QoS description information set met by the service server, and determines the third QoS description information set met by the policy control function network element. For a method for determining, by the policy control function network element, the QoS description information set met by the policy control function network element, also refer to the determining method of the first core network element in step 205. The policy control function network element then sends the third QoS description information set that can be met by the policy control function network element, as the at least one piece of first QoS description information to the session management function network element.

1605. The policy control function network element sends the at least one piece of first QoS description information to the session management function network element. Correspondingly, the session management function network element receives the at least one piece of first QoS description information from the policy control function network element.

In a possible design, the at least one piece of first QoS description information sent by the policy control function network element may be the third QoS description information set met by the policy control function network element.

For example, when the policy control function network element is the PCF and the session management function network element is the SMF, the PCF may send a policy control message (for example, a service-oriented interface message Npcf-SMPolicyControl UpdateNotify request) to the SMF, where the policy control message includes the third QoS description information set met by the PCF. The PCF may send the policy control message to the SMF after receiving the authentication authorization message sent by the AF. The AF sends the authentication authorization message to the PCF to request the network to establish a dedicated service flow (for example, a QoS flow) for the service, and the PCF sends the policy control message to the SMF to request the SMF to trigger a procedure of establishing the dedicated service flow (the QoS flow).

1606. The session management function network element determines, based on the at least one piece of first QoS description information, at least one piece of second QoS description information that can be met by the user plane function network element. The at least one piece of second QoS description information is one or more of the at least one piece of first QoS description information.

For example, that the user plane function network element meets the second QoS description information may mean that the user plane function network element meets QoS information of the user plane function network element that is included in the second QoS description information.

In a possible implementation, the session management function network element may first obtain QoS information of the user plane function network element (for example, the UPF) that is included in each piece of first QoS description information. For example, the session management function network element may identify, based on the user plane function network element information, the QoS information of the user plane function network element that is included in each piece of first QoS description information. Then the session management function network element sends the QoS information of the user plane function network element in each piece of first QoS description information to the user plane function network element, to learn, through a query, of a status of meeting the QoS information of the user plane function network element by the user plane function network element. The session management function network element obtains selection information of the user plane function network element that is sent by the user plane function network element, where the selection information includes the status of meeting the QoS information of the user plane function network element in each piece of first QoS description information by the user plane function network element. A specific representation manner in the selection information may include a plurality of forms. This is not limited. For example, the selection information may be specifically a binary value (0 or 1), where the binary value indicates whether the UPF meets the QoS information of the user plane function network element that is included in each piece of first QoS description information (for example, 0 indicates that the UPF does not meet the QoS information, and 1 indicates that the UPF meets the QoS information). For another example, the selection information may be QoS information of the user plane function network element that can be met and that is returned by the UPF (for example, the UPF returns and notifies QoS information that can be met by the UPF to the SMF, and does not return QoS information that cannot be met by the UPF). The session management network element determines the at least one piece of second QoS description information based on the selection information, where each piece of second QoS description information is correspondingly first QoS description information that can be met by the user plane function network element.

For example, when the session management function network element is the SMF and the user plane function network element is the UPF, the SMF sends an N4 interface session establishment/modification request message to the UPF, where the N4 interface session establishment/modification request message carries corresponding QoS information (for example, a GFBR requirement or an MFBR requirement) of the UPF that is included in each piece of first QoS description information. The UPF may filter the received QoS information of the UPF based on a current status or capability of the UPF, to obtain a status of meeting the QoS information of the UPF in each piece of first QoS description information by the UPF. The UPF sends the selection information of the UPF to the SMF, where the selection information is used to indicate the status of meeting the QoS information of the UPF by the UPF.

In another possible implementation, if the session management function network element stores or configures QoS related capability information or status information of the user plane function network element, the session management function network element may directly select, from the at least one piece of first QoS description information based on the QoS related capability information or the status information of the user plane function network element, second QoS description information met by the user plane function network element. To be specific, there is no need to send the QoS information of the user plane function network element to the user plane function network element.

The session management function network element may determine, by determining each of the at least one piece of first QoS description information, zero pieces of second QoS description information or one or more pieces of second QoS description information, where each piece of second QoS description information is one of the at least one piece of first QoS description information received by the session management function network element from the policy control function network element. When the session management function network element may determine one or more pieces of second QoS description information, the session management function network element subsequently performs step 1607; otherwise, when the session management function network element may determine zero pieces of second QoS description information, to be specific, when the user plane function network element cannot meet any piece of first QoS description information, the session management function network element optionally performs step 1606A subsequently.

1606A. Optionally, the session management function network element reports first notification information to the policy control function network element, where the first notification information is used to notify the policy control function network element that the user plane function network element cannot meet any one of the at least one piece of first QoS description information.

For example, when the policy control function network element is the PCF and the session management function network element is the SMF, the SMF may send a policy control message (for example, a service-oriented interface message Npcf-SMPolicyControl_UpdateNotify response) to the PCF, where the policy control message includes the first notification information. Optionally, the policy control message may further include information indicating a service flow establishment failure, where the information indicating the service flow establishment failure is used to notify the service server that the AF fails to establish a service flow.

According to the foregoing method, the policy control function network element can re-determine the at least one piece of first QoS description information based on the first notification information, and send the at least one piece of first QoS description information to the session management function network element, so that the session management function network element can reselect second QoS description information.

Optionally, in the method in this step, the session management function network element may further notify the policy control function network element of a specific cause value for that the session management function network element cannot meet each piece of information in any piece of first QoS description information. For example, a cause value for that the first piece of first QoS description information cannot be met is that a GFBR requirement in the first piece of first QoS description information cannot be met, and a cause value for that the second piece of first QoS description information cannot be met is that an MFBR requirement in the second piece of first QoS description information cannot be met.

Optionally, in the method in this step, the session management function network element may further send actual values obtained by measuring one or more QoS parameter types for the user plane function network element by the user plane function network element to the policy control function network element. In this case, subsequently, the policy control function network element re-determines at least one piece of first QoS description information based on the measurement values and sends the at least one piece of first QoS description information to the session management function network element, so that the session management function network element can reselect second QoS description information and QoS information of the access network element. For example, the session management function network element may report, to the policy control function network element, an actual measurement value of a QoS parameter corresponding to a QoS parameter requirement that cannot be met by the user plane function network element, or may report, to the policy control function network element, actual measurement values of QoS parameters corresponding to all QoS parameter requirements for the user plane function network element.

1607. The session management function network element determines at least one piece of QoS information of the access network element based on the at least one piece of second QoS description information. The at least one piece of second QoS description information includes the at least one piece of QoS information of the access network element.

Specifically, the session management function network element determines the at least one piece of QoS information of the access network element based on the QoS information of the access network element that is included in each of the at least one piece of second QoS description information.

In a possible design, if each piece of first QoS description information obtained by the session management function network element corresponds to one piece of radio access type requirement information, where the radio access type requirement information is used to indicate a radio access type to which the first QoS description information is applicable, each piece of second QoS description information determined by the session management function network element through step 1606 also corresponds to one radio access type requirement. In this case, preferably, the session management function network element may further determine at least one piece of QoS information of the access network element based on the radio access type requirement, so that the at least one piece of determined QoS information of the access network element is applicable to an access network element in which the terminal device is currently located.

For example, it is assumed that the terminal device that executes the service is currently located in an NG RAN (such as a gNB), and the SMF obtains five pieces of first QoS description information. Corresponding radio access type requirements are respectively an NG RAN, an EUTRAN, an NG RAN, an NG RAN, and a UTRAN. The SMF determines three pieces of second QoS description information through step 1606, where corresponding radio access types are respectively the NG RAN, the EUTRAN, and the NG RAN. In this step, preferably, the SMF may further determine only QoS information of the access network element in two pieces of second QoS description information corresponding to the NG RAN, as the at least one piece of QoS information of the access network element, and sends the at least one piece of determined QoS information of the access network element to the NG RAN in step 1608. It should be noted that, the radio access type requirement may be included in the QoS information of the access network element, or in the first QoS description information and the QoS information of the access network element, or outside the first QoS description information.

1608. The session management function network element sends the at least one piece of QoS information of the access network element to the access network element. Correspondingly, the access network element receives the at least one piece of QoS information of the access network element from the session management function network element.

For example, the session management function network element may directly send the at least one piece of QoS information of the access network element to the access network element. In another implementation, the session management function network element may need to send the at least one piece of QoS information of the access network element to the access network element through another core network element (for example, the mobility management function network element). The another core network element may not need to identify or parse the at least one piece of QoS information of the access network element. This is not limited in the present invention.

For example, when the session management function network element is the SMF and the access network element is the gNB, the SMF may send an N2 interface session management information (N2 SM information) to the gNB through the AMF, where the N2 SM information includes the at least one piece of QoS information of the access network element. Specifically, the SMF sends an N2 message direct transfer request (for example, Namf_Communication_N1N2MessageTransfer) to the AMF, where the N2 message direct transfer request includes the N2 SM information, and the AMF sends an N2 interface message (for example, an N2 session request) to the gNB, where the N2 interface message includes the N2 SM information. Herein, the SMF sends the N2 SM information to the gNB to establish a dedicated service flow (a QoS flow) for the service.

Through steps 1607 and 1608, the session management function network element sifts out the QoS information of the access network element from the QoS description information that can be met by the user plane function network element, so that the session management function network element sends only the QoS information of the access network element to the access network element, and does not send QoS information corresponding to another function network element (especially the QoS information of the service server) to the access network element, thereby enabling the access network element to perceive no service information, and improving security.

1609. The access network element determines target QoS information of a target access network element from the at least one piece of QoS information of the access network element.

In a possible design manner, for each of the at least one piece of received QoS information of the access network element, the access network element may directly determine one or more QoS parameter types and/or QoS parameter requirements for the access network element in the information.

In another possible design manner, if the QoS information of the access network element includes the access network element information, the access network element may determine, based on the access network element information included in each piece of QoS information of the access network element, one or more QoS parameter types and/or QoS parameter requirements for the access network element in the QoS information of the access network element. The access network element information is used to indicate a QoS parameter type and/or a QoS parameter requirement related to the access network element in the QoS information of the access network element. This manner is usually applicable to a scenario in which the session management network element sends the QoS information of the access network element to the access network element, and also sends QoS information corresponding to the terminal device or another network element device. This is not limited herein.

In another possible design manner, for each piece of QoS information of the access network element, the access network element determines whether all QoS parameter requirements for the access network element in the information can be met. If yes, it is determined that the access network element can meet the QoS information of the access network element; or if not (to be specific, any QoS parameter requirement for the access network element is not met), it is determined that the access network element cannot meet the QoS information of the access network element. Therefore, the access network element may determine, by determining each piece of QoS information of the access network element, from the at least one piece of received QoS information of the access network element, zero pieces of QoS information of the access network element that can be met by the access network element or one or more pieces of QoS information of the access network element that can be met by the access network element. For example, it is assumed that when the QoS information of the access network element includes the radio access type requirement, the access network element determines whether a radio access type to which the access network element belongs meets the radio access type requirement in each piece of QoS information of the access network element. Therefore, zero pieces of QoS information of the access network element that can be met by the access network element or one or more pieces of QoS information of the access network element that can be met by the access network element can be determined.

When the access network element may determine, from the at least one piece of received QoS information of the access network element, one or more pieces of QoS information of the access network element that can be met, the access network element subsequently performs steps 1609A and 1610. When the access network element may determine, from the at least one piece of received QoS information of the one access network element, that the access network element can meet zero pieces of QoS information of the access network element, to be specific, when the access network element cannot meet any piece of received QoS information of the access network element, the access network element optionally performs step 1609B or 1609C subsequently.

In a possible design, in step 1608, after the access network element receives the at least one piece of QoS information of the access network element from the session management function network element, the access network element stores the at least one piece of QoS information of the access network element, so that the access network element may need to reselect target QoS information of the access network element subsequently.

1609A. The access network element selects one piece of QoS information from one or more pieces of QoS information of the access network element that are met by the access network element, as the target QoS information of the access network element.

For example, in a possible implementation, if each piece of QoS information of the access network element corresponds to one numerical symbol, the access network element may determine, as the target QoS information, QoS information with the smallest/largest numerical symbol in the at least one piece of QoS information of the access network element that can be met by the access network element. The foregoing processing based on the numerical symbol may be performed by the session management network element.

For example, in another possible implementation, the access network element may select one piece of QoS information with least air interface resource consumption from the at least one piece of QoS information of the access network element that is met by the access network element, as the target QoS information of the access network element.

For example, in still another possible implementation, the access network element may randomly select one piece of QoS information from the at least one piece of QoS information met by the access network element, as the target QoS information of the access network element.

In this solution, a specific manner in which the access network element selects one piece of QoS information from the at least one piece of QoS information of the access network element, as the target QoS information of the access network element is not limited.

Optionally, the access network element may execute a quality of service policy such as radio resource allocation, quality of service policy scheduling, or threshold control based on the selected target QoS information of the access network element.

1609B. The access network element sends second notification information to the session management network element, where the second notification information is used to notify the session management network element that the access network element cannot meet any piece of QoS information of the access network element that is received by the access network element.

That the access network element cannot meet any piece of QoS information of the access network element that is received by the access network element may specifically mean that a QoS parameter requirement for the access network element that is included in any piece of QoS information of the access network element cannot be met.

The step is an optional step. According to the foregoing method, the session management network element can subsequently re-determine at least one piece of QoS information of the access network element based on the second notification information, and send the at least one piece of QoS information to the access network element, so that the access network element reselects target QoS information.

For example, the access network element may directly send the second notification information to the session management network element. In another implementation, the access network element may need to send the second notification information to the session management network element through another core network element (for example, the mobility management function network element). The another core network element may not need to identify or parse the second notification information. This is not limited in the present invention.

For example, when the access network element is the gNB and the session management network element is the SMF, the gNB may send N2 SM information to the SMF through the AMF, where the N2 SM information includes the second notification information. Optionally, the N2 SM information further includes information indicating a service flow establishment failure or success, so that the SMF performs a corresponding processing operation based on the information indicating the service flow establishment failure or success, for example, when the service flow establishment failure is indicated, the SMF may re-trigger a service flow establishment request procedure based on the indication information after a handover is completed; for another example, when the service flow establishment success is indicated, the SMF may perform a subsequent handover procedure based on the indication information. Specifically, the gNB sends an N2 interface message (for example, an N2 session response) to the AMF, where the N2 interface message includes N2 SM information; and the AMF sends an update session management context request (for example, an Nsmf_PDUSession_UpdateSMContext Request) to the SMF, where the update session management context request includes the N2 SM information. Herein, the gNB sends the N2 SM information to the SMF to respond to a request for establishing a dedicated service flow (a QoS flow).

Optionally, in the method in this step, the access network element may further notify the session management function network element of a specific cause value for that the access network element cannot meet each piece of information in any piece of QoS information of the access network element. For example, a cause value for that the first piece of QoS information of the access network element cannot be met is that an RSRP requirement in the first piece of QoS information cannot be met, and a cause value for that the second piece of QoS information of the access network element cannot be met is that an air interface delay requirement in the second piece of QoS information cannot be met.

Optionally, in the method in this step, the access network element may further report, to the session management function network element, actual values obtained by measuring, by the access network element, one or more QoS parameter types included in the QoS information of the access network element. In this case, the session management function network element subsequently re-determines at least one piece of QoS information of the access network element based on the measurement values, and sends the at least one piece of QoS information to the access network element, so that the access network element reselects target QoS information. Similar to step 1606A, the access network element may report an actual measurement value corresponding to a QoS parameter requirement that cannot be met to the session management function network element, or may report actual measurement values corresponding to all QoS parameter requirements for the access network element to the session management function network element.

1609C. The access network element triggers a handover or redirection of the terminal device that executes the service to another access network element.

For example, for details about a method for redirecting the terminal device to the another access network element by the access network element and a definition of the another access network element, refer to step 209 in FIG. 2A and FIG. 2B. Details are not described herein again.

For the method for handing over the terminal device to the another access network element by the access network element, refer to descriptions of step 209 in FIG. 2A and FIG. 2B. For example, the access network element sends a handover request message to the core network element, where the handover request message is used to hand over the terminal device to the another access network element. In another possible design, the access network element may directly send a handover request message to the another access network element, where the handover request message is used to hand over the terminal device to the another access network element.

1610. The access network element sends the target QoS information of the access network element to the session management function network element. Correspondingly, the session management function network element receives the target QoS information of the access network element from the access network element.

In a possible design, the access network element may send a part or all of content of the target QoS information to the session management function network element, so that the session management function network element maps, based on a part or all of the content, content of second QoS description information corresponding to the target QoS information of the access network element. For example, specific values of a QoS parameter type and a QoS parameter requirement that are included in the target QoS information are sent to the session management function network element, or specific values of a QoS parameter type, a QoS parameter requirement, and network element information that are included in the target QoS information are sent to the session management function network element. It should be noted that, in this operation manner, the session management function network element may obtain, through mapping, a plurality of pieces of QoS description information based on the target QoS information of the access network. Each piece of QoS description information is one piece of second QoS description information determined in step 1606 by the session management function network element. Assuming that the session management function network element obtains, through mapping, a plurality of pieces of QoS description information based on the target QoS information of the access network, the session management function network element may determine one of the plurality of pieces of QoS description information as target QoS description information. A determining method is not limited in the present invention.

In another possible design, if each piece of received QoS information of the access network element corresponds to one numerical symbol, the access network element may send a number corresponding to the target QoS information to the session management function network element, so that the session management function network element maps, based on the numerical symbol, content of second QoS description information corresponding to the target QoS information of the access network element. The foregoing processing based on the numerical symbol may be performed by the session management network element.

For example, the access network element may directly send the target QoS information of the access network element to the session management function network element. In another implementation, the access network element may need to send the target QoS information of the access network element to the session management function network element through another core network element (for example, the mobility management function network element), and the another core network element may not need to identify or parse the target QoS information of the access network element. This is not limited in the present invention.

For example, when the access network element is the gNB and the session management network element is the SMF, the gNB may send N2 SM information to the SMF through the AMF, where the N2 SM information includes the target QoS information of the access network element. Optionally, the N2 SM information further includes information indicating a service flow establishment success. Specifically, the gNB sends an N2 interface message (for example, an N2 session response) to the AMF, where the N2 interface message includes the target QoS information of the access network element, and the AMF sends an update session management context request (for example, an Nsmf_PDUSession_UpdateSMContext Request) to the SMF, where the update session management context request includes the target QoS information of the access network element. Herein, the gNB sends the N2 SM information to the SMF to respond to a request for establishing a dedicated service flow (a QoS flow).

Optionally, in this step, the access network element may further send a part or all of the content of the target QoS information of the access network element to the terminal device. For example, the access network element sends an air interface related parameter type and a parameter requirement (for example, a spectrum used by a DRB and air interface channel power) in the target QoS information to the terminal device. Preferably, the access network element determines, in advance, an air interface parameter that needs to be delivered. This design helps the terminal device correspondingly set an access stratum related policy of the terminal device based on a part or all of the content of the target QoS information of the access network element.

For example, the access network element may send a part or all of the content of the target QoS information of the access network element to the terminal device by using an air interface resource connection reconfiguration (Radio resource connection reconfiguration) message.

1611. The session management function network element determines target QoS description information based on the target QoS information of the access network element.

The target QoS information of the access network element is the target QoS information of the access network element that is received by the session management function network element from the access network element in step 1610. The target QoS description information is one of the at least one piece of second QoS description information determined by the session management function network element in step 1606.

A specific manner in which the session management function network element determines the target QoS description information based on the target QoS information of the access network element needs to correspond to a specific manner in which the access network element sends the target QoS information in step 1610. Details are not described herein again.

1612. The session management function network element sends target QoS information of the user plane function network element that is included in the target QoS description information to the user plane function network element.

This step helps the user plane function network element execute a quality of service policy such as user plane function network element resource allocation, quality of service policy scheduling, or threshold control based on a QoS parameter type and a QoS parameter requirement in finally selected target QoS information of the user plane function network element.

For example, when the session management function network element is the SMF and the user plane function network element is the UPF, the SMF sends an N4 interface session establishment/modification request message to the UPF, where the N4 interface session establishment/modification request message carries corresponding QoS information (for example, a GFBR requirement or an MFBR requirement) of the UPF that is included in the target QoS description information.

1613. Optionally, when the target QoS description information includes target QoS information of the terminal device, the session management function network element sends the target QoS information of the terminal device in the target QoS description information to the terminal device. Correspondingly, the terminal device receives the target QoS information of the terminal device in the target QoS description information from the session management function network element.

In a possible design, the session management function network element may directly send the target QoS information of the terminal device to the terminal device. In another implementation, the session management function network element may send the target QoS information of the terminal device to the terminal device through other network elements (for example, the mobility management function network element and the access network element), and the other network elements may not need to identify or parse the target QoS information of the terminal device. This is not limited in the present invention.

For example, when the session management function network element is the SMF and the terminal device is the UE, the SMF may send an N1 interface session management information (N1 SM information) to the UE through the AMF and the gNB, where the N1 SM information includes the target QoS information of the terminal device. Specifically, the SMF sends an N1 message direct transfer request (for example, Namf_Communication_N1N2MessageTransfer) to the AMF, where the N1 message direct transfer request includes the target QoS information of the terminal device; the AMF sends an N2 interface message (for example, an N2 session request) to the gNB, where the N2 interface message includes the target QoS information of the terminal device; and the gNB sends an access stratum resource modification message (for example, AN-specific resource modification) to the UE, where the access stratum resource modification message includes the target QoS information of the terminal device.

In another possible design, the session management function network element may send the target QoS information of the terminal device to the terminal device through the service server.

For example, when the session management function network element is the SMF, the service server is the AF, and the terminal device is the UE, the SMF may send the target QoS information of the terminal device to the AF directly or through the PCF, and the AF sends the target QoS information of the terminal device to the UE. This step helps the terminal device execute a corresponding terminal quality of service policy based on a QoS parameter type and a QoS parameter requirement in finally selected QoS information of the terminal device. Usually, the QoS information delivered by the session management function network element to the terminal herein is a QoS parameter type and/or a parameter requirement, for example, a jitter buffer size requirement, related to an application layer of the terminal. Correspondingly, the terminal quality of service policy that is accordingly executed by the terminal is an application layer related quality of service policy of the terminal, for example, setting a jitter buffer size, a TCP congestion window size, or a TCP receive window size.

1614. Optionally, when the target QoS description information includes target QoS information of the policy control function network element, the session management function network element sends the target QoS information of the policy control function network element in the target QoS description information to the policy control function network element. Correspondingly, the policy control function network element receives the target QoS information of the policy control function network element in the target QoS description information from the session management function network element.

For example, when the session management function network element is the SMF and the policy control function network element is the PCF, the SMF may send a session management policy control message (for example, an Npcf-SMPolicyControl UpdateNotify response) to the PCF, where the policy control message includes the target QoS information of the policy control function network element.

1615. Optionally, when the target QoS description information includes QoS information of the service server, the session management function network element further sends the target QoS information of the service server in the target QoS description information to the service server. Correspondingly, the service server receives the target QoS information of the service server in the target QoS description information from the session management function network element.

For example, when the session management function network element is the SMF and the service server is the AF, the SMF may directly send the target QoS information of the service server to the AF through a service-oriented interface. In another implementation, the SMF may send the target QoS information of the service server to the AF through the PCF. Specifically, the SMF sends a session management policy control message (for example, an Npcf-SMPolicyControl UpdateNotify response) to the PCF, where the policy control message includes the target QoS information of the service server, and the PCF sends an authentication authorization response message to the AF, where the authentication authorization response message includes the target QoS information of the service server.

Through this step, the service server may execute a corresponding quality of service policy based on the QoS information of the service server in the target QoS description information. The quality of service policy includes an application layer related policy, for example, selecting or adjusting a service coding scheme, adjusting a buffer size, or setting a TCP congestion window size or a TCP receive window size.

Compared with a current QoS mechanism in the prior art in which a QoS parameter is usually not properly set or is set in a relatively fixed manner, in this embodiment of this application, the data analysis network element obtains at least one set of QoS description information according to a big data analysis method, and provides the at least one set of QoS description information for the network devices such as the policy control function network element, the session management function network element, or the access network element to perform filtering based on an actual network parameter. Then the network devices, the terminal device, and the service server execute a corresponding quality of service policy based on corresponding QoS information in the target QoS description information that is sifted out. In this way, a QoS parameter is flexibly set for the service, thereby ensuring quality of service of the service.

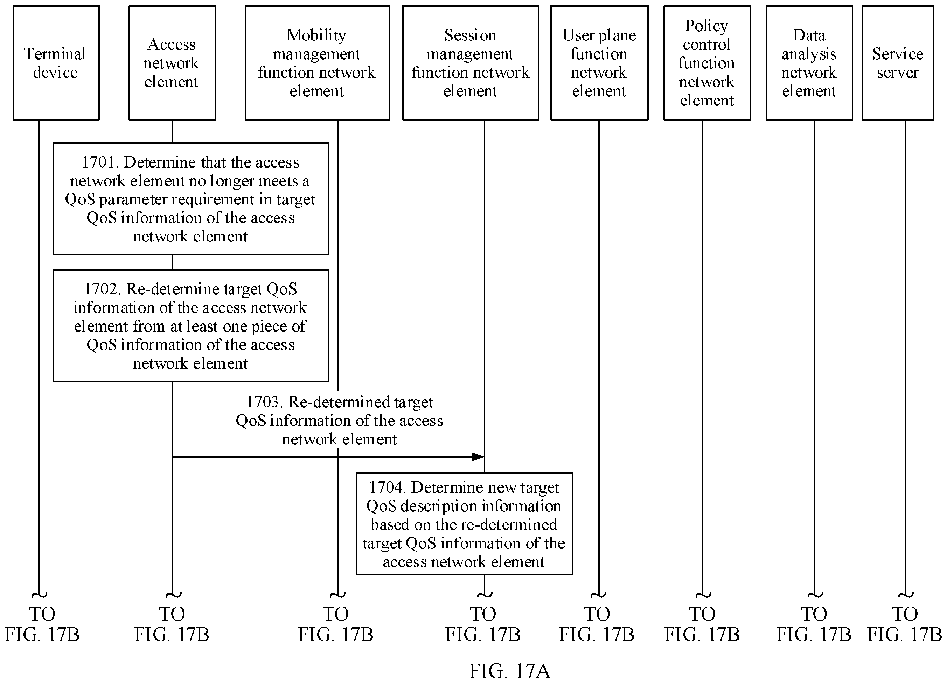

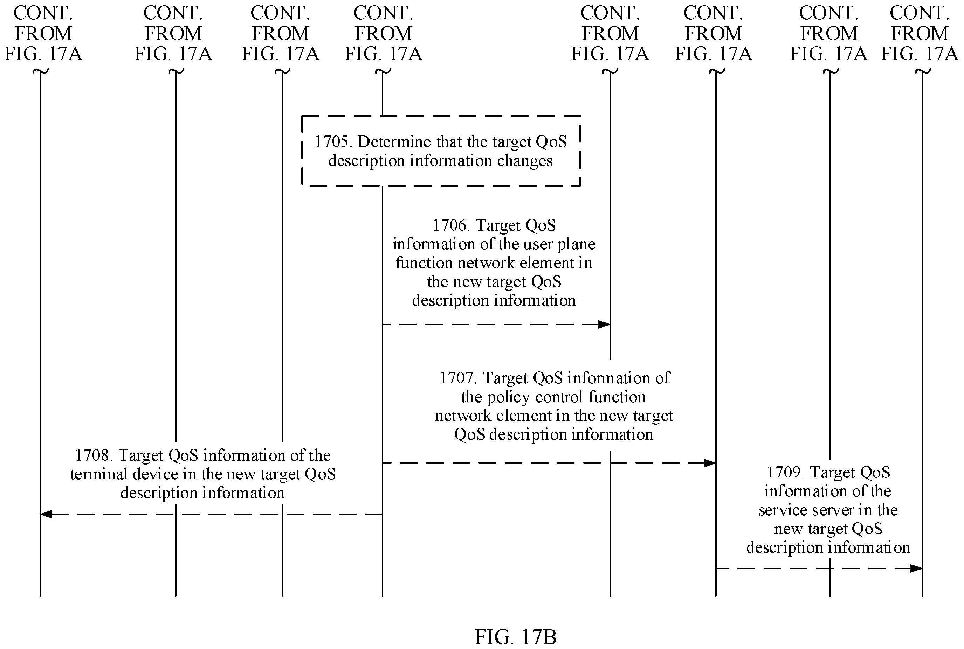

FIG. 17A and FIG. 17B are a flowchart of another resource allocation method according to an embodiment of this application. The method shown in FIG. 17A and FIG. 17B is applied to a scenario in which an access network element re-allocates a resource when the access network element no longer meets target QoS information of the access network element. FIG. 17A and FIG. 17B are described with reference to FIG. 2A and FIG. 2B and FIG. 16A to FIG. 16C.

1701. The access network element determines that the access network element no longer meets a QoS parameter requirement in the target QoS information of the access network element.

In a possible implementation, the target QoS information of the access network element is the target QoS information of the access network element that is determined in step 1609 in FIG. 16A to FIG. 16CA to FIG. 16C.

In a possible implementation, a specific reason why the access network element no longer meets the target QoS information of the access network element may be a change of a related parameter of the access network element. For example, because a quantity of users of a base station increases and a quantity of available resources decreases, a resource (for example, a bandwidth resource) allocated by the base station to a single service or a single user no longer meets a resource requirement (for example, a GFBR requirement) of the service for the base station.

In another possible implementation, a specific reason why the access network element no longer meets the target QoS information may be a change of a location of a terminal device that executes a service, for example, a service user moves to a weak signal coverage area, and consequently, a base station parameter (for example, RSRP) corresponding to a single user or a single service no longer meets a parameter requirement (for example, an RSRP requirement) of the service for the base station. The access network element may no longer meet the target QoS information due to another specific reason. For example, current target QoS information is no longer applicable due to a change of a time period, or current target QoS information is no longer applicable due to a change of a network location of the terminal device of the service. This is not specifically limited in the present invention.

For example, the access network element may determine, through identification by the access network element or based on a QoS parameter requirement that is related to the access network element and that is identified by using a network element information set, parameter changes in the network that may cause the access network element to no longer meet the QoS parameter requirement in the target QoS information. For example, the access network needs to first determine that a resource requirement of a service user, a radio signal strength requirement, a time period, and a network location of the service user are QoS parameter requirements for the access network element. The access network element can subsequently determine that when these actual parameters in a live network change, the access network element may no longer meet the QoS parameter requirement in the target QoS information.

1702. The access network element re-determines target QoS information of the access network element from at least one piece of QoS information of the access network element.

For example, for a method for re-determining the target QoS information of the access network element by the access network element, refer to descriptions of steps 1609, 1609A, 1609B, and 1609 C in FIG. 16A to FIG. 16C. Details are not described herein again.

1703. When the access network element can re-determine the target QoS information of the access network element, the access network element sends the re-determined target QoS information of the access network element to a session management function network element. Correspondingly, the session management function network element receives the re-determined target QoS information of the access network element from the access network element.

For this step, refer to descriptions of step 1610 in FIG. 16A to FIG. 16C. Details are not described herein again.

1704. The session management function network element determines new target QoS description information based on the re-determined target QoS information of the access network element.

For this step, refer to descriptions of step 1611 in FIG. 16A to FIG. 16C. Details are not described herein again.

1706. The session management function network element sends target QoS information of a user plane function network element in the new target QoS description information to the user plane function network element. Correspondingly, the user plane function network element receives the target QoS information of the user plane function network element in the new target QoS description information from the session management function network element.

For this step, refer to descriptions of step 1612 in FIG. 16A to FIG. 16C. Details are not described herein again.

Before step 1706 is performed, optionally, the method further includes step 1705.

1705. The session management function network element determines that the target QoS description information changes.

For example, the session management function network element determines that the target QoS information of the user plane function network element in the target QoS description information changes. If the session management function network element determines that QoS information of the user plane function network element in the target QoS description information is different from the QoS information of the user plane function network element in the new target QoS description information, the session management function network element performs step 1706. If the session management function network element determines that QoS information of the user plane function network element in the target QoS description information is the same as the QoS information of the user plane function network element in the new target QoS description information, the session management function network element may not perform step 1706.

1707. The session management function network element sends target QoS information of a policy control function network element in the new target QoS description information to the policy control function network element. Correspondingly, the policy control function network element receives the target QoS information of the policy control function network element in the new target QoS description information from the session management function network element.

For this step, refer to descriptions of step 1613 in FIG. 16A to FIG. 16C. Details are not described herein again.

Before step 1707 is performed, optionally, the method further includes step 1705.

1705. The session management function network element determines that the target QoS description information changes.

For example, the session management function network element determines that the target QoS information of the policy control function network element in the target QoS description information changes. If the session management function network element determines that QoS information of the policy control function network element in the target QoS description information is different from the QoS information of the policy control function network element in the new target QoS description information, the session management function network element performs step 1707. If the session management function network element determines that QoS information of the policy control function network element in the target QoS description information is the same as the QoS information of the policy control function network element in the new target QoS description information, the session management function network element may not perform step 1707.

1708. The session management function network element sends target QoS information of a terminal device in the new target QoS description information to the terminal device. Correspondingly, the terminal device receives the target QoS information of the terminal device in the new target QoS description information from the session management function network element.

For this step, refer to descriptions of step 1614 in FIG. 16A to FIG. 16C. Details are not described herein again.

Before step 1708 is performed, optionally, the method further includes step 1705.

1705. The session management function network element determines that the target QoS description information changes.

For example, the session management function network element determines that the target QoS information of the terminal device in the target QoS description information changes. If the session management function network element determines that QoS information of the terminal device in the target QoS description information is different from the QoS information of the terminal device in the new target QoS description information, the session management function network element performs step 1708. If the session management function network element determines that QoS information of the terminal device in the target QoS description information is the same as the QoS information of the terminal device in the new target QoS description information, the session management function network element may not perform step 1708.

1709. The session management function network element sends target QoS information of a service server in the new target QoS description information to the service server. Correspondingly, the service server receives the target QoS information of the service server in the new target QoS description information from the session management function network element.

For this step, refer to descriptions of step 1615 in FIG. 16A to FIG. 16C. Details are not described herein again.

Before step 1709 is performed, optionally, the method further includes step 1705.

1705. The session management function network element determines that the target QoS description information changes.

For example, the session management function network element determines that the target QoS information of the service server in the target QoS description information changes. If the session management function network element determines that QoS information of the service server in the target QoS description information is different from the QoS information of the service server in the new target QoS description information, the session management function network element performs step 1709. If the session management function network element determines that QoS information of the service server in the target QoS description information is the same as the QoS information of the service server in the new target QoS description information, the session management function network element may not perform step 1709.

In a possible design, when the QoS information of the access network element includes a radio access standard type requirement, after step 1702, optionally, step 1702A is performed.

1702A. The access network element determines whether a radio access type requirement in the target QoS description information changes.

For example, the determining, by the access network element, whether a radio access type requirement in the target QoS description information changes may be specifically: determining whether a radio access type of a cell in which the terminal device is currently located is different from a radio access type requirement included in the re-determined target QoS information of the access network element; and if yes, determining that the radio access type requirement in the target QoS description information changes; or if not, determining that the radio access type requirement in the target QoS description information does not change.

If the radio access type requirement in the target QoS description information does not change, steps 1703 to 1709 are performed; or if the radio access type requirement in the target QoS description information changes, step 1710 is performed.

1710. The access network element triggers a handover or redirection of the terminal device from the cell in which the terminal device is currently located to a target cell, where a radio access type of the target cell is the same as the radio access type requirement in the re-determined target QoS information of the access network element.

This embodiment of this application provides a mechanism in which a network reselects a QoS parameter because a parameter of an access network changes, so that the network can flexibly use, based on different radio access network environments, one of a plurality of sets of QoS description information provided by a data analysis network element, thereby ensuring quality of service of a service.

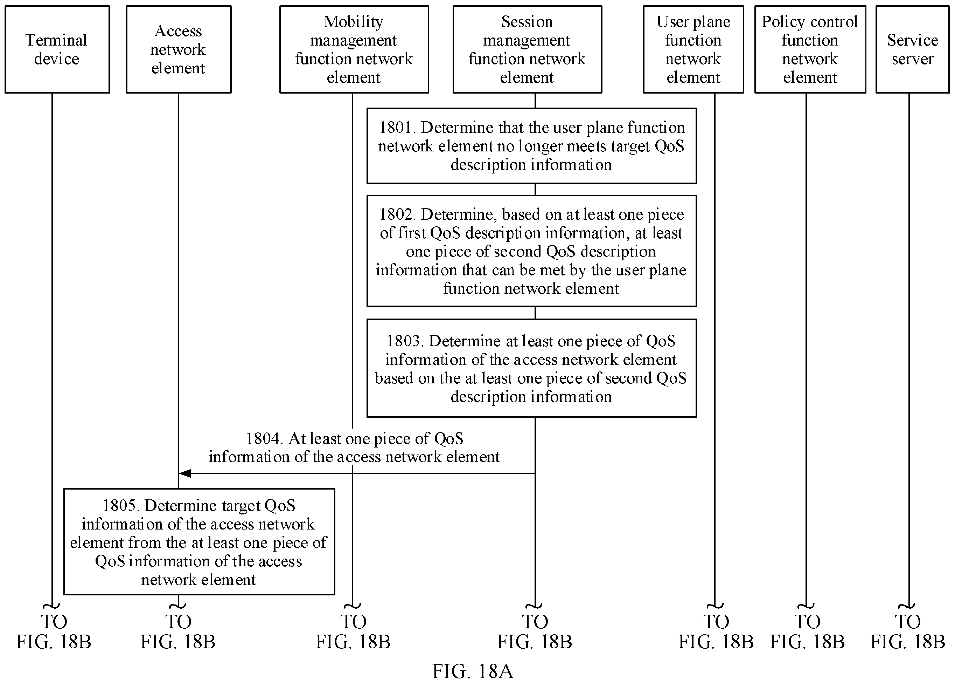

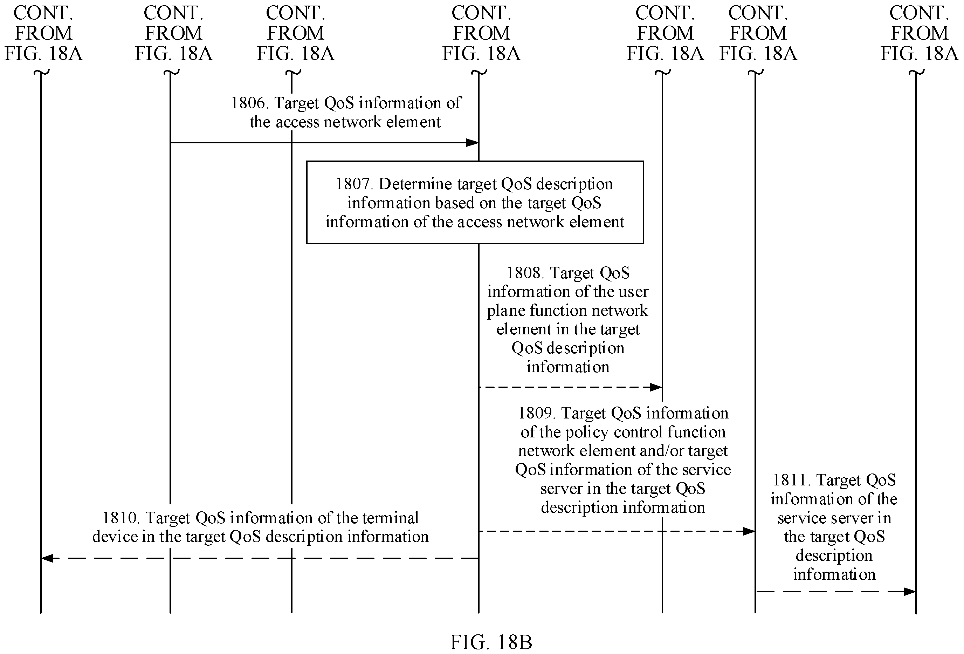

FIG. 18A and FIG. 18B are a flowchart of another resource allocation method according to an embodiment of this application. The method shown in FIG. 18A and FIG. 18B is applied to a scenario in which a user plane function network element re-allocates a resource when the user plane function network element no longer meets target QoS information of an access network element. FIG. 18A and FIG. 18B are described with reference to FIG. 2A and FIG. 2B, FIG. 16A to FIG. 16C, and FIG. 17A and FIG. 17B.

1801. A session management function network element determines that the user plane function network element no longer meets the target QoS description information.

For example, the session management function network element determines that the user plane function network element no longer meets target QoS information of the user plane function network element in the target QoS description information. A reason why the user plane function network element no longer meets the target QoS description information is not limited in this embodiment of the present invention. For example, if a parameter of the user plane function network element changes, a quantity of resources allocated by the user plane function network element to a single service or a single user changes. Alternatively, a service terminal is handed over between different user plane function network elements, and a new target user plane function network element cannot meet a QoS parameter requirement for the user plane function network element in selected target QoS description information.

In a possible design, step 1801 may be performed after step 1612 in FIG. 16A to FIG. 16C, or step 1801 may be performed after step 1706 in FIG. 17A and FIG. 17B.

After step 1801, the session management function network element may re-determine at least one piece of QoS information of the access network element based on at least one piece of first QoS description information by performing step 1802 to 1811, and then send the at least one piece of re-determined QoS information of the access network element to the access network element, and receive, from the access network, the target QoS information of the access network element that is re-determined by the access network element. For a process in which the session management function network element receives the at least one piece of first QoS description information, refer to descriptions of step 1605. For steps 1802 to 1811, refer to descriptions of steps 1606 to 1615 in FIG. 16A to FIG. 16C. Details are not described herein again. This embodiment of this application provides a mechanism in which a network reselects a QoS parameter because a parameter of a core network changes, so that the network can flexibly use, based on different core network environments, one of a plurality of sets of QoS description information provided by a data analysis network element, thereby ensuring quality of service of a service.

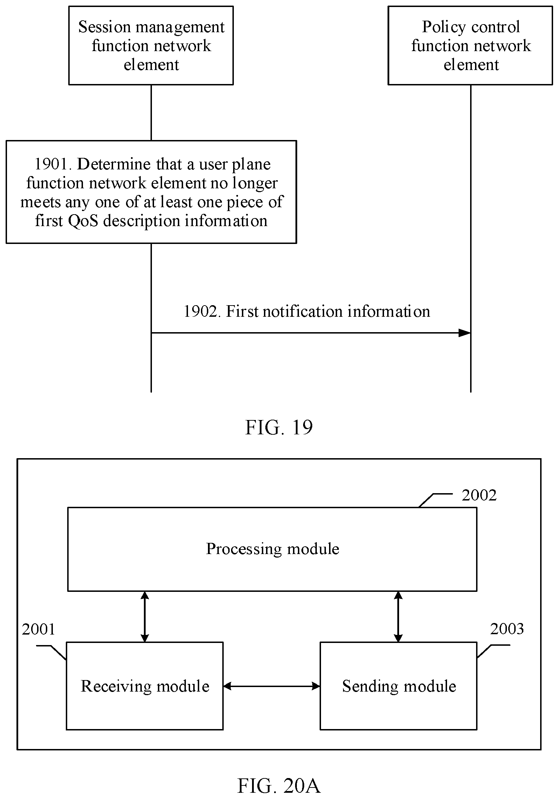

FIG. 19 is a flowchart of another resource allocation method according to an embodiment of this application. The method shown in FIG. 19 is applied to a scenario in which a user plane function network element re-allocates a resource when the user plane function network element no longer meets any one of at least one piece of first QoS description information. FIG. 19 is described with reference to FIG. 2A and FIG. 2B, FIG. 16A to FIG. 16C, FIG. 17A and FIG. 17B, and FIG. 18A and FIG. 18B.

1901. A session management network element determines that the user plane function network element no longer meets any one of the at least one piece of first QoS description information.

For example, the session management function network element determines that the user plane function network element no longer meets a QoS parameter requirement for the user plane function network element in any piece of first QoS description information. A reason why the user plane function network element no longer meets any piece of first QoS description information is not limited in this embodiment of the present invention. For example, if a parameter of the user plane function network element changes, a quantity of resources allocated by the user plane function network element to a single service or a single user changes. Alternatively, a service terminal is handed over between different user plane function network elements, and a new target user plane function network element cannot meet a QoS parameter requirement for the user plane function network element in selected target QoS description information.

In a possible design, step 1901 may be performed after step 1612 in FIG. 16A to FIG. 16C, or step 1901 may be performed after step 1706 in FIG. 17A and FIG. 17B.

1902. The session management function network element sends first notification information to a policy control function network element. Correspondingly, the policy control function network element receives the first notification information from the session management function network element. The first notification information is used to notify the policy control function network element that the user plane function network element cannot meet any one of the at least one piece of first QoS description information.

For step 1902, refer to descriptions of step 1606Ain FIG. 16A to FIG. 16C. Details are not described herein again.

This embodiment of this application provides a mechanism in which a network reselects a QoS parameter because a parameter of a core network changes, so that the network can flexibly use, based on different core network environments, one of a plurality of sets of QoS description information provided by a data analysis network element, thereby ensuring quality of service of a service.

In the foregoing embodiments provided in this application, the solutions of the resource allocation method provided in the embodiments of this application are separately described from a perspective of the network elements and from a perspective of interaction between the network elements. It may be understood that, to implement the foregoing functions, the network elements and the devices, for example, the session management function network element, the access network element, and the policy control function network element, include corresponding hardware structures and/or software modules for performing the functions. A person of ordinary skill in the art should easily be aware that, in combination with the examples described in the embodiments disclosed in this specification, units and algorithms steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

For example, when the foregoing network elements implement the corresponding functions by using the software modules, a resource allocation apparatus may include a receiving module 2001, a processing module 2002, and a sending module 2003, as shown in FIG. 20A.

In an embodiment, the resource allocation apparatus may be configured to perform an operation of the foregoing session management function network element (for example, an SMF network element) in FIG. 16A to FIG. 16C to FIG. 19. An example is as follows:

The receiving module 2001 is configured to receive at least one piece of first quality of service QoS description information of a service from a policy control function network element (for example, a PCF network element). The processing module 2002 is configured to determine at least one piece of QoS information of an access network element based on the at least one piece of first QoS description information. The sending module 2003 is configured to send at least one piece of QoS information of the access network element (for example, a RAN element) to the access network element.

Therefore, based on the resource allocation apparatus in this embodiment of the present invention, compared with a current QoS mechanism in which a QoS parameter is usually not properly set or is set in a relatively fixed manner, in this embodiment of this application, a data analysis network element obtains at least one set of QoS description information according to a big data analysis method, and provides the at least one set of QoS description information for the session management function network element to perform filtering based on an actual network parameter. In this way, a QoS parameter can be flexibly set for the service, thereby ensuring quality of service of the service.

Optionally, each of the at least one piece of first QoS description information includes QoS information of a user plane function network element (for example, a UPF network element) and QoS information of the access network element.

Optionally, the first QoS description information further includes one or more of the following information: QoS information of a service server, QoS information of a terminal device (for example, UE), and QoS information of the policy control function network element.

Optionally, the QoS information of the access network element includes one or more of the following: a QoS parameter type, a QoS parameter requirement, and access network element information.

Optionally, the QoS information of the user plane function network element includes one or more of the following: a QoS parameter type, a QoS parameter requirement, and user plane function network element information.

Optionally, the QoS information of the service server includes one or more of the following: a QoS parameter type, a QoS parameter requirement, and service server information.

Optionally, the QoS information of the terminal device includes one or more of the following: a QoS parameter type, a QoS parameter requirement, and terminal device information.

Optionally, the QoS information of the policy control function network element includes one or more of the following: a QoS parameter type, a QoS parameter requirement, and policy control function network element information.

Optionally, the processing module 2002 is configured to determine, based on the at least one piece of first QoS description information, at least one piece of second QoS description information that can be met by the user plane function network element, where the at least one piece of second QoS description information is one or more of the at least one piece of first QoS description information; and the processing module 2002 is configured to determine the at least one piece of QoS information of the access network element based on the at least one piece of second QoS description information, where the at least one piece of second QoS description information includes the at least one piece of QoS information of the access network element.

Optionally, the sending module 2003 is configured to send the QoS information of the user plane function network element in the at least one piece of first QoS description information to the user plane function network element; the receiving module 2001 is configured to receive selection information of the user plane function network element from the user plane function network element, where the selection information is used to indicate a status of meeting the QoS information of the user plane function network element by the user plane function network element; and the processing module 2002 is configured to determine, based on the selection information of the user plane function network element, the at least one piece of second QoS description information that can be met by the user plane function network element.

Optionally, the receiving module 2001 is further configured to receive target QoS information of the access network element from the access network element, where the target QoS information of the access network element is one of the at least one piece of QoS information of the access network element; and the processing module 2002 is further configured to determine target QoS description information based on the target QoS information of the access network element, where the target QoS description information is one of the at least one piece of second QoS description information.

Optionally, the sending module 2003 is further configured to send target QoS information of the terminal device in the target QoS description information to the terminal device.

Optionally, before the sending module 2003 sends the target QoS information of the terminal device in the target QoS description information to the terminal device, the processing module 2002 is further configured to determine that the target QoS information of the terminal device in the target QoS description information changes.

Optionally, the sending module 2003 is further configured to send target QoS information of the user plane function network element in the target QoS description information to the user plane function network element.

Optionally, before the sending module 2003 sends the target QoS information in the user plane function network element in the target QoS description information to the user plane function network element, the processing module 2002 is further configured to determine that the target QoS information of the user plane function network element in the target QoS description information changes.

Optionally, the sending module 2003 is further configured to send target QoS information of an application server in the target QoS description information to the application server.

Optionally, before the sending module 2003 sends the target QoS information of the application server in the target QoS description information to the application server, the processing module 2002 is further configured to determine that the target QoS information of the application server in the target QoS description information changes.

Optionally, the sending module 2003 is further configured to send target QoS information of the policy control function network element in the target QoS description information to the policy control function network element.

Optionally, before the sending module 2003 sends the target QoS information of the policy control function network element in the target QoS description information to the policy control function network element, the processing module 2002 is further configured to determine that the target QoS information of the policy control function network element in the target QoS description information changes.

Optionally, the QoS parameter requirement includes one or more of the following information: a time information requirement, a location information requirement, a guaranteed flow bit rate GFBR requirement, a maximum flow bit rate MFBR requirement, an average time window size requirement, a value requirement of at least one data type of a function network element, a jitter buffer size requirement, a TCP congestion window size requirement, a TCP receive window size requirement, a buffer size requirement, and a radio access type requirement.

Optionally, values of data types in a value of the at least one data type of the function network element have same value space.

Optionally, the function network element includes one or more of the following: an access network element, a terminal device, a user plane function network element, a service server, and a policy control function network element.

Optionally, the processing module 2002 is further configured to determine that the user plane function network element no longer meets the target QoS description information; the processing module 2002 is further configured to re-determine at least one piece of QoS information of the access network element based on the at least one piece of first QoS description information; and the sending module 2003 is further configured to send the at least one piece of re-determined QoS information of the access network element to the access network element.

Optionally, the processing module 2002 is further configured to determine that the user plane function network element no longer meets any one of the at least one piece of first QoS description information; and the sending module 2003 is further configured to send first notification information to the policy control function network element, where the first notification information is used to notify the policy control function network element that the user plane function network element cannot meet any one of the at least one piece of first QoS description information.

Optionally, the sending module 2003 is further configured to send a QoS parameter value of the user plane function network element to the policy control function network element, where the QoS parameter value of the user plane function network element is an actual value obtained by measuring a QoS parameter type for the user plane function network element by the user plane function network element.

In addition, the receiving module 2001, the processing module 2002, and the sending module 2003 in the foregoing resource allocation apparatus can further implement other operations and functions of the session management function network element in FIG. 16A to FIG. 16C to FIG. 19 in the foregoing methods. Details are not described herein again.

In another embodiment, the resource allocation apparatus shown in FIG. 20A may be further configured to perform an operation of the foregoing access network element (for example, a RAN element) in FIG. 16A to FIG. 16C to FIG. 19. An example is as follows:

The receiving module 2001 is configured to receive at least one piece of QoS information of the access network element from a session management function network element (for example, an SMF network element). The processing module 2002 is configured to determine target QoS information of the access network element from the at least one piece of QoS information of the access network element. The sending module 2003 is configured to send the target QoS information of the access network element to the session management function network element and/or a terminal device (for example, UE).

Therefore, based on the resource allocation apparatus in this embodiment of the present invention, compared with a current QoS mechanism in which a QoS parameter is usually not properly set or is set in a relatively fixed manner, in this embodiment of this application, the access network element determines one piece of target QoS information of a service from the at least one piece of received QoS information, and allocates a radio resource and/or executes a quality of service policy to/for the service based on the target QoS information, thereby ensuring quality of service of the service.

Optionally, the QoS information of the access network element includes one or more of the following: a QoS parameter type, a QoS parameter requirement, and access network element information.

Optionally, the processing module 2002 is configured to determine that the access network element meets a QoS parameter requirement in the target QoS information of the access network element.

Optionally, the processing module 2002 is further configured to allocate the radio resource and/or executes the quality of service policy to/for the service based on the target QoS information of the access network element.

Optionally, the processing module 2002 is further configured to determine that the access network element no longer meets the QoS parameter requirement in the target QoS information of the access network element; and the processing module 2002 is further configured to re-determine target QoS information of the access network element from the at least one piece of QoS information of the access network element.

Optionally, the sending module 2003 is further configured to send the re-determined target QoS information of the access network element to the session management function network element and/or the terminal device.

Optionally, if the access network element no longer meets a QoS parameter requirement included in any one of the at least one piece of QoS information of the access network element, the processing module 2002 is further configured to trigger a handover of the terminal device to another access network element; or the sending module 2003 is further configured to send redirection information to the terminal device, where the redirection information is used to redirect the terminal device to another access network element.

Optionally, if the access network element no longer meets a QoS parameter requirement in any one of the at least one piece of QoS information of the access network element, the sending module 2003 is further configured to send second notification information to the session management function network element, where the second notification information is used to notify the session management function network element that the access network element cannot meet any one of the at least one piece of QoS information of the access network element.

Optionally, the sending module 2003 is further configured to send a QoS parameter value of the access network element to the session management function network element, where the QoS parameter value of the access network element is an actual value obtained by measuring a QoS parameter type for the access network element by the access network element.

Optionally, the QoS parameter requirement includes one or more of the following information: a time information requirement, a location information requirement, a guaranteed flow bit rate GFBR requirement, a maximum flow bit rate MFBR requirement, an average time window size requirement, a value requirement of at least one data type of a function network element, a jitter buffer size requirement, a TCP congestion window size requirement, a TCP receive window size requirement, a buffer size requirement, and a radio access type requirement.

Optionally, the processing module 2002 is further configured to determine that a radio access type of a cell in which the terminal device is currently located is different from a radio access type requirement included in the re-determined target QoS information of the access network element; and the processing module 2002 is further configured to trigger a handover of the terminal device from the cell in which the terminal device is currently located to a target cell, where a radio access type of the target cell is the same as the radio access type requirement in the re-determined target QoS information of the access network element.

In addition, the receiving module 2001, the processing module 2002, and the sending module 2003 in the foregoing resource allocation apparatus can further implement other operations and functions of the access network element in FIG. 16A to FIG. 16C to FIG. 19 in the foregoing methods. Details are not described herein again.

In another embodiment, the resource allocation apparatus shown in FIG. 20A may be further configured to perform an operation of the foregoing policy control function network element in FIG. 16A to FIG. 16C to FIG. 19. An example is as follows:

The receiving module 2001 is configured to obtain at least one piece of third QoS description information of a service from a data analysis network element. The processing module 2002 is configured to determine at least one piece of first QoS description information based on the at least one piece of third QoS description information. The sending module 2003 is configured to send the at least one piece of first QoS description information to a session management function network element.

Therefore, based on the resource allocation apparatus in this embodiment of the present invention, compared with a current QoS mechanism in which a QoS parameter is usually not properly set or is set in a relatively fixed manner, in this embodiment of this application, the data analysis network element obtains at least one set of QoS description information according to a big data analysis method, and provides the at least one set of QoS description information for the policy control function network element to perform filtering based on an actual network parameter. In this way, a QoS parameter can be flexibly set for the service, thereby ensuring quality of service of the service.

Optionally, the receiving module 2001 is further configured to obtain service description information that is sent by a service server.

Optionally, the service description information includes one or more of the following information: a service identifier to which a service flow belongs, IP filtering information, a media bandwidth requirement, traffic routing information, a jitter buffer requirement, a media coding type requirement, a coding rate requirement of the media coding type requirement, a TCP congestion window requirement, a TCP receive window requirement, a buffer requirement, and a value requirement of at least one data type.

Optionally, the processing module 2002 is configured to determine the at least one piece of first QoS description information based on the service description information and the at least one piece of third QoS description information.

Optionally, the receiving module 2001 is configured to receive a service establishment request from the service server, where the service establishment request is used to request to establish a service flow for the service, and the service establishment request includes the service description information; and the receiving module 2001 is configured to obtain, based on the service establishment request, the service description information that is sent by the service server.

Optionally, the sending module 2003 is configured to send a QoS description information request of the service to a data analysis network element based on the service establishment request, where the QoS description information request of the service is used to request the third QoS description information of the service; and the receiving module 2001 is configured to receive a QoS description information request response of the service that is sent by the data analysis network element, where the QoS description information request response of the service includes the at least one piece of third QoS description information of the service.

Optionally, the QoS description information request of the service includes service identifier information and/or service description information.

Optionally, the QoS description information request of the service further includes one or more of the following information: user identifier information, location area identifier information, and time information.

Optionally, the sending module 2003 is configured to send a QoS description information subscription request of the service to the data analysis network element, where the QoS description information subscription request of the service is used to subscribe to QoS description information of the service from the data analysis network element; and the receiving module 2001 is configured to receive a QoS description information notification of the service from the data analysis network element, where the QoS description information notification of the service includes the at least one piece of third QoS description information of the service.

Optionally, the QoS description information subscription request of the service includes service identifier information.

Optionally, the QoS description information subscription request of the service further includes one or more of the following information: user identifier information, location area identifier information, and time information.

In addition, the receiving module 2001, the processing module 2002, and the sending module 2003 in the resource allocation apparatus can further implement other operations and functions of the policy control function network element in FIG. 16A to FIG. 16C to FIG. 19. Details are not described herein again.

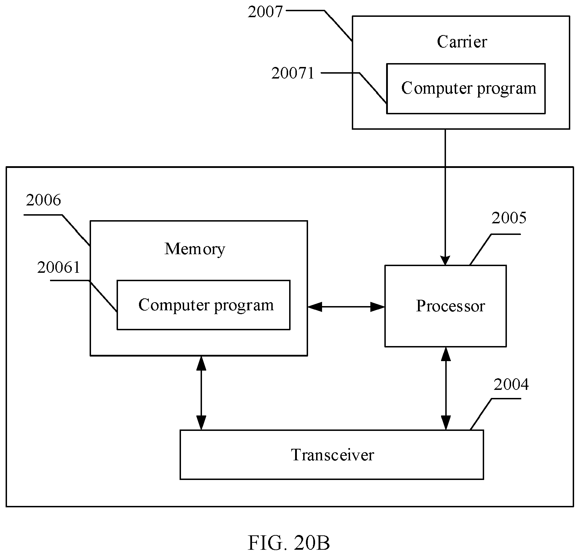

FIG. 20B is another possible schematic structural diagram of a resource allocation apparatus in the foregoing embodiment. The resource allocation apparatus includes a transceiver 2004 and a processor 2005, as shown in FIG. 20B. For example, the processor 2005 may be a general-purpose microprocessor, a data processing circuit, an application-specific integrated circuit (application specific integrated circuit, ASIC), or a field programmable gate array (field programmable gate arrays, FPGA) circuit. The resource allocation apparatus may further include a memory 2006. For example, the memory is a random access memory (random access memory, RAM). The memory is configured to couple to the processor 2005, and stores a computer program 20061 necessary for the resource allocation apparatus.

In addition, the resource allocation method in the foregoing embodiment further provides a carrier 2007, where a computer program 20071 of the resource allocation apparatus is stored in the carrier, and the computer program 20071 may be loaded to the processor 2005. The carrier may be an optical signal, an electrical signal, an electromagnetic signal, or a computer-readable storage medium (for example, a hard disk).

When the computer program 20061 or 20071 is run on a computer (for example, the processor 2005), the computer may be enabled to perform the foregoing method.

For example, in an embodiment, the processor 2005 is configured to perform other operations or functions of the session management function network element in FIG. 16A to FIG. 16C to FIG. 19. The transceiver 2004 is configured to implement communication between the resource allocation apparatus and a policy control function network element/an access network element/a user plane function network element/a terminal device.

In another embodiment, the processor 2005 is configured to perform other operations or functions of the access network element in FIG. 16A to FIG. 16C to FIG. 19. The transceiver 2004 is configured to implement communication between the resource allocation apparatus and a session management function network element/a terminal device.

In another embodiment, the processor 2005 is configured to perform other operations or functions of the policy control function network element in FIG. 16A to FIG. 16C to FIG. 19. The transceiver 2004 is configured to implement communication between the resource allocation apparatus and a session management function network element/a data analysis network element/a service server.

The controller/processor configured to perform the resource allocation method in this application may be a central processing unit (CPU), a general purpose processor, a digital signal processor (DSP), an application-specific integrated circuit (ASIC), a field programmable gate array (FPGA), or another programmable logical device, a transistor logical device, a hardware component, or any combination thereof. The controller/processor may implement or execute various example logical blocks, modules, and circuits described with reference to content disclosed in this application. Alternatively, the processor may be a combination that implements a computing function, for example, a combination of one or more microprocessors, or a combination of the DSP and a microprocessor.

The method or algorithm steps described in combination with the content disclosed in this application may be implemented by hardware, or may be implemented by the processor by executing a software instruction. The software instruction may include a corresponding software module. The software module may be located in a RAM, a flash memory, a ROM memory, an EPROM memory, an EEPROM memory, a register, a hard disk, a removable hard disk, a CD-ROM, or a storage medium of another form well-known in the art. For example, a storage medium is coupled to the processor, so that the processor can read information from the storage medium, and write information into the storage medium. Certainly, the storage medium may alternatively be a component of the processor. The processor and the storage medium may be located in an ASIC. In addition, the ASIC may be located in a radio access network device. Certainly, the processor and the storage medium may exist in the resource allocation apparatus as discrete components.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, the procedures or the functions according to the embodiments of the present invention are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The objectives, technical solutions, and beneficial effects of the present invention are further described in detail in the foregoing specific embodiments. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

**Claims**

**1.** A resource allocation method, comprising:

receiving, by a session management function network element, at least one piece of first quality of service QoS description information of a service from a policy control function network element;

determining, by the session management function network element, at least one piece of QoS information of an access network element based on the at least one piece of first QoS description information; and

sending, by the session management function network element, the at least one piece of QoS information of the access network element to the access network element.

2. The method according to claim 1, wherein
each of the at least one piece of first QoS description information comprises QoS information of a user plane function network element and QoS information of the access network element.

3. The method according to claim 1 or 2, wherein
the first QoS description information further comprises one or more of the following: QoS information of a service server, QoS information of a terminal device, and QoS information of the policy control function network element.

4. The method according to any one of claims 1 to 3, wherein the determining, by the session management function network element, at least one piece of QoS information of an access network element based on the at least one piece of first QoS description information comprises:

determining, by the session management function network element based on the at least one piece of first QoS description information, at least one piece of second QoS description information that can be met by the user plane function network element, wherein the at least one piece of second QoS description information is one or more of the at least one piece of first QoS description information; and

determining, by the session management function network element, the at least one piece of QoS information of the access network element based on the at least one piece of second QoS description information, wherein the at least one piece of second QoS description information comprises the at least one piece of QoS information of the access network element.

5. The method according to claim 4, further comprising:

receiving, by the session management function network element, target QoS information of the access network element from the access network element, wherein the target QoS information of the access network element is one of the at least one piece of QoS information of the access network element; and

determining, by the session management function network element, target QoS description information based on the target QoS information of the access network element, wherein the target QoS description information is one of the at least one piece of second QoS description information.

6. The method according to claim 5, further comprising:
sending, by the session management function network element, target QoS information of the terminal device in the target QoS description information to the terminal device.

7. The method according to claim 6, further comprising:
determining, by the session management function network element, that the target QoS information of the terminal device changes.

8. The method according to any one of claims 5 to 7, further comprising:
sending, by the session management function network element, target QoS information of the user plane function network element in the target QoS description information to the user plane function network element.

9. The method according to claim 8, further comprising:
determining, by the session management function network element, that the target QoS information of the user plane function network element changes.

10. The method according to any one of claims 5 to 9, further comprising:
sending, by the session management function network element, target QoS information of an application server in the target QoS description information to the application server.

11. The method according to claim 10, further comprising:

determining, by the session management function network element, that the target QoS information of the application server changes.

**12.** A resource allocation method, comprising:

receiving, by an access network element, at least one piece of quality of service QoS information of the access network element from a session management function network element;
determining, by the access network element, target QoS information of the access network element from the at least one piece of QoS information of the access network element; and
sending, by the access network element, the target QoS information of the access network element to the session management function network element and/or a terminal device.

**13.** The method according to claim 12, wherein
the QoS information of the access network element comprises one or more of the following: a QoS parameter type, a QoS parameter requirement, and access network element information.

**14.** The method according to claim 12 or 13, wherein the determining, by the access network element, target QoS information of the access network element from the at least one piece of QoS information of the access network element comprises:
determining, by the access network element, that the access network element meets a QoS parameter requirement in the target QoS information of the access network element.

**15.** The method according to any one of claims 12 to 14, further comprising:

determining, by the access network element, that the access network element no longer meets the QoS parameter requirement in the target QoS information of the access network element; and
re-determining, by the access network element, target QoS information of the access network element from the at least one piece of QoS information of the access network element.

**16.** The method according to claim 15, further comprising:
sending, by the access network element, the re-determined target QoS information of the access network element to the session management function network element and/or the terminal device.

**17.** The method according to any one of claims 13 to 16, wherein the QoS parameter requirement comprises one or more of the following:
a time information requirement, a location information requirement, a guaranteed flow bit rate GFBR requirement, a maximum flow bit rate MFBR requirement, an average time window size requirement, a value requirement of at least one data type, a jitter buffer size requirement, a TCP congestion window size requirement, a TCP receive window size requirement, a buffer size requirement, and a radio access type requirement.

**18.** A resource allocation apparatus, comprising:

a receiving module, configured to receive at least one piece of first quality of service QoS description information of a service from a policy control function network element;
a processing module, configured to determine at least one piece of QoS information of an access network element based on the at least one piece of first QoS description information; and
a sending module, configured to send the at least one piece of QoS information of the access network element to the access network element.

**19.** The resource allocation apparatus according to claim 18, wherein
each of the at least one piece of first QoS description information comprises QoS information of a user plane function network element and QoS information of the access network element.

**20.** The resource allocation apparatus according to claim 18 or 19, wherein
the first QoS description information further comprises one or more of the following: QoS information of a service server, QoS information of a terminal device, and QoS information of the policy control function network element.

**21.** The resource allocation apparatus according to any one of claims 18 to 20, wherein

the processing module is configured to determine, based on the at least one piece of first QoS description information, at least one piece of second QoS description information that can be met by the user plane function network element, wherein the at least one piece of second QoS description information is one or more of the at least one piece of first QoS description information; and

the processing module is configured to determine the at least one piece of QoS information of the access network element based on the at least one piece of second QoS description information, wherein the at least one piece of second QoS description information comprises the at least one piece of QoS information of the access network element.

22. The resource allocation apparatus according to claim 21, wherein

the receiving module is further configured to receive target QoS information of the access network element from the access network element, wherein the target QoS information of the access network element is one of the at least one piece of QoS information of the access network element; and

the processing module is further configured to determine target QoS description information based on the target QoS information of the access network element, wherein the target QoS description information is one of the at least one piece of second QoS description information.

23. The resource allocation apparatus according to claim 22, wherein

the sending module is further configured to send target QoS information of the terminal device in the target QoS description information to the terminal device.

24. The resource allocation apparatus according to claim 22 or 23, wherein

the sending module is further configured to send target QoS information of the user plane function network element in the target QoS description information to the user plane function network element.

25. The resource allocation apparatus according to any one of claims 22 to 24, wherein

the sending module is further configured to send target QoS information of an application server in the target QoS description information to the application server.

26. A resource allocation apparatus, comprising:

a receiving module, configured to receive at least one piece of QoS information of an access network element from a session management function network element;

a processing module, configured to determine target QoS information of the access network element from the at least one piece of QoS information of the access network element; and

a sending module, configured to send the target QoS information of the access network element to the session management function network element and/or a terminal device.

27. The resource allocation apparatus according to claim 26, wherein

the QoS information of the access network element comprises one or more of the following: a QoS parameter type, a QoS parameter requirement, and access network element information.

28. The resource allocation apparatus according to claim 26 or 27, wherein

the processing module is configured to determine that the access network element meets a QoS parameter requirement in the target QoS information of the access network element.

29. The resource allocation apparatus according to any one of claims 26 to 28, wherein

the processing module is further configured to determine that the access network element no longer meets the QoS parameter requirement in the target QoS information of the access network element; and

the processing module is further configured to re-determine target QoS information of the access network element from the at least one piece of QoS information of the access network element.

30. The resource allocation apparatus according to claim 29, wherein

the sending module is further configured to send the re-determined target QoS information of the access network element to the session management function network element and/or the terminal device.

31. A resource allocation apparatus, comprising a processor and a memory, wherein the memory is configured to store a program instruction and data, and the processor is configured to execute the program instruction stored in the memory, so that the apparatus performs an operation in the method according to any one of claims 1 to 11.

32. A resource allocation apparatus, comprising a processor and a memory, wherein the memory is configured to store a program instruction and data, and the processor is configured to execute the program instruction stored in the memory, so that the apparatus performs an operation in the method according to any one of claims 12 to 17.

33. A computer storage medium, configured to store a program instruction, wherein when the program instruction is run on a computer, the computer is enabled to perform an operation in the method according to any one of claims 1 to 11.

34. A computer storage medium, configured to store a program instruction, wherein when the program instruction is run on a computer, the computer is enabled to perform an operation in the method according to any one of claims 12 to 17.

FIG. 1

```
   Access              First core            Data analysis
   network              network                network
   element              element                element
```

201. The data analysis network element obtains training data of a service

202. The data analysis network element generates at least one piece of QoS description information of the service

203. The data analysis network element sends the at least one piece of QoS description information to the core network element

204. The first core network element receives the at least one piece of QoS description information of the service that is sent by the data analysis network element, a second core network element, or a service server

205. The first core network element determines a set (a third set) of QoS description information, where the set includes some or all of the at least one piece of QoS description information

206. The first core network element sends fourth indication information to the service server of the service

207. The first core network element sends the third set of QoS description information to the access network element

```
      TO                  TO                    TO
   FIG. 2B             FIG. 2B               FIG. 2B
```

FIG. 2A

CONT.
FROM
FIG. 2A

CONT.
FROM
FIG. 2A

CONT.
FROM
FIG. 2A

208. The access network element receives the at least one piece of QoS description information of the service that is sent by the core network element

209. The access network element determines one piece of target QoS description information of the service from the at least one piece of QoS description information

210. The access network element sends the fourth indication information to the first core network element

211. The access network element allocates a radio resource to or executes a quality of service policy for the service based on the target QoS description information

212. The access network element sends the target QoS description information to the first core network element and/or a terminal device

213. The first core network element sends the target QoS description information to a third core network element or the service server

FIG. 2B

| Access network element | AMF | SMF | PCF | Data analysis network element |
|---|---|---|---|---|

301. The data analysis network element generates at least one piece of QoS description information of a service

302. The data analysis network element sends the at least one piece of QoS description information to the PCF

303. The PCF determines a set (a third set) of QoS description information

304. The PCF sends fourth indication information to a service server of the service

305. The PCF sends the at least one piece of QoS description information to the SMF

| TO FIG. 3B | TO FIG. 3B | TO FIG. 3B | TO FIG. 3B | TO FIG. 3B |
|---|---|---|---|---|

FIG. 3A

CONT.
FROM
FIG. 3A

CONT.
FROM
FIG. 3A

CONT.
FROM
FIG. 3A

CONT.
FROM
FIG. 3A

CONT.
FROM
FIG. 3A

306. The SMF determines the set (the third set) of QoS description information

307. The SMF sends the at least one piece of QoS description information to the AMF

308. The AMF determines the set (the third set) of QoS description information

309. The AMF sends the at least one piece of QoS description information to the access network element

310. The access network element determines one piece of target QoS description information of the service from the at least one piece of QoS description information sent by the AMF

FIG. 3B

```
┌─────────────┐        ┌─────────────┐                    ┌─────────────┐
│  Terminal   │        │Access network│                    │     AMF     │
│   device    │        │   element   │                    │             │
└──────┬──────┘        └──────┬──────┘                    └──────┬──────┘
```

311. The access network element determines a first set of QoS description information

312. The access network element sends the at least one piece of QoS description information of the service to the terminal device

314. The terminal device sends fourth indication information to the access network element

315. The terminal device sends a second set of QoS description information to the access network element

316. The access network element determines one piece of target QoS description information of the service from the second set of QoS description information

317. The access network element sends, to the terminal device corresponding to the service, the at least one piece of QoS description information sent by the AMF

319. The terminal device sends the fourth indication information to the access network element

320. Second set of QoS description information

TO FIG. 4B

TO FIG. 4B

TO FIG. 4B

FIG. 4A

CONT.
FROM
FIG. 4B

CONT.
FROM
FIG. 4B

CONT.
FROM
FIG. 4B

313. The terminal device determines the second set of QoS description information

321. The access network element determines the first set of QoS description information

322. The access network element sends the fourth indication information to the AMF

323. The access network element determines one piece of target QoS description information of the service from the first set

324. The access network element re-determines one piece of target QoS description information of the service

325. The access network element sends first indication information to the AMF

326. The access network element sends a handover request message to the AMF or sends redirection information to the terminal device

327. The access network element sends the target QoS description information to the terminal device

327. The access network element sends the target QoS description information to the AMF

FIG. 4B

77

| AMF | SMF | UPF | PCF | Service server |

328. The AMF sends the target QoS description information to the SMF

329. The SMF sends the target QoS description information to the UPF

330. The SMF sends the target QoS description information to the PCF

331. The PCF sends the target QoS description information to the service server of the service

FIG. 5

6

Access network element

Receiving unit — 601

Determining unit — 602

Processing unit — 603

FIG. 6

7

Access network element

Processing module — 701

Communications module — 702

Storage module — 703

FIG. 7

8

Terminal device

Receiving unit — 801

Determining unit — 802

Sending unit — 803

FIG. 8

9

Terminal device

Processing module          901

Communications module      902

Storage module             903

FIG. 9

10

First core network element

Receiving unit             1001

Determining unit           1002

Sending unit               1003

FIG. 10

11

First core network element

Processing module — 1101

Communications module — 1102

Storage module — 1103

FIG. 11

12

Data analysis network element

Processing unit — 1201

Sending unit — 1202

FIG. 12

13

Data analysis network element

Processing module — 1301

Communications module — 1302

Storage module — 1303

FIG. 13

14

Service server

Receiving unit — 1401

Determining unit — 1402

Sending unit — 1403

FIG. 14

15

Service server

Processing module — 1501

Communications module — 1502

Storage module — 1503

FIG. 15

EP 3 745 772 A1

| Terminal device | Access network element | Mobility management function network element | Session management function network element | User plane function network element | Policy control function network element | Data analysis network element | Service server |
|---|---|---|---|---|---|---|---|

1601. Obtain training data of a service

1602. Generate at least one piece of third QoS description information of the service

1603. At least one piece of third QoS description information

1604. Determine at least one piece of first QoS description information based on the third QoS description information

1605. At least one piece of first QoS description information

| TO FIG. 16B | TO FIG. 16B | TO FIG. 16B | TO FIG. 16B | TO FIG. 16B | TO FIG. 16B | TO FIG. 16B | TO FIG. 16B |
|---|---|---|---|---|---|---|---|

FIG. 16A

CONT.
FROM
FIG. 16A

CONT.
FROM
FIG. 16A

CONT.
FROM
FIG. 16A

CONT.
FROM
FIG. 16A

CONT.
FROM
FIG. 16A

CONT.
FROM
FIG. 16A

CONT.
FROM
FIG. 16A

CONT.
FROM
FIG. 16A

1606. Determine, based on the at least one piece of first QoS description information, at least one piece of second QoS description information that can be met by the user plane function network element

1607. Determine at least one piece of QoS information of the access network element based on the at least one piece of second QoS description information

1608. At least one piece of QoS information of the access network element

1609. Determine target QoS information of the access network element from the at least one piece of QoS information of the access network element

1610. Target QoS information of the access network element

TO
FIG. 16C

TO
FIG. 16C

TO
FIG. 16C

TO
FIG. 16C

TO
FIG. 16C

TO
FIG. 16C

TO
FIG. 16C

TO
FIG. 16C

FIG. 16B

EP 3 745 772 A1

CONT.
FROM
FIG. 16B

CONT.
FROM
FIG. 16B

CONT.
FROM
FIG. 16B

CONT.
FROM
FIG. 16B

CONT.
FROM
FIG. 16B

CONT.
FROM
FIG. 16B

CONT.
FROM
FIG. 16B

CONT.
FROM
FIG. 16B

1611. Determine target QoS description information based on the target QoS information of the access network element

1612. Target QoS information of the user plane function network element in the target QoS description information

1613. Target QoS information of the policy control function network element and/or target QoS information of the service server in the target QoS description information

1614. Target QoS information of the terminal device in the target QoS description information

1615. Target QoS information of the service server in the target QoS description information

FIG. 16C

EP 3 745 772 A1

| Terminal device | Access network element | Mobility management function network element | Session management function network element | User plane function network element | Policy control function network element | Data analysis network element | Service server |
|---|---|---|---|---|---|---|---|

1701. Determine that the access network element no longer meets a QoS parameter requirement in target QoS information of the access network element

1702. Re-determine target QoS information of the access network element from at least one piece of QoS information of the access network element

1703. Re-determined target QoS information of the access network element

1704. Determine new target QoS description information based on the re-determined target QoS information of the access network element

TO FIG. 17B　　TO FIG. 17B　　TO FIG. 17B　　TO FIG. 17B　　TO FIG. 17B　　TO FIG. 17B　　TO FIG. 17B　　TO FIG. 17B

FIG. 17A

CONT. FROM FIG. 17A CONT. FROM FIG. 17A CONT. FROM FIG. 17A CONT. FROM FIG. 17A CONT. FROM FIG. 17A CONT. FROM FIG. 17A CONT. FROM FIG. 17A CONT. FROM FIG. 17A

1705. Determine that the target QoS description information changes

1706. Target QoS information of the user plane function network element in the new target QoS description information

1707. Target QoS information of the policy control function network element in the new target QoS description information

1708. Target QoS information of the terminal device in the new target QoS description information

1709. Target QoS information of the service server in the new target QoS description information

FIG. 17B

| Terminal device | Access network element | Mobility management function network element | Session management function network element | User plane function network element | Policy control function network element | Service server |
|---|---|---|---|---|---|---|

1801. Determine that the user plane function network element no longer meets target QoS description information

1802. Determine, based on at least one piece of first QoS description information, at least one piece of second QoS description information that can be met by the user plane function network element

1803. Determine at least one piece of QoS information of the access network element based on the at least one piece of second QoS description information

1804. At least one piece of QoS information of the access network element

1805. Determine target QoS information of the access network element from the at least one piece of QoS information of the access network element

FIG. 18A

EP 3 745 772 A1

CONT.
FROM
FIG. 18A

CONT.
FROM
FIG. 18A

CONT.
FROM
FIG. 18A

CONT.
FROM
FIG. 18A

CONT.
FROM
FIG. 18A

CONT.
FROM
FIG. 18A

CONT.
FROM
FIG. 18A

1806. Target QoS information of
the access network element

1807. Determine target QoS description
information based on the target QoS
information of the access network element

1808. Target QoS
information of the user
plane function network
element in the target
QoS description
information

1809. Target QoS information
of the policy control function
network element and/or target
QoS information of the service
server in the target QoS
description information

1811. Target QoS
information of the
service server in
the target QoS
description
information

1810. Target QoS information of the terminal
device in the target QoS description information

FIG. 18B

EP 3 745 772 A1

```
┌─────────────────────────┐          ┌─────────────────────────┐
│   Session management     │          │     Policy control       │
│   function network       │          │   function network       │
│       element            │          │       element            │
└─────────────────────────┘          └─────────────────────────┘
```

1901. Determine that a user plane function network element no longer meets any one of at least one piece of first QoS description information

1902. First notification information

FIG. 19

```
┌─────────────────────────────────────────────────────────┐
│                                          ⌐── 2002        │
│   ┌─────────────────────────────────────────────────┐    │
│   │              Processing module                  │    │
│   └─────────────────────────────────────────────────┘    │
│          ↕                            ↕                   │
│  2001 ⌐                                        ⌐ 2003     │
│   ┌──────────────────┐        ┌──────────────────┐        │
│   │ Receiving module │ ◄────► │  Sending module  │        │
│   └──────────────────┘        └──────────────────┘        │
└─────────────────────────────────────────────────────────┘
```

FIG. 20A

2007 —

Carrier

20071 —

Computer program

2006

Memory

20061

Computer program

2005

Processor

2004

Transceiver

FIG. 20B

## INTERNATIONAL SEARCH REPORT

| International application No. |
| --- |
| **PCT/CN2019/074809** |

**A. CLASSIFICATION OF SUBJECT MATTER**

H04W 28/24(2009.01)i

According to International Patent Classification (IPC) or to both national classification and IPC

**B. FIELDS SEARCHED**

Minimum documentation searched (classification system followed by classification symbols)

H04W H04L H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: RAN, 接入网, SMF, 会话管理, QOS, PCF, 策略控制, 调整, 改变, 更新, GFBR, adjust, QFI, updat+

**C. DOCUMENTS CONSIDERED TO BE RELEVANT**

| Category* | Citation of document, with indication, where appropriate, of the relevant passages | Relevant to claim No. |
| --- | --- | --- |
| X | MEDIATEK INC. et al. "Replacing "5G-(R)AN" by "NG-(R)AN""<br>*3GPP TSG-SA WG2 Meeting #121, S2-173142*, 19 May 2017 (2017-05-19), section 5.7.1 | 1-34 |
| A | CN 101442428 A (HUAWEI TECHNOLOGIES CO., LTD.) 27 May 2009 (2009-05-27) entire document | 1-34 |
| A | CN 101064635 A (HUAWEI TECHNOLOGIES CO., LTD.) 31 October 2007 (2007-10-31) entire document | 1-34 |
| A | US 2017332282 A1 (HUAWEI TECHNOLOGIES CO., LTD.) 16 November 2017 (2017-11-16) entire document | 1-34 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 April 2019** | **30 April 2019** |

| Name and mailing address of the ISA/CN | Authorized officer |
| --- | --- |
| **State Intellectual Property Office of the P. R. China (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

International application No.

**PCT/CN2019/074809**

| Patent document cited in search report | | | Publication date (day/month/year) | Patent family member(s) | | | Publication date (day/month/year) |
|---|---|---|---|---|---|---|---|
| CN | 101442428 | A | 27 May 2009 | WO | 2009065360 | A1 | 28 May 2009 |
| CN | 101064635 | A | 31 October 2007 | WO | 2007124683 | A1 | 08 November 2007 |
| US | 2017332282 | A1 | 16 November 2017 | WO | 2017193970 | A1 | 16 November 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810154028
- CN 201810497454